(19) Europäisches Patentamt
European Patent Office
Office européen des brevets

(11) **EP 4 318 058 A1**

(12) **EUROPEAN PATENT APPLICATION**
published in accordance with Art. 153(4) EPC


(43) Date of publication:
**07.02.2024 Bulletin 2024/06**

(21) Application number: **22780073.7**

(22) Date of filing: **15.03.2022**

(51) International Patent Classification (IPC):
***G02B 5/30*** *(2006.01)* ***B42D 25/36*** *(2014.01)*

(52) Cooperative Patent Classification (CPC):
**B42D 25/36; G02B 5/30**

(86) International application number:
**PCT/JP2022/011606**

(87) International publication number:
**WO 2022/209852 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021058413**



(71) Applicant: **Zeon Corporation**
**Tokyo 100-8246 (JP)**

(72) Inventor: **FUJINO, Yasuhide**
**Tokyo 100-8246 (JP)**

(74) Representative: **Maiwald GmbH**
**Elisenhof**
**Elisenstraße 3**
**80335 München (DE)**


(54) **OPTICAL DISPLAY MEDIUM, ARTICLE, AND METHOD FOR USING OPTICAL DISPLAY MEDIUM**


(57) An optical display medium comprising a light reflective layer and a patterned phase difference layer, wherein: the light reflective layer is a layer that reflects incident light as circularly polarized light or linearly polarized light; the patterned phase difference layer is a layer containing a region having a phase difference; in one or more regions H among the regions having a phase difference, an in-plane retardation ReH(400) at a wavelength of 400 nm, an in-plane retardation ReH(550) at a wavelength of 550 nm, and an in-plane retardation ReH(700) at a wavelength of 700 nm (unit: nm) satisfy a specific relationship, and the region H has a property of converting light passing through the region H into light having a variety in polarization state for wavelengths.


FIG.1

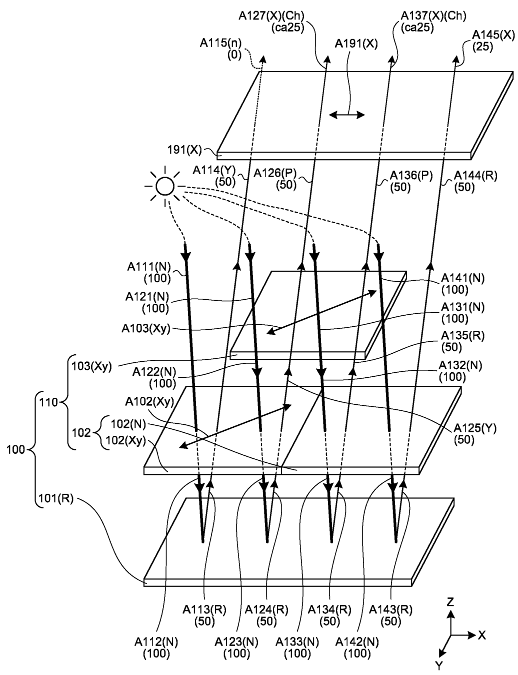


EP 4 318 058 A1

## Description

### Field

The present invention relates to an optical display medium and an article that can be used as an identification medium, a decorative medium, or applications of both, and a method for using the optical display medium.

### Background

It is a general practice to provide an article with an identification medium for facilitating determination whether an article is an authentic product. The identification medium is required to have an anti-counterfeit property and an identification function. The anti-counterfeit property of the identification medium referred to herein is a property with which the identification medium cannot be easily duplicated through a general technique, such as printing. The identification function of the identification medium is a function with which the authentic identification medium can be distinguished by a certain means with high reliability from a counterfeit identification medium produced by a general counterfeiting technique.

In many cases, the identification medium has a special configuration for producing an optical effect that does not appear on a general member. In particular, the identification medium may have an optical property by which a special change of display state with a change of mode of observation is observed, wherein the change does not appear on a display medium produced through a general production technique. Such an optical property may be used as a property that exhibits a design effect having excellent appearance, in addition to the function as an identification medium. Therefore, an optical display medium having the same configuration as the identification medium may be used as both an identification medium and a decorative medium. Alternatively, the optical display medium having the same configuration as the identification medium may be used simply as a decorative medium without being used for an application of the identification medium.

In many cases, the authenticity of the identification medium is determined by observation through a special viewer including an optical member, such as a circular polarizer or a linear polarizer (for example, Patent Literatures 1 to 3). On the other hand, there is also an identification medium determination of which may be performed by observation with the naked eye without a special viewer. For example, there is an identification medium, such as a so-called hologram, determination of which may be performed on the basis of whether a stereo vision recognition of a pattern on the identification medium is possible (for example, Patent Literature 4).

### Citation List

### Patent Literature

Patent Literature 1: Japanese Patent Application Laid-Open No. 2010-221650 A
Patent Literature 2: Japanese Patent Application Laid-Open No. 2010-113249 A (corresponding publication: U.S. Patent Application Publication No. 2010/119738)
Patent Literature 3: International Publication No. 2005/059597
Patent Literature 4: Japanese Patent No. 5915838

### Summary

### Technical Problem

Regarding an identification medium that requires a special viewer for determination of authenticity, the operator performing the determination is undesirably restricted. That is, only special identifier personnel with the special viewer, such as customs officers, can perform the determination. Usual article users that buy or sell, possess, or use an article cannot perform the determination since the users do not have such a special viewer. For determination of authenticity of identification mediums in Patent Literatures 1 and 2, a special operation of placing a viewer in proximity of the identification medium is required.

For an identification medium determination of which can be performed using a so-called hologram without a special viewer, the operators are less restricted.
However, an article that exhibits a relatively similar effect can be produced through a hologram technique that is already made general, and thus an anti-counterfeit property may be insufficient. With a configuration in which a hologram is

observed through a special viewer, the anti-counterfeit property may be enhanced, but the operator is restricted similarly to the aforementioned case.

When the design effect as the decorative medium is imparted to an optical display medium, the optical display medium is required to have a high degree of freedom of color. However, it is difficult to obtain a display medium that exhibits an optical effect in which a special change of display state with a change of mode of observation is observed wherein the change does not appear on a display medium produced through a general production technique, and that has a high degree of freedom of color, such as switching of showing/not showing of a chromatic color under such observation.

Therefore, an object of the present invention is to provide an optical display medium that exhibits an optical effect in which a special change of display state with a change of mode of observation is observed without a special viewer wherein the change does not appear on a display medium produced through a general production technique, and that has a high degree of freedom of color, an article including such an optical display medium, and a method for using the optical display medium.

Solution to Problem

The present inventors have made investigation to solve the aforementioned problems, and conceived an optical display medium that is configured to exhibit an optical effect in which a special change of display state with a change of mode of observation is observed when a general apparatus such as polarized sunglasses and an apparatus for emitting polarized light such as a liquid crystal display device is used in certain observation modes that are general use modes thereof. Based on the conceiving, the inventors have further made investigation, and as a result found that when an optical display medium is configured to have a specific phase difference layer, the identification function thereof can be utilized by using such a general apparatus, and a high degree of freedom of change of color is obtained. Thus, the present invention has been completed.

Specifically, the present invention includes the following.

<1> An optical display medium comprising a light reflective layer and a patterned phase difference layer, wherein:

the light reflective layer is a layer that reflects incident light as circularly polarized light or linearly polarized light;
the patterned phase difference layer is a layer containing a region having a phase difference;
in one or more regions H among the regions having a phase difference, an in-plane retardation ReH(400) at a wavelength of 400 nm, an in-plane retardation ReH(550) at a wavelength of 550 nm, and an in-plane retardation ReH(700) at a wavelength of 700 nm (unit: nm) satisfy the following formula (1), and satisfy either one of the following formulas (2) and (3)

$$\mathrm{ReH}(550) > 275 \qquad \text{Formula (1)}$$

$$\mathrm{ReH}(400)/400 > \mathrm{ReH}(550)/550 > \mathrm{ReH}(700)/700 \qquad \text{Formula (2)}$$

$$\mathrm{ReH}(400)/400 < \mathrm{ReH}(550)/550 < \mathrm{ReH}(700)/700 \qquad \text{Formula (3)};$$

and
the region H has a property of converting light passing through the region H into light having a variety in polarization state for wavelengths.

<2> The optical display medium according to <1>, wherein the patterned phase difference layer is positioned closer to a visual recognition side than the light reflective layer.
<3> The optical display medium according to <1> or <2>, wherein the light reflective layer is a reflective circular polarizer or a reflective linear polarizer.
<4> The optical display medium according to <3>, wherein the light reflective layer is the reflective circular
<5> The optical display medium according to any one of <1> to <4>, wherein the ReH(400), the ReH(550), and the ReH(700) satisfy the following formulas (4) to (6):

$$ReH(550) \geq 300 \quad \text{Formula (4)}$$

$$ReH(550) \leq 382.81/\Delta C + 250 \quad \text{Formula (5)}$$

$$ReH(550) \geq 53.873/\Delta C + 199.3 \quad \text{Formula (6)}$$

in the formulas, $\Delta C$ is a value represented by the following formula (7):

$$\Delta C = (|(ReH(400)/ReH(550)) - 0.73| + |(ReH(550)/ReH(700)) - 0.79|)/2 \quad \text{Formula (7).}$$

<6> The optical display medium according to any one of <1> to <5>, wherein the patterned phase difference layer is a layered body including a plurality of sub-layers, each of the sub-layers having a phase difference in at least a portion of the region in a plane.

<7> The optical display medium according to <6>, wherein one or more of the plurality of sub-layers are a stretched film and another sub-layer or more are a film having a patterned layer of a liquid crystal material.

<8> The optical display medium according to <6> or <7>, wherein slow layer axes of the plurality of sub-layers are parallel to one another.

<9> The optical display medium according to any one of <1> to <8>, wherein the light reflective layer includes a sheet formed from a material having cholesteric regularity.

<10> The optical display medium according to any one of <1> to <9>, wherein the light reflective layer includes a cut piece of a material having cholesteric regularity.

<11> The optical display medium according to any one of <1> to <10>, wherein, in one or more regions of the light reflective layer, a reflectance by the light reflective layer of unpolarized light incident on the region is 35 to 50% at all wavelengths in a wavelength region of 420 nm to 650 nm.

<12> The optical display medium according to any one of <1> to <11>, further comprising a light absorption layer on a side of the light reflective layer opposite to a visual recognition side.

<13> The optical display medium according to any one of <1> to <12>, further comprising a transparent resin portion in which all or part of members other than the transparent resin portion is embedded.

<14> The optical display medium according to any one of <1> to <13>, further comprising an attachment member for attaching the optical display medium to an article.

<15> An article comprising the optical display medium according to any one of <1> to <14>.

<16> The article according to <15>, further comprising a polarizer viewer.

<17> A method for using the optical display medium according to any one of <1> to <14>, comprising making incident light be incident on a display surface of the optical display medium and be reflected by the light reflective layer to be reflected light; and observing the reflected light, wherein

when unpolarized light is made incident as the incident light and the reflected light is observed, a linearly polarized light component or a circularly polarized light component of the reflected light is selectively observed.

<18> The method according to <17>, wherein the selective observation is performed by visually observing the reflected light through a linear polarizer bein apart from the optical display medium.

<19> The method according to <18>, wherein the linear polarizer is polarized sunglasses.

<20> A method for using the optical display medium according to any one of <1> to <14>, comprising making incident light be incident on a display surface of the optical display medium and be reflected by the light reflective layer to be reflected light; and observing the reflected light, wherein

linearly polarized light, circularly polarized light or elliptically polarized light is made incident as the incident light.

Advantageous Effects of Invention

According to the present invention, there is provided an optical display medium that exhibits an optical effect in which a special change of display state with a change of mode of observation is observed without a special viewer, wherein the change does not appear on a display medium produced through a general production technique, and that has a high degree of freedom of color, an article including such an optical display medium, and a method for using the optical display medium.

Brief Description of Drawings

FIG. 1 is an exploded perspective view schematically illustrating an example of an optical display medium of the present invention and a method for using the optical display medium.

FIG. 2 is an exploded side view schematically illustrating the example of the optical display medium of the present invention and the method for using the optical display medium.

FIG. 3 is a top view of the axes of coordinates shown in FIG. 1 in a state of being viewed in a Z-axis direction.

FIG. 4 is an exploded side view schematically illustrating an example of the method for using the optical display medium of the present invention when a relative angle relationship between the optical display medium and a linear polarizer for observation is changed from that in the example of FIGs. 1 and 2.

FIG. 5 is an exploded side view schematically illustrating another example of a method for using an optical display medium 100 shown in FIGs. 1, 2, and 4.

FIG. 6 is an exploded side view schematically illustrating another example of the method for using the optical display medium 100 shown in FIGs. 1, 2, and 4.

FIG. 7 is an exploded side view schematically illustrating another example of the optical display medium of the present invention and the method for using the optical display medium.

FIG. 8 is an exploded side view schematically illustrating an example of the method for using the optical display medium of the present invention when a relative angle relationship between the optical display medium and the linear polarizer for observation is changed from that in the example of FIG. 7.

FIG. 9 is an exploded side view schematically illustrating another example of a method for using an optical display medium 200 shown in FIGs. 7 and 8.

FIG. 10 is an exploded side view schematically illustrating another example of the method for using the optical display medium 200 shown in FIGs. 7 and 8.

FIG. 11 is a top view schematically illustrating a specifical example of the optical display medium of the present invention.

FIG. 12 is a vertical cross-sectional view of the optical display medium shown in FIG. 11.

Description of Embodiments

Hereinafter, the present invention will be described in detail with reference to examples and embodiments. However, the present invention is not limited to examples and embodiments described below, and may be freely modified for implementation without departing from the scope of claims of the present invention and the scope of their equivalents.

In the following description, the term "(meth)acrylic group" is a term encompassing an "acrylic group", a "methacrylic group", and a combination of these, unless otherwise specified.

In the following description, an in-plane retardation Re of a certain layer is a value represented by Re = (nx - ny) × d unless otherwise specified. Herein, nx represents a refractive index in a direction in which the maximum refractive index is given among directions perpendicular to the thickness direction of the layer (in-plane directions), ny represents a refractive index in a direction, among the above-mentioned in-plane directions, perpendicular to the direction giving nx, and d represents the thickness of the layer. The wavelength for measurement of retardations is 550 nm unless otherwise specified. Re measured at a certain wavelength (in nm) is indicated with a numeral, such as Re(450). For example, Re(400) indicates Re for light of a wavelength 400 nm. The in-plane retardation Re may be measured using a phase difference meter ("AxoScan" manufactured by Axometrics).

In the following description, a direction of a slow axis of a certain layer refers to a direction of a slow axis in the in-plane directions unless otherwise specified.

In the following description, a direction of a member being "parallel" and "perpendicular" may allow an error within the range of not impairing the advantageous effects of the present invention, for example, within a range of ±4°, preferably ±3°, more preferably ±1°, unless otherwise specified.

In the following description, for convenience of explanation, "clockwise circularly polarized light" and "counterclockwise circularly polarized light" are defined based on the rotation direction of circularly polarized light in the case in which the destination of light is observed from the source of light output. That is, in the case where the destination of light is observed from the source of light output, polarized light whose polarization direction rotates clockwise as the light proceeds is defined as clockwise circularly polarized light, and polarized light whose polarization direction rotates in the other way around is defined as counterclockwise circularly polarized light.

In the following illustration in the drawings and description explaining the illustration, the following reference characters are used for convenience of facilitating understanding. In the following explanation of the reference characters, directions are based on directions shown in FIGs. 1 to 10 and directions referred to in the explanation thereof. In particular,

meanings of an "XY direction" and an "Xy direction" will be explained later with reference to FIG. 3. The vibration direction of polarized light refers to the vibration direction of electric field.

(N): unpolarized light or an isotropic layer through which light is transmitted.
(X): linearly polarized light having a vibration direction in an X-axis direction or a polarizer having a transmission axis in the X-axis direction.
(Y): linearly polarized light having a vibration direction in a Y-axis direction or a polarizer having a transmission axis in the Y-axis direction.
(L): counterclockwise circularly polarized light or a counterclockwise reflective circular polarizer (i.e., a reflective circular polarizer that selectively reflects a counterclockwise circularly polarized light component of the incident light).
(R): clockwise circularly polarized light or a clockwise reflective circular polarizer (i.e., a reflective circular polarizer that selectively reflects a clockwise circularly polarized light component of the incident light).
(P): polarized light in which a polarization state is not any of the aforementioned states or is not limited to any of the aforementioned states.
(Ch): light observed as light with a chromatic color.
(n): no light
(XY): an XY direction or a phase difference layer having a slow axis in the XY direction.
(Xy): an Xy direction or a phase difference layer having a slow axis in the Xy direction.

In the following description, an optical display medium will be described while being placed horizontally with the display surface facing upward, unless otherwise specified. Therefore, the side for visual recognition of the optical display medium may be simply referred to as an "upper" side, and the opposite side may be referred to as a "lower" side. For example, a surface of one surface and the other surface of a layer that is closer to the display surface of an optical display medium may be referred to as an "upper" surface. In addition, a direction perpendicular to the "up" and "down" directions may be referred to as a "horizontal" direction.

The optical display medium of the present invention may be observed in observation modes including:

· a mode in which unpolarized light is made incident on the optical display medium, and reflected light from the optical display medium is observed in a usual mode (a mode without particular selection of a polarized light component);
· a mode in which unpolarized light is made incident on the optical display medium, and a polarized light component of reflected light from the optical display medium is selectively observed, and
· a mode in which polarized light is made incident on the optical display medium, and reflected light from the optical display medium is observed in a usual mode.

In the following description, the first mode among the three modes described above may be referred to as "usual observation", the second mode may be referred to as "unpolarized light-polarized light observation", and the third mode may be referred to as "polarized light-unpolarized light observation" for convenience of description.

[Optical display medium: First Embodiment]

The optical display medium of the present invention includes a light reflective layer and a patterned phase difference layer.

FIGs. 1 and 2 are an exploded perspective view and an exploded side view, respectively, schematically illustrating an example of the optical display medium of the present invention and a method for using the optical display medium. In FIGs. 1 to 2 and 4 to 10, constituent elements of the optical display medium are represented in a state of being apart for description of an optical function, but in an actual optical display medium, the constituent elements may be in direct contact with each other or in contact with each other through another layer. In FIGs. 1 and 2, an optical display medium 100 includes a light reflective layer 101(R) and a patterned phase difference layer 110.

The patterned phase difference layer 110 is a layered body including a plurality of sub-layers 102 and 103(Xy). Only a part of the sub-layer 102 is a layer 102(Xy) that functions as a λ/4 wavelength plate, and the other part thereof is an isotropic layer 102(N). The sub-layer 103(Xy) is a layer the entire region of which has a uniform phase difference. The slow axis directions of the layer 102(Xy) and the sub-layer (Xy) are directions of arrows A102(Xy) and A103(Xy) in FIG. 1, that is, an Xy direction.

In this example, the entire region of an upper surface 101(R)U of the light reflective layer 101(R) is a display surface region, that is, a region corresponding to a display surface of the optical display medium. The sub-layer 102 is disposed to be on the light reflective layer 101(R) in such a manner that it occupies the entire region of the display surface region. The sub-layer 103(Xy) is disposed to be on the sub-layer 102 in such a manner that it occupies only a

part of the display surface region. By having such a configuration of the sub-layers 102 and 103(Xy), the patterned phase difference layer 110 has regions R1 to R4 that are four types of regions having different phase differences.

The patterned phase difference layer is usually positioned closer to a visual recognition side than the light reflective layer. Therefore, the display surface of the optical display medium is usually a surface of the optical display medium on a patterned phase difference layer side. In the optical display medium 100 in the example of FIGs. 1 and 2, an upper surface on the patterned phase difference layer 110 side (i.e., an upper surface 102U of the sub-layer 102 in the regions R1 and R4 and an upper surface 103U of the sub-layer 103(Xy) in the regions R2 and R3) functions as a display surface. That is, a part of light incident on the upper surface on the patterned phase difference layer 110 side is reflected within the optical display medium 100 and exits the upper surface, and the light is observed by an observer. Thus, the function of the optical display medium is expressed.

In FIGs. 1 to 10, directions in a space are represented by axes of common three-dimensional coordinates for convenience of description. In axes of coordinates represented by arrows X, Y, and Z, a direction that is parallel with the arrow X, a direction that is parallel with the arrow Y, and a direction that is parallel with the arrow Z are simply referred to as an X-axis direction, a Y-axis direction, and a Z-axis direction, respectively. In FIGs. 1 to 2 and 4 to 10, the optical display medium 100 or 200 is positioned in a direction whereby the display surface is parallel to an XY plane.

FIG. 3 is a top view of the axes of coordinates shown in FIG. 1 in a state of being viewed in the Z-axis direction. Among the in-plane directions of the XY plane, a direction at an angle of 45° with respect to the arrows X and Y (i.e., a direction parallel with an arrow XY in FIG. 3) is referred to as an XY direction. A direction at an angle of 45° with respect to the arrow X and an angle of 135° with respect to the arrow Y (i.e., a direction parallel with an arrow Xy in FIG. 3) is referred to as an Xy direction.

[Outline of optical property of light reflective layer]

The light reflective layer is a layer that reflects incident light as circularly polarized light or linearly polarized light. Specifically, the light reflective layer is a layer that, when unpolarized light including various polarized light components is incident, reflects the polarized light components of the unpolarized light as circularly polarized light or linearly polarized light. The light reflective layer is usually a reflective polarizer. That is, the light reflective layer transmits a part or the entirety of a polarized light component of a certain wavelength of the incident light and reflects a part or the entirety of another polarized light component. As the light reflective layer, a reflective circular polarizer or a reflective linear polarizer may be used.

The reflective circular polarizer is an optical element that transmits one of a clockwise circularly polarized light component or a counterclockwise circularly polarized light component of the incident light of a certain wavelength and reflects the other circularly polarized light component. The reflective linear polarizer is an optical element that transmits one of a certain linearly polarized light component or a linearly polarized light component perpendicular to the certain component, of the incident light of a certain wavelength and reflects the other linearly polarized light component.

In the example of FIGs. 1 and 2, as the light reflective layer 101(R), a clockwise reflective circular polarizer (that is, a reflective circular polarizer that selectively reflects a clockwise circularly polarized light component of the incident light) is adopted. The examples of the light polarizing layer and the material forming the same will be more specifically described later.

[Outline of optical property of patterned phase difference layer]

The patterned phase difference layer is a layer containing a region having a phase difference. The region having a phase difference is a layer disposed in the optical display medium such that the region occupies the entirety or a part of the region on the display surface of the optical display medium. From the viewpoint of improving a function of an identification medium, it is preferable that the region having a phase difference occupies only a part of the region on the display surface of the optical display medium so as to enable comparative observation with another region. In the following description, a portion of the region having a phase difference in the patterned phase difference layer may simply be referred to as "phase difference layer". The phase difference of the phase difference layer may be defined as an in-plane retardation Re.

A region other than the region occupied by the phase difference layer on the display surface may be a region occupied by an isotropic layer having no phase difference, or a region that does not include any of them.

The region having a phase difference may be present at only one position or two or more positions in the entire region of the patterned phase difference layer. When the region having a phase difference is present at two or more positions in the entire region of the patterned phase difference layer, a plurality of regions may have the same phase difference or different phase differences. In all these cases, one or more regions H's among the regions having a phase difference have a specific optical property in the present invention.

[Region H]

The region H is one or more regions in the patterned phase difference layer.

In the region H, an in-plane retardation ReH(400) at a wavelength of 400 nm, an in-plane retardation ReH(550) at a wavelength of 550 nm, and an in-plane retardation ReH(700) at a wavelength of 700 nm satisfy the following formula (1), and also satisfy either one of the following formulas (2) and (3). All units for ReH(400), ReH(550), and ReH(700) are nm. In addition, the region H has a property of converting light passing through the region H into light having a variety in polarization state for wavelengths.

$$ReH(550) > 275 \quad \text{Formula (1)}$$

$$ReH(400)/400 > ReH(550)/550 > ReH(700)/700 \quad \text{Formula (2)}$$

$$ReH(400)/400 < ReH(550)/550 < ReH(700)/700 \quad \text{Formula (3)}$$

When these requirements are satisfied, a function for expressing a chromatic color during use of the optical display medium can be imparted to a region corresponding to the region H on the display surface of the optical display medium. For example, a function in which a chromatic color is not observed in usual observation, but a specific chromatic color is observed in unpolarized light-polarized light observation and/or polarized light-unpolarized light observation can be imparted to the optical display medium.

Specifically, when the region H satisfies the formulas (2) and (3) and has a property of converting light that passing through the region H into light having a variety in polarization state for wavelengths, light incident on the region H on the display surface of the optical display medium is reflected in a state of having a variety in polarization state for wavelengths. When ReH(550) is large to a certain extent or more, the variety between polarization states for respective wavelengths becomes particularly large. In unpolarized light-polarized light observation and/or polarized light-unpolarized light observation of the optical display medium, light having a part of wavelength range of reflective light is observed in an emphasized manner. In usual observation, a difference in emphasis of light by differences in polarization state does not occur, and thus emphasized state of only light in a specific polarization state is not observed. Therefore, the function in which a chromatic color is not observed in usual observation, but a specific chromatic color is observed in unpolarized light-polarized light observation and/or polarized light-unpolarized light observation can be imparted to the optical display medium.

Conversion of light passing through the region H to light having a variety in polarization state for wavelengths means that a case where light passing through the region H in the entire wavelength range of visible light (400 to 700 nm) is converted to light having a uniform polarization state regardless of its wavelength is excluded. For example, when an in-plane retardation ReH($\lambda$) of light having a wavelength of $\lambda$ nm to be transmitted through the region H is considered as a standard, a case where a value of ReH($\lambda$)/$\lambda$ is constant in the entire wavelength range of visible light is excluded by such a definition. More specifically, as to 400 nm, 550 nm, and 700 nm that are representative wavelengths of the entire wavelength range of visible light, considering as the standard values the in-plane retardation ReH(400) at a wavelength of 400 nm in the region H, the in-plane retardation ReH(550) at a wavelength of 550 nm in the region H, and the in-plane retardation ReH(700) at a wavelength of 700 nm in the region H, a case of ReH(400)/400 = ReH(550)/550 = ReH(700)/700 is excluded.

ReH(400), ReH(550), and ReH(700) preferably satisfy the following formulas (4) to (6).

$$ReH(550) \geq 300 \quad \text{Formula (4)}$$

$$ReH(550) \leq 382.81/\Delta C + 250 \quad \text{Formula (5)}$$

$$ReH(550) \geq 53.873/\Delta C + 199.3 \quad \text{Formula (6)}$$

In the formulas, $\Delta C$ is a value represented by the following formula (7):

$$\Delta C = (|(ReH(400)/ReH(550)) - 0.73| + |(ReH(550)/ReH(700)) - 0.79|)/2 \quad \text{Formula (7)}$$

According to investigation by the present inventors shown in Examples, a chromatic color in unpolarized light-polarized light observation and/or polarized light-unpolarized light observation can be particularly clearly expressed when the formulas (4) to (6) are satisfied.

[Region I]

In addition to the region H, the patterned phase difference layer may have a region I having a phase difference. Examples of such a region I may include a region that functions as a λ/4 wavelength plate, and a region that functions as a λ/2 wavelength plate. The region that functions as a λ/4 wavelength plate is a region where an in-plane retardation ReI(550) at a wavelength of 550 nm is 137.5 nm or a value close to 137.5 nm. For example, a region where ReI is (137.5 × 0.6) nm to (137.5 × 1.4) nm, and preferably (137.5 × 0.8) nm to (137.5 × 1.2) nm may be used as the region that functions as a λ/4 wavelength plate. Similarly, the region that functions as a λ/2 wavelength plate is a region where an in-plane retardation ReI(550) at a wavelength of 550 nm is 275 nm or a value close to 275 nm, except for the region H. For example, the region that functions as a λ/2 wavelength plate is a region where an in-plane retardation is (275 × 0.6) nm to (275 × 1.4) nm, and preferably (275 × 0.8) nm to (275 × 1.2) nm, except for the region H.

In the example of FIGs. 1 and 2, the patterned phase difference layer 110 has the regions R1 to R4. Since the layer 102(Xy) and the sub-layer 103(Xy) have a phase difference, the region R1 is a region where a phase difference of the layer 102(Xy) is expressed, the region R3 is a region where a phase difference of the sub-layer 103(Xy) is expressed, and the region R4 is a region where a phase difference is not expressed.

In the region R2, the layer 102(Xy) overlaps with the sub-layer 103(Xy). When the patterned phase difference layer in this manner includes the plurality of sub-layers and each of the sub-layers has a phase difference in at least a portion of the region in the plane, the portions having such a phase difference may be in a stacked state. As a result, both phase differences of the stacked layers having a phase difference are expressed. As a result, the degree of freedom in the expression of phase difference is enhanced, and the degree of freedom in the color imparted to the region H in the unpolarized light-polarized light observation and the polarized-unpolarized observation can be enhanced.

In the example of the layer 102(Xy) and the sub-layer 103(Xy), all of the slow axes thereof are in the Xy direction, and thus the slow axes are parallel to each other. Therefore, the phase difference of the patterned phase difference layer 110 in the region R2, particularly the in-plane retardation Re is a sum of Re of the layer 102(Xy) and Re of the sub-layer 103(Xy). When the slow axes of the sub-layers are thus parallel to each other, the phase difference may be a sum of phase differences thereof. Such a mode is particularly preferable since a pattern of a region having a high phase difference can be configured at a high degree of freedom. Advantages thereof will be specifically described. For example, when the layer to be configured is of a single layer structure that has, like the sub-layer 102, a region having a phase difference and an isotropic region having no phase difference and has a complicated pattern configured by the regions, it is difficult to form the layer by a usual method for producing a phase difference layer such as stretching of a film, and formation by a special method such as curing of a curable liquid crystal compound is required. Such a special method is relatively difficult to form a layer having high anisotropy and large phase difference. However, for example, when a layer that has a uniform phase difference and can easily have a large phase difference is stacked with a layer having a complicated pattern for use, like the sub-layer 103(Xy), a layer having a large phase difference while having a complicated pattern and a variety of phase differences can be easily configured.

When the slow axes of the plurality of sub-layers are parallel to each other, the angle between the slow axes does not have to be 0°. That is, the axes may be completely parallel, and may also have a some degree of error. For example, the angle between the slow axes may be within the range of 0° to 30°.

Regarding the patterned phase difference layer 110 in the example of FIGs. 1 and 2, the values of the in-plane retardation Re of each of the layer 102(Xy) and the sub-layer 103(Xy) may be adjusted such that any one or more of the regions R1 to R3 satisfy the requirements for the region H described above. Among the regions R1 to R3, a region other than the region that satisfies the requirements for the region H may be the region I. The region I may be a region that functions as a λ/4 wavelength plate or a region that functions as a λ/2 wavelength plate, as described above.

In the example described below, a typical example will be described in which the layer 102(Xy) functions as a λ/4 wavelength plate and has an Re(550) of 137.5 nm, and the sub-layer 103(Xy) functions as the region H and has an Re(550) of more than 275 nm. Therefore, in the following example, among the regions R1 to R3, the region R1 functions as a λ/4 wavelength plate, and the regions R2 and R3 function as the region H, and in particular, the region R2 becomes the region H having an in-plane retardation Re larger than the region R3.

[Function of optical display medium and method for using optical display medium]

In the method for using the optical display medium of the present invention, incident light is caused to be incident on the display surface of the optical display medium. The light is then reflected by the light reflective layer to be reflected light, and the reflected light is observed.

Examples of light to be incident on the optical display medium may include unpolarized light, linearly polarized light, circularly polarized light, and elliptically polarized light. As to the case wherein the optical display medium has an identification function, when the light to be incident in observation of the reflected light is unpolarized light, identification can be performed by selective observation of a linearly polarized light component or a circularly polarized light component of the reflected light (unpolarized light-polarized light observation). Furthermore, a design effect as a decorative medium of the optical display medium can also be obtained.

As one of using methods, a using method by unpolarized light-polarized light observation (unpolarized light is made incident on the optical display medium, and a polarized light component of reflected light from the optical display medium is selectively observed) will be first described.

As the unpolarized light to be incident, general environmental light, such as sunlight and light from room lighting, may be used.

The selective observation of the linearly polarized light component of the reflected light may be performed by visually observing the reflected light through a linear polarizer for observation. The selective observation of the circularly polarized light component of the reflected light may be performed by visually observing the reflected light through a circular polarizer for observation. In order to avoid prevention of incidence of environmental light, the linear polarizer for observation and the circular polarizer for observation may be usually used in a state of being apart from the optical display medium. The lower limit of the separation distance may be appropriately adjusted according to the sizes and the like of the optical display medium and the linear polarizer for observation and may be usually 100 mm or more. The upper limit of the separation distance may be appropriately adjusted within a range where the reflected light of the optical display medium can be observed and may be usually 30 m or less.

The linear polarizer for observation thus used at a position being apart from the optical display medium may be a dedicated product for the using method of the present invention or a general linear polarizer used in other applications. For example, most of commercially available polarized sunglasses can function as a linear polarizer, and thus such commercially available polarized sunglasses may be used as the linear polarizer for observation. Examples of the circular polarizer for observation may include a circular polarizer including a combination of a linear polarizer and a phase difference film, and a circular polarizer including a layer formed from a cholesteric material (e.g., those described in International Publication No. 2020/121791).

[Method for using optical display medium of first embodiment: part 1: unpolarized light-polarized light observation]

In the example of FIGs. 1 and 2, light incident on the optical display medium 100 is unpolarized light, and the light reflective layer 101(R) included in the optical display medium 100 is a reflective circular polarizer. Observation of the reflected light in the unpolarized light-polarized light observation of such an optical display medium may be performed by selective observation of the linearly polarized light component. FIGs. 1 and 2 illustrate an example in which the reflected light from the optical display medium 100 is observed through a linear polarizer for observation 191(X). In this example, the linear polarizer for observation 191(X) is a polarizer positioned at an angle relative to the optical display medium 100 so as to have a transmission axis in an X-axis direction, that is, a direction represented by an arrow A191(X). Therefore, in this example, the slow axes of the layer 102(Xy) and the sub-layer 103(Xy) are inclined at 45° counterclockwise with respect to the transmission axis of the linear polarizer for observation 191(X). That is, when the linear polarizer for observation 191(X) and the optical display medium 100 are observed from the visual recognition side, the slow axes of the layer 102(Xy) and the sub-layer 103(Xy) are inclined at 45° counterclockwise with respect to the direction of the transmission axis of the linear polarizer for observation 191(X) as a baseline. In the following description for FIGs. 1 to 10, "clockwise" and "counterclockwise" means as described above.

Each value within parentheses in FIGs. 2, 4 to 10 is for schematically indicating the function of each of members. The value is a theoretical value of brightness of light at each stage when the brightness of the incident light is regarded as 100. Herein, the theoretical value is a value when a polarizer completely separates polarized light (in the example of FIG. 2, a clockwise circularly polarized light component of light incident on the light reflective layer 101(R) is totally reflected, a counterclockwise circularly polarized light component is totally transmitted, and a linearly polarized light component in the X-axis direction of light incident on the linear polarizer for observation 191(X) is totally transmitted, and a linearly polarized light component other than the polarized light components described above is totally absorbed or reflected to be blocked), and light is not absorbed by the patterned phase difference layer. In actual use of the optical display medium, various losses are generated, and the brightness of light at each stage may be lower than the theoretical value.

In the example of using the optical display medium 100 shown in FIGs. 1 and 2, incident lights A111(N), A121(N), A131(N), and A141(N) are incident on the regions R1, R2, R3, and R4 of the patterned phase difference layer 110, respectively. In the example, the incident lights A111(N) to A141(N) are unpolarized light that is visually recognizable as light of an achromatic color with uniform distribution of wavelengths.

The incident light A111(N) is transmitted through the layer 102(Xy), exits downward as light A112(N) that is unpolarized light, and reaches the upper surface 101(R)U of the light reflective layer 101(R). Since the light reflective layer 101(R) is a clockwise reflective circular polarizer, a clockwise circularly polarized light component of the light A112(N) is reflected by a surface or an inside of the light reflective layer 101(R) to become reflected light A113(R). The theoretical value of brightness of the light A113(R) is a half of that of the incident light. On the other hand, a counterclockwise circularly polarized light component of the light A112(N) is transmitted through the light reflective layer 101(R) to become transmitted light A119(L).

The light A113(R) is transmitted again through the layer 102(Xy) and exits the display surface of the optical display medium 100 as light A114(Y). Since the light A113(R) is clockwise circularly polarized light and the layer 102(Xy) is a $\lambda/4$ wavelength plate having a slow axis in the Xy direction, the light A114(Y) becomes linearly polarized light having a polarization direction in the Y-axis direction, and the theoretical value of brightness of the light A114(Y) is the same as that of the light A113(R).

In usual observation of the region R1, the light A114(Y) is observed without intervention of the linear polarizer for observation 191(X). In unpolarized light-polarized light observation of the region R1, the state wherein the light A114(Y) having been incident on the linear polarizer for observation 191(X) becomes outgoing light A115(n) is observed. When the light A114(Y) that exits the region R1 of the patterned phase difference layer 110 is incident on the linear polarizer for observation 191(X), since the vibration direction of polarized light of the light A114(Y) and the transmission axis of the linear polarizer for observation 191(X) are orthogonal to each other, the light A114(Y) is totally blocked, and the theoretical value of brightness of the outgoing light A115(n) from the linear polarizer for observation 191(X) becomes zero.

When the layer 102(Xy) is an ideal $\lambda/4$ wavelength plate having a value of $Re(\lambda)/\lambda$ being constant in the entire wavelength range of visible light, the light A114(Y) becomes linearly polarized light having a polarization direction in the Y-axis direction in the entire wavelength range of visible light, and the brightness of the outgoing light A115(n) in the entire wavelength range of visible light can be zero. On the other hand, when the layer 102(Xy) is a non-ideal $\lambda/4$ wavelength plate having a value of $Re(\lambda)/\lambda$ being not constant in the entire wavelength range of visible light, the in-plane retardation Re of the light A114(Y) is a value with an error apart from $\lambda/4$ in a certain wavelength range of visible light. Thus, the outgoing light can be elliptically polarized light, and the brightness of the outgoing light A115(n) is not zero in the wavelength range. Therefore, in unpolarized light-polarized light observation of the region R1, a chromatic color can be observed. However, since Re(550) of the layer 102(Xy) is a small value of 137.5 nm in which the layer 102(Xy) functions as a $\lambda/4$ wavelength plate, the amount of such an error is usually small. Therefore, coloration of a visually recognizable chromatic color is not usually observed.

The incident light A121(N) is transmitted through the sub-layer 103(Xy), exits downward as light A122(N) that is unpolarized light, is further transmitted through the layer 102(Xy), exits downward as light A123(N) that is unpolarized light, and reaches the upper surface 101(R)U of the light reflective layer 101(R). Since the light reflective layer 101(R) is a clockwise reflective circular polarizer, a clockwise circularly polarized light component of the light A123(N) is reflected by the surface or the inside of the light reflective layer 101(R) to become reflected light A124(R). The theoretical value of brightness of the light A124(R) is a half of that of the incident light. On the other hand, a counterclockwise circularly polarized light component of the light A123(N) is transmitted through the light reflective layer 101(R) to become transmitted light A129(L).

The light A124(R) is transmitted through the layer 102(Xy) and exits upward as light A125(Y). Since the light A124(R) is clockwise circularly polarized light and the layer 102(Xy) is a $\lambda/4$ wavelength plate having a slow axis in the Xy direction, the light A125(Y) becomes linearly polarized light having a polarization direction in the Y-axis direction. The theoretical value of brightness of the light A125(Y) is the same as that of the light A124(R) .

The light A125(Y) is transmitted through the sub-layer 103(Xy) and exits the display surface of the optical display medium 100 as light A126(P). Since the sub-layer 103(Xy) is a layer that functions as the region H and has an Re(550) of more than 275 nm, the light A126(P) that has been transmitted through the sub-layer 103(Xy) is in a state of having a variety in polarization state for wavelengths. For example, lights of the various wavelengths can be in various polarization states of linearly polarized light having a vibration direction in the X-axis direction, linearly polarized light having a vibration direction in the Y-axis direction, clockwise circularly polarized light, counterclockwise circularly polarized light, and elliptically polarized light in which these components are combined. However, the brightness values of lights do not have variety for wavelengths. Therefore, in usual observation of the region R2, the light A126(P) is not observed as light having a particular chromatic color. The theoretical value of brightness of the light A126(P) is the same as that of the light A125(Y).

In unpolarized light-polarized light observation of the region R2, the state wherin the light A126(P) having been

incident on the linear polarizer for observation 191(X) becomes outgoing light A127(X)(Ch) is observed. When the light A126(P) is incident on the linear polarizer for observation 191(X), only a linearly polarized light component, having a vibration direction in the X-axis direction, of the light A126(P) exits the linear polarizer for observation 191(X) as the outgoing light A127(X)(Ch). Since the light A126(P) has a variety in polarization state for wavelengths, among lights having various wavelengths contained in the light A126(P), light, having a wavelength at which a large amount of the linearly polarized light component having a vibration direction in the X-axis direction is contained, exits the linear polarizer for observation 191(X) in a relatively larger amount. As a result, in unpolarized light-polarized light observation of the region R2, the light A127(X)(Ch) is observed as light with a certain chromatic color. Although the theoretical value of brightness of the light A127(X)(Ch) varies depending on the polarization state of the light A126(P), the theoretical value is a value smaller than that of the light A126(P), and is about a half of that of the light A126 (P) .

The incident light A131(N) is transmitted through the sub-layer 103(Xy), exits downward as light A132(N) that is unpolarized light, is further transmitted through the layer 102(N), exits downward as light A133(N) that is unpolarized light, and reaches the upper surface 101(R)U of the light reflective layer 101(R). Since the light reflective layer 101(R) is a clockwise reflective circular polarizer, a clockwise circularly polarized light component of the light A133(N) is reflected by the surface or the inside of the light reflective layer 101(R) to become reflected light A134(R). The theoretical value of brightness of the light is a half of that of the incident light. On the other hand, a counterclockwise circularly polarized light component of the light A133(N) is transmitted through the light reflective layer 101(R) to become transmitted light A139(L).

The light A134(R) is transmitted through the layer 102(N) and exits upward as light A135(R). The light A135(R) is transmitted through the sub-layer 103(Xy) and exits the display surface of the optical display medium 100 as light A136(P). Since the sub-layer 103(Xy) is a layer that functions as the region H and has an Re(550) of more than 275 nm, the light A136(P) that has been transmitted through the sub-layer 103(Xy) has a variety in polarization state for wavelengths. Since the light A126(P) is light that has first become circularly polarized light and then transmitted also through the layer 102(Xy) that is another layer having a phase difference whereas the light A136(P) is light that has been transmitted not through the layer 102(Xy) but through the isotropic layer 102(N), the polarization state of the light A136(P) is different from that of the light A126(P) that exits the region R2. However, the brightness values of the light A136(P) do not have a variety for wavelengths in the same manner as the light A126(P). Therefore, in usual observation of the region R3, the light A136(P) is not observed as light having a particular chromatic color. The theoretical value of brightness of the light A136(P) is the same as that of the light A135(R).

On the other hand, in unpolarized light-polarized light observation of the region R3, the state wherein the light A136(P) having been incident on the linear polarizer for observation 191(X) becomes outgoing light A137(X)(Ch) is observed. When the light A136(P) is incident on the linear polarizer for observation 191(X), only a linearly polarized light component, having a vibration direction in the X-axis direction, of the light A136(P) exits the linear polarizer for observation 191(X) as the outgoing light A137(X)(Ch). Since the light A136(P) has a variety in polarization state for wavelengths, among lights having various wavelengths contained in the light A136(P), light, having a wavelength at which a large amount of the linearly polarized light component having a vibration direction in the X-axis direction is contained, exits the linear polarizer for observation 191(X) in a relatively larger amount. As a result, in unpolarized light-polarized light observation of the region R3, the light A137(X)(Ch) is observed as light with a certain chromatic color. However, since the polarization state of the light A136(P) is different from that of the light A126(P), the color of the light A137(X)(Ch) is different from that of the light A127(X)(Ch). Although the theoretical value of brightness of the light A137(X)(Ch) varies depending on the polarization state of the light A136(P), the theoretical value is a value smaller than that of the light A136(P), and is about a half of that of the light A136(P).

The incident light A141(N) is transmitted through the layer 102(N), exits downward as light A142(N) that is unpolarized light, and reaches the upper surface 101(R)U of the light reflective layer 101(R). A clockwise circularly polarized light component of the light A142(N) is reflected to become reflected light A143(R). The theoretical value of brightness of the light A143(R)is a half of that of the incident light. On the other hand, a counterclockwise circularly polarized light component of the light A142(N) is transmitted through the light reflective layer 101(R) to become transmitted light A149(L).

The light A143(R) is transmitted again through the layer 102(N) and exits the display surface of the optical display medium 100 as light A144(R). The theoretical value of brightness of the light A144(R) is the same as that of the light A143(R).

In usual observation of the region R4, the light A144(R) is observed without intervention of the linear polarizer for observation 191(X). On the other hand, in unpolarized light-polarized light observation of the region R4, the state wherein the light A144(R) having been incident on the linear polarizer for observation 191(X) becomes outgoing light A145(X) is observed. That is, when the light A144(R) that exits the region R4 of the patterned phase difference layer 110 is incident on the linear polarizer for observation 191(X), only a linearly polarized light component, having a vibration direction in the X-axis direction, of the light A144(R) exits the linear polarizer for observation 191(X) as the outgoing light A145(X). The theoretical value of brightness of the outgoing light A145(X) is a half of that of the light A144(R).

FIG. 4 is an exploded side view schematically illustrating an example of the method for using the optical display medium of the present invention when a relative angle relationship between the optical display medium and the linear polarizer for observation is changed from that in the example of FIGs. 1 and 2. FIG. 4 illustrates the optical display medium 100 whose angle relative to the axes of coordinates being fixed, with the linear polarizer for observation whose angle relative to the X axis and the Y axis being changed. In actual use, however, the relative angle relationship may be changed by any of movement of the optical display medium, movement of the linear polarizer for observation, exchange of the linear polarizer for observation, and a combination of two or more thereof.

As a result of change of the angle relationship, the example of FIG. 4 is presented as a modified example in which a linear polarizer for observation 191(Y) is used as the linear polarizer for observation. The linear polarizer for observation 191(Y) is a polarizer positioned at an angle relative to the optical display medium 100 so as to have a transmission axis in the Y-axis direction. Therefore, in this example, the slow axes of the layer 102(Xy) and the sub-layer 103(Xy) are inclined at 45° clockwise with respect to the transmission axis of the linear polarizer for observation 191(Y).

In the example of using the optical display medium 100 shown in FIG. 4, the incident lights A111(N) to A141(N) that are unpolarized light are incident on the regions R1 to R4 of the patterned phase difference layer 110, respectively, and parts of the respective lights exit the display surface of the optical display medium 100 as lights A114(Y), A126(P), A136(P), and A144(R), respectively. The paths of lights up to this stage are the same as those in the example of FIGs. 1 and 2.

When the outgoing light A114(Y) is incident on the linear polarizer for observation 191(Y), since the vibration direction of polarized light of the light A114(Y) and the transmission axis of the linear polarizer for observation 191(Y) are parallel to each other, the light A114(Y) is totally transmitted and exits the linear polarizer for observation 191(Y) as outgoing light A115(Y). The theoretical value of brightness of the outgoing light A115(Y) is the same as that of the light A114(Y).

When the outgoing light A126(P) is incident on the linear polarizer for observation 191(Y), only a linearly polarized light component, having a vibration direction in the Y-axis direction, of the light A126(P) exits the linear polarizer for observation 191(Y) as outgoing light A127(Y) (Ch). Since the light A126(P) has a variety in polarization state for wavelengths, among lights having various wavelengths contained in the light A126(P), light, having a wavelength at which a large amount of the linearly polarized light component having a vibration direction in the Y-axis direction is contained, exits the linear polarizer for observation 191(Y) in a relatively larger amount. As a result, in unpolarized light-polarized light observation of the region R2, the light A127(Y) (Ch) is observed as light with a certain chromatic color. At that time, among the polarized light components contained in the light A126(P), a component that is able to exit the linear polarizer for observation 191(X) (FIGs. 1 and 2) is blocked by the linear polarizer for observation 191(Y). Conversely, a component that is not able to exit the linear polarizer for observation 191(X) among the polarized light components contained in the light A126(P) exits the linear polarizer for observation 191(Y). Therefore, the color of the observed outgoing light A127(Y)(Ch) can be largely different from that of the light A127(X)(Ch) (FIGs. 1 and 2). Although the theoretical value of brightness of the light A127(Y)(Ch) varies depending on the polarization state of the light A126(P), the theoretical value is a value smaller than that of the light A126(P), and is about a half of that of the light A126(P).

When the outgoing light A136(P) is incident on the linear polarizer for observation 191(Y), only a linearly polarized light component, having a vibration direction in the Y-axis direction, of the light A136(P) exits the linear polarizer for observation 191(Y) as outgoing light A137(Y)(Ch). Since the light A136(P) has a variety in polarization state for wavelengths, among lights having various wavelengths contained in the light A136(P), light, having a wavelength at which a large amount of the linearly polarized light component having a vibration direction in the Y-axis direction is contained, exits the linear polarizer for observation 191(Y) in a relatively larger amount. As a result, in unpolarized light-polarized light observation of the region R3, the light A137(Y)(Ch) is observed as light with a certain chromatic color. At that time, the color of the observed outgoing light A137(Y)(Ch) can be largely different from that of the light A137(X)(Ch) for the same reason as that described above for the light A127(Y) (Ch). In addition, since the polarization state of the light A136(P) is different from that of the light A126(P), the color of the light A137(Y) (Ch) is different from that of the light A127(Y) (Ch). Although the theoretical value of brightness of the light A137(Y) (Ch) varies depending on the polarization state of the light A126(P), the theoretical value is a value smaller than that of the light A126(P), and is about a half of that of the light A126(P).

When the outgoing light A144(R) is incident on the linear polarizer for observation 191(Y), only a linearly polarized light component, having a vibration direction in the Y-axis direction, of the light A144(R) exits the linear polarizer for observation 191(Y) as outgoing light A145(Y). The theoretical value of brightness of the outgoing light A145(Y) is a half of that of the light A144(R).

As a result of the foregoing, in usual observation of the optical display medium 100 on which unpolarized light is incident, an observer observes the outgoing lights A114(Y), A126(P), A136(P), and A144(R). These outgoing lights have the same brightness, although their polarization states are different. Since human vision cannot recognize this difference in polarization state, the observer cannot recognize the difference. Even when a relative angle relationship

between the optical display medium 100 and the observer changes, the observer cannot recognize the change based on the change of the polarization state. Therefore, the regions R1 to R4 are all observed as an achromatic region having the same brightness, and a difference between the regions is not recognized.

On the other hand, when the relative angle relationship between the optical display medium and the linear polarizer for observation is configured to be the relationship in the example of FIGs. 1 and 2 and unpolarized light-polarized light observation is performed, the region R1 is observed as an achromatic region of relatively dark and approximately black without reflected light, and the region R4 is observed as a relatively bright achromatic region having reflected light with brightness equivalent to a quarter of that of the incident light. The regions R2 and R3 are observed as chromatic regions that have approximately the same brightness as the region R4 and are different in color from each other. The appearances thereof are different from each other.

When the relative angle relationship between the optical display medium and the linear polarizer for observation is configured to be the relationship in the example of FIG. 4, in unpolarized light-polarized light observation, the region R1 is observed as a relatively bright achromatic region having reflected light with brightness equivalent to a half of that of the incident light. On the other hand, the region R4 is observed as an achromatic region having reflected light with brightness equivalent to a quarter of that of the incident light. Although the brightness of the region R4 is not changed from the case shown in FIGs. 1 and 2, in this example, the region R4 is observed as a region that is relatively darker than the region R1. The regions R2 and R3 are observed as chromatic regions that have approximately the same brightness as the region R4, and have colors that are different from each other and also different from those observed in the example of FIGs. 1 and 2. The appearances thereof are different from each other and also from the appearance observed in the example of FIGs. 1 and 2.

Therefore, by changing the relative angle relationship between the optical display medium and the linear polarizer for observation from the relationship in the example of FIGs. 1 and 2 to the relationship in the example of FIG. 4, relative brightness between the plurality of regions is changed. More specifically, when the direction of the linear polarizer for observation is changed by rotation around an axis parallel to the Z-axis direction from the state of the linear polarizer for observation 191(X) in FIGs. 1 and 2, the relative brightness of the region R1 is increased with an increase in the angle of rotation. When the direction of the linear polarizer for observation reaches the state of the linear polarizer for observation 191(Y) in FIG. 4, the relative brightness becomes the highest. Furthermore, colors observed in the regions R2 and R3 are changed.

In this example, the optical display medium of the present invention can exhibit a special effect in which a difference between the regions is not observed in usual observation, a difference in color and relative brightness between regions is observed only through the linear polarizer for observation, and the color and brightness of each region are changed by changing the angle of the linear polarizer for observation. Such a special effect cannot be obtained by a duplicated product that is easily obtained through a general technique such as printing. Therefore, the optical display medium of the present invention exerts a high anti-counterfeiting property and functions as an identification medium by the comparison of the observation results obtained by using the medium in such a usual observation and using the medium in a plurality of types of unpolarized light-polarized light observations. As a result of the expression of the chromatic color and the change in color and brightness, the optical display medium of the present invention can also exhibit the design effect as a decorative medium.

By differences and changes in relative color and brightness, an image such as a language character and a figure may be displayed on the display surface. An image that is not observed in usual observation, but is observed only in specific observation (that is, unpolarized light-polarized light observation and polarized light-unpolarized light observation) of the optical display medium in such a manner is referred to as a "latent image" of the optical display medium.

The unpolarized light-polarized light observation may be achieved by using environmental light as incident light and visually observing reflected light through the linear polarizer for observation with the optical display medium being apart from the linear polarizer for observation as a viewer. As the linear polarizer for observation, a general polarizer, such as commercially available polarized sunglasses, may be used. Such observation may be performed without a special operation of placing the viewer in proximity of the optical display medium, and may be performed with a relatively easily available viewer. For example, by an easy operation of visually observing the optical display medium disposed at a position apart from the observer with the polarized sunglasses on, the unpolarized light-polarized light observation can be achieved. Accordingly, in such use, the optical display medium of the present invention can easily exert the identification function as the identification medium and the design effect as the decorative medium.

The examples of FIGs. 1, 2, and 4 illustrate the observation with the optical display medium being apart from the linear polarizer for observation, but the positional relationship between the optical display medium and the linear polarizer for observation in the observation is not limited to this relationship. For example, in observation when the linear polarizer for observation and the optical display medium are placed in proximity of each other by mounting the linear polarizer for observation on the optical display medium, such a latent image can also be observed.

The example described above illustrates an example in which a linear polarizer (the linear polarizer for observation 191(X) and the linear polarizer for observation 191(Y)) is used as a polarizer for observation, but the present

invention is not limited to this example. As the polarizer for observation, a polarizer other than the linear polarizer may also be used.

As an example, as the polarizer for observation, a clockwise circular polarizer, a counterclockwise circular polarizer, or a combination thereof may be used instead of the linear polarizer. When lights from the regions R1 to R4 through the clockwise circular polarizer that selectively transmits clockwise circularly polarized light are observed, the brightness values of the lights (relative theoretical values when the brightness of the incident light is regarded as 100) are 25, about 25, about 25, and 50, respectively. The region R4 is observed as a relatively bright region. The regions R1 and R4 are observed as achromatic regions, and the regions R2 and R3 are observed as chromatic regions that are different in color from each other.

On the other hand, when lights from the regions R1 to R4 through the counterclockwise circular polarizer that selectively transmits counterclockwise circularly polarized light are observed, the brightness values of the lights (relative theoretical values when the brightness of the incident light is regarded as 100) are 25, about 25, about 25, and 0, respectively. The region R4 is observed as a relatively dark region. The regions R1 and R4 are observed as achromatic regions, whereas the regions R2 and R3 are observed as chromatic regions that are different in color from each other, and the colors thereof are different from the colors in the observation through the clockwise circular polarizer.

Therefore, by a change in relative brightness caused by contrast of two or more of usual observation without a circular polarizer, observation through the clockwise circular polarizer, and observation through the counterclockwise circular polarizer, the identification function and the design effect can be exhibited.

[Method for using optical display medium of first embodiment: part 2: polarized light-unpolarized light observation]

Hereinafter, an example of using method by polarized light-unpolarized light observation will be described. That is, observation using, unlike the examples described above, polarized light as light to be incident on the optical display medium 100 will be described.

When light to be incident is polarized light (linearly polarized light, circularly polarized light, or elliptically polarized light), the reflected light may be visually observed in reflected light observation as it is without intervention of the linear polarizer for observation.

When polarized light to be incident is linearly polarized light, linearly polarized light obtained by transmitting unpolarized light through a linear polarizer may be used as the linearly polarized light. A device for supplying the linearly polarized light may be a dedicated device for the using method of the present invention. However, a combination of a general light source and a general linear polarizer used for other applications may also be used. Alternatively, a general device used for other applications in which a light source and a linear polarizer are combined may be used.

When polarized light to be incident is circularly polarized light, circularly polarized light obtained by transmitting unpolarized light through a circular polarizer may be used as the circularly polarized light. A device for supplying the circularly polarized light may be a dedicated device for the using method of the present invention. However, a combination of a general light source and a general circular polarizer used for other applications may also be used in combination. Alternatively, a general device used for other applications in which a light source and a circular polarizer are combined may be used.

When polarized light to be incident is elliptically polarized light, elliptically polarized light obtained by transmitting unpolarized light through an appropriate optical element may be used as the elliptically polarized light. A device for supplying elliptically polarized light may be a dedicated device for the using method of the present invention. However, a combination of a general light source and a general linear polarizer or circular polarizer used for other applications may also be used in combination. Alternatively, a general device used for other applications in which a light source and a linear polarizer or a circular polarizer are combined may be used.

For example, many of electronic devices having a display screen, such as general personal computers and smartphones having a liquid crystal display screen, emit linearly polarized light as light that exits the display screen, and thus such electronic devices may be used as a device for supplying linearly polarized light. More specifically, by an operation of placing such an electronic device in proximity of the optical display medium, the optical display medium may be positioned in an environment where environmental light that is unpolarized light is less incident and light that exits the electronic device is incident in a relatively larger amount, whereby the supply of linearly polarized light can be achieved.

In another example, a sort of the electronic devices having a display screen, such as general personal computers and smartphones having a liquid crystal display screen, emit circularly polarized light as light that exits the display screen, and thus the electronic devices may be used as a device for supplying circularly polarized light. More specifically, by an operation of placing such an electronic device in proximity of the optical display medium, the optical display medium may be positioned in an environment where environmental light that is unpolarized light is less incident and light that exits the electronic device is incident in a relatively larger amount, whereby the supply of circularly polarized light can be achieved.

In still another example, the display screen of the electronic device that emits linearly polarized light or circularly polarized light described above may be equipped with an add-on film attached thereto for various purposes. Examples of such an add-on film may include those to be attached for various purposes, such as protection of the display screen, adjustment of a viewing angle of the display screen, and an improvement in visibility during observation of the display screen through polarized sunglasses. Most of the films have a certain phase difference and can exhibit a function for converting linearly polarized light to circularly polarized light or elliptically polarized light, or converting circularly polarized light to linearly polarized light or elliptically polarized light. The electronic device with the add-on film of such a configuration may be used to achieve the supply of linearly polarized light, circularly polarized light, or others, i.e., elliptically polarized light.

FIGs. 5 and 6 are an exploded side view schematically illustrating yet another example of the method for using the optical display medium 100 illustrated in FIGs. 1, 2, and 4.

In the example of using the optical display medium 100 shown in FIG. 5, incident lights A211(X), A221(X), A231(X), and A241(X) are incident on the regions R1 to R4 of the patterned phase difference layer 110, respectively. In this example, the incident lights A211(X) to A141(X) are linearly polarized light having a vibration direction in the X-axis direction.

The incident light A211(X) is transmitted through the layer 102(Xy), exits downward as light A212(L) that is counterclockwise circularly polarized light, and reaches the upper surface 101(R)U of the light reflective layer 101(R). Since the light reflective layer 101(R) is a clockwise reflective circular polarizer, the entirety of the light A212(L) is transmitted through the light reflective layer 101(R) to become transmitted light A219(L). Therefore, the theoretical value of brightness of reflected light A213(n) on the light reflective layer 101(R) becomes zero, and the theoretical value of brightness of light A214(n) that is transmitted again through the layer 102(Xy) and exits the display surface of the optical display medium 100 also becomes zero.

The incident light A221(X) is transmitted through the sub-layer 103(Xy) and exits downward as light A222(P). Since the sub-layer 103(Xy) is a layer that functions as the region H and has an Re(550) of more than 275 nm, the light A222(P) that has been transmitted through the sub-layer 103(Xy) has a variety in polarization state for wavelengths. However, as the brightness values of light do not have a variety for wavelengths, the light A222(P) is not observed as light having a particular chromatic color. The theoretical value of brightness of the light A222(P) is the same as that of the light A221(X).

The light A222(P) is further transmitted through the layer 102(Xy) and exits downward as light A223(P) in which a polarization state is further changed. The theoretical value of brightness of the light A223(P) is the same as that of the light A222(P).

The light A223(P) that has exited downward reaches the upper surface 101(R)U of the light reflective layer 101(R). Since the light reflective layer 101(R) is a clockwise reflective circular polarizer, a clockwise circularly polarized light component of the light A223(P) is reflected by the surface or the inside of the light reflective layer 101(R) to become reflected light A224(R)(Ch). Since the light A223(P) has a variety in polarization state for wavelengths, among lights having various wavelengths contained in the light A223(P), light, having a wavelength at which a large amount of the clockwise circularly polarized light component is contained, exits the light reflective layer 101(R) in a relatively larger amount. As a result, the light A224(R)(Ch) is observed as light with a certain chromatic color. Although the theoretical value of brightness of the light A224(R) varies depending on the polarization state of the light A223(P), the theoretical value is a value smaller than that of the light A223(P), and is about a half of that of the light A223(P). On the other hand, a counterclockwise circularly polarized light component of the light A223(P) is transmitted through the light reflective layer 101(R) to become transmitted light A229 (L) (Ch) .

The light A224(R)(Ch) is transmitted through the layer 102(Xy) and exits upward as light A225(Y)(Ch). Since the light A224(R) is clockwise circularly polarized light and the layer 102(Xy) is a $\lambda/4$ wavelength plate having a slow axis in the Xy direction, the light A225(Y)(Ch) becomes linearly polarized light having a polarization direction in the Y-axis direction, and the color and the theoretical value of brightness thereof are the same as those of the light A224(R).

The light A225(Y)(Ch) is transmitted through the sub-layer 103(Xy) and exits the display surface of the optical display medium 100 as light A226(P)(Ch). Since the sub-layer 103(Xy) is a layer that functions as the region H and has an Re(550) of more than 275 nm, the light A226(P)(Ch) that has been transmitted through the sub-layer 103(Xy) has a variety in polarization state for wavelengths. However, since the brightness of the light A226(P)(Ch) for each wavelength is the same as that of the light A225(Y)(Ch), the color and the theoretical value of brightness of the light A226(P)(Ch) are the same as those of the light A225(Y)(Ch).

The incident light A231(X) is transmitted through the sub-layer 103(Xy) and exits downward as light A232(P). Since the sub-layer 103(Xy) is a layer that functions as the region H and has an Re(550) of more than 275 nm, the light A232(P) that has been transmitted through the sub-layer 103(Xy) has a variety in polarization state for wavelengths. However, as the brightness values of light do not have a variety for wavelengths, the light A232(P) is not observed as light having a particular chromatic color. The theoretical value of brightness of the light A232(P) is the same as that of the light A231(X).

The light A232(P) is further transmitted through the layer 102(N) and exits downward as light A233(P). While the light A222(P) in the region R2 is transmitted through the layer 102(Xy) to become the light A223(P) having a further changed polarization state, since the light A233(P) is light that has been transmitted not through the layer 102(Xy) but through the isotropic layer 102(N), the polarization state of the light A233(P) is different from that of the light A223(P). However, as the brightness values of light do not have a variety for wavelengths, the light A233(P) is not observed as light having a particular chromatic color. The theoretical value of brightness of the light A233(P) is the same as that of the light A232(P).

The light A233(P) that has exited downward reaches the upper surface 101(R)U of the light reflective layer 101(R). Since the light reflective layer 101(R) is a clockwise reflective circular polarizer, a clockwise circularly polarized light component of the light A233(P) is reflected by the surface or the inside of the light reflective layer 101(R) to become reflected light A234(R)(Ch). Since the light A233(P) has a variety in polarization state for wavelengths, among lights having various wavelengths contained in the light A233(P), light, having a wavelength at which a large amount of the clockwise circularly polarized light component is contained, is reflected by the light reflective layer 101(R) in a relatively larger amount. As a result, the light A234(R)(Ch) is observed as light with a certain chromatic color. Since the polarization state of the light A233(P) is different from that of the light A223(P), the color of the light A234(R)(Ch) is different from that of the light A224(R)(Ch). Although the theoretical value of brightness of the light A234(R) varies depending on the polarization state of the light A233(P), the theoretical value is a value smaller than that of the light A233(P), and is about a half of that of the light A233(P). On the other hand, a counterclockwise circularly polarized light component of the light A233(P) is transmitted through the light reflective layer 101(R) to become transmitted light A239(L) (Ch).

The light A234(R)(Ch) is transmitted through the layer 102(N) and exits upward as light A235(R)(Ch). Since the light A234(R) is clockwise circularly polarized light and the layer 102(N) is an isotropic layer, the color and the theoretical value of brightness of the light A235(R)(Ch) are the same as those of the light A234(R).

The light A235(R)(Ch) is transmitted through the sub-layer 103(Xy) and exits the display surface of the optical display medium 100 as light A236(P)(Ch). Since the sub-layer 103(Xy) is a layer that functions as the region H and has an Re(550) of more than 275 nm, the light A236(P) (Ch) that has been transmitted through the sub-layer 103(Xy) has a variety in polarization state for wavelengths. However, since the brightness of the light A236(P)(Ch) for each wavelength is the same as that of the light A235(R)(Ch), the color and the theoretical value of brightness of the light A236(P)(Ch) are the same as those of the light A235(R)(Ch). The color of the light A236(P)(Ch) is different from that of the light A226 (P) (Ch) .

The incident light A241(X) is transmitted through the layer 102(N), exits downward as light A242(X) that is linearly polarized light, and reaches the upper surface 101(R)U of the light reflective layer 101(R). A clockwise circularly polarized light component of the light A242(X) is reflected to become reflected light A243(R). The theoretical value of brightness of the light is a half of that of the incident light. On the other hand, a counterclockwise circularly polarized light component of the light A242(X) is transmitted through the light reflective layer 101(R) to become transmitted light A249 (L) .

The light A243(R) is transmitted again through the layer 102(N) and exits the display surface of the optical display medium 100 as light A244(R). The theoretical value of brightness of the light A244(R) is the same as that of the light A243(R).

FIG. 6 is an exploded side view schematically illustrating an example of a method of using the optical display medium of the present invention when the relative angle relationship between the optical display medium and the vibration direction of the incident linearly polarized light is changed from that in the example of FIG. 5. FIG. 6 illustrates the optical display medium 100 whose angle relative to the axes of coordinates being fixed, with the linear polarizer for observation whose angles of the vibration direction relative to the X-axis and the Y-axis being changed. In actual use, however, the relative angle relationship may be changed by any of movement of the optical display medium, movement of the light source, exchange of the light source, and a combination of two or more thereof.

As a result of the change in the angle relationship, the example of FIG. 6 is presented as a modified example in which the light incident on the optical display medium 100 is linearly polarized light having a vibration direction in the Y-axis direction. That is, the incident lights A211(Y), A221(Y), A231(Y), and A241(Y) are incident on regions R1 to R4 of the patterned phase difference layer 110, respectively. In this example, the incident lights A211(Y) to A241(Y) are linearly polarized light having a vibration direction in the Y-axis direction.

The incident light A211(Y) is transmitted through the layer 102(Xy), exits downward as light A212(R) that is clockwise circularly polarized light, and reaches the upper surface 101(R)U of the light reflective layer 101(R). Since the light reflective layer 101(R) is a clockwise reflective circular polarizer, the entirety of the light A212(R) is reflected by the light reflective layer 101(R) to become reflected light A213(R). The theoretical value of brightness of the light A213(R) is the same as that of the light A212(R). On the other hand, the theoretical value of brightness of transmitted light A219(n) that is transmitted through the light reflective layer 101(R) becomes zero.

The light A213(R) is transmitted again through the layer 102(Xy), and exits the display surface of the optical display medium 100 as light A214(Y). The theoretical value of brightness of the light A214(Y) is the same as that of the

light A213(R).

The incident light A221(Y) is transmitted through the sub-layer 103(Xy) and exits downward as light A222'(P). Since the sub-layer 103(Xy) is a layer that functions as the region H and has an Re(550) of more than 275 nm, the light A222'(P) that has been transmitted through the sub-layer 103(Xy) has a variety in polarization state for wavelengths. Furthermore, since the polarization state of the incident light A221(Y) is significantly different from that of the light A221(X) in FIG. 5, the polarization state of the light A222'(P) is significantly different from that of the light A222(P) in FIG. 5. However, as the brightness values of light do not have a variety for wavelengths, the light A222'(P) is not observed as light having a particular chromatic color. The theoretical value of brightness of the light A222'(P) is the same as that of the light A221(Y).

The light A222'(P) is further transmitted through the layer 102(Xy) and exits downward as light A223'(P) whose polarization state is further changed. Since the polarization state of the incident light A222'(P) is significantly different from that of the light A222(P) in FIG. 5, the polarization state of the light A223'(P) is significantly different from that of the light A223(P) in FIG. 5. The theoretical value of brightness of the light A223'(P) is the same as that of the light A222'(P).

The light A223'(P) that has exited downward reaches the upper surface 101(R)U of the light reflective layer 101(R). Since the light reflective layer 101(R) is a clockwise reflective circular polarizer, a clockwise circularly polarized light component of the light A223'(P) is reflected by the surface or the inside of the light reflective layer 101(R) to become reflected light A224' (R) (Ch). Since the light A223'(P) has a variety in polarization state for wavelengths, among lights having various wavelengths contained in the light A223'(P), light, having a wavelength at which a large amount of the clockwise circularly polarized light component is contained, is reflected by the light reflective layer 101(R) in a relatively larger amount. As a result, the light A224'(R)(Ch) is observed as light with a certain chromatic color. Since the polarization state of the incident light A223'(P) is significantly different from that of the light A223(P) in FIG. 5, the color of the light A224'(R)(Ch) is significantly different from that of the light A224(R)(Ch) in FIG. 5. Although the theoretical value of brightness of the light A224'(R) varies depending on the polarization state of the light A223'(P), the theoretical value is a value smaller than that of the light A223'(P), and is about a half of that of the light A223'(P). On the other hand, the counterclockwise circularly polarized light component of the light A223'(P) is transmitted through the light reflective layer 101(R) to become transmitted light A229'(L)(Ch).

The light A224'(R)(Ch) is transmitted through the layer 102(Xy) and exits upward as light A225'(Y)(Ch). Since the light A224'(R) is clockwise circularly polarized light and the layer 102(Xy) is a $\lambda/4$ wavelength plate having a slow axis in the Xy direction, the light A225'(Y)(Ch) becomes linearly polarized light having a polarization direction in the Y-axis direction. The color and the theoretical value of brightness thereof are the same as those of the light A224'(R), and are significantly different from those of the light A225(Y)(Ch) in FIG. 5.

The light A225'(Y)(Ch) is transmitted through the sub-layer 103(Xy) and exits the display surface of the optical display medium 100 as light A226'(P)(Ch). Since the sub-layer 103(Xy) is a layer that functions as the region H and has an Re(550) of more than 275 nm, the light A226'(P)(Ch) that has been transmitted through the sub-layer 103(Xy) has a variety in polarization state for wavelengths. However, since the brightness of the light A226'(P)(Ch) for each wavelength is the same as that of the light A225'(Y)(Ch), the color and the theoretical value of brightness of the light A226'(P)(Ch) are the same as those of the light A225'(Y)(Ch). Therefore, they are significantly different from those of the light A226(P)(Ch) in FIG. 5.

The incident light A231(Y) is transmitted through the sub-layer 103(Xy) and exits downward as light A232'(P). Since the sub-layer 103(Xy) is a layer that functions as the region H and has an Re(550) of more than 275 nm, the light A232'(P) that has been transmitted through the sub-layer 103(Xy) has a variety in polarization state for wavelengths. Furthermore, since the polarization state of the incident light A231(Y) is significantly different from that of the light A231(X) in FIG. 5, the polarization state of the light A232'(P) is significantly different from that of the light A232(P) in FIG. 5. However, as the brightness values of light do not have a variety for wavelengths, the light A232'(P) is not observed as light having a particular chromatic color. The theoretical value of brightness of the light A232'(P) is the same as that of the light A231(Y).

The light A232'(P) is further transmitted through the layer 102(N) and exits downward as light A233'(P). While the light A222'(P) in the region R2 is transmitted through the layer 102(Xy) to become the light A223'(P) having a further changed polarization state, since the light A233'(P) is light that has been transmitted not through the layer 102(Xy) but through the isotropic layer 102(N), the polarization state of the light A233'(P) is different from that of the light A223'(P). Furthermore, since the polarization state of the incident light A232'(P) is significantly different from the light A232(P) in FIG. 5, the polarization state of the light A233'(P) is significantly different from that of the light A233(P) in FIG. 5. However, as the brightness values of light do not have a variety for wavelengths, the light A233'(P) is not observed as light having a particular chromatic color. The theoretical value of brightness of the light A233'(P) is the same as that of the light A232'(P).

The light A233'(P) that has exited downward reaches the upper surface 101(R)U of the light reflective layer 101(R). Since the light reflective layer 101(R) is a clockwise reflective circular polarizer, a clockwise circularly polarized light component of the light A233'(P) is reflected by the surface or the inside of the light reflective layer 101(R) to become reflected light A234' (R) (Ch). Since the light A233'(P) has a variety in polarization state for wavelengths, among lights

having various wavelengths contained in the light A233'(P), light, having a wavelength at which a large amount of the clockwise circularly polarized light component is contained, is reflected by the light reflective layer 101(R) in a relatively larger amount. As a result, the light A234'(R)(Ch) is observed as light with a certain chromatic color. Since the polarization state of the incident light A233'(P) is significantly different from that of the light A233(P) in FIG. 5, the color of the light A234'(R)(Ch) is significantly different from that of the light A234(R)(Ch) in FIG. 5. Furthermore, since the polarization state of the light A233'(P) is different from that of the light A223'(P), the color of the light A234'(R)(Ch) is different from that of the light A224'(R)(Ch). Although the theoretical value of brightness of the light A234'(R) varies depending on the polarization state of the light A233'(P), the theoretical value is a value smaller than that of the light A233'(P), and is about a half of that of the light A233'(P). On the other hand, a counterclockwise circularly polarized light component of the light A233'(P) is transmitted through the light reflective layer 101(R) to become transmitted light A239'(L) (Ch).

The light A234'(R)(Ch) is transmitted through the layer 102(N) and exits upward as light A235'(R)(Ch). Since the light A234'(R) is clockwise circularly polarized light and the layer 102(N) is an isotropic layer, the color and the theoretical value of brightness of the light A235'(R)(Ch) are the same as those of the light A234'(R).

The light A235'(R)(Ch) is transmitted through the sub-layer 103(Xy) and exits the display surface of the optical display medium 100 as light A236'(P)(Ch). Since the sub-layer 103(Xy) is a layer that functions as the region H and has an Re(550) of more than 275 nm, the light A236'(P)(Ch) that has been transmitted through the sub-layer 103(Xy) has a variety in polarization state for wavelengths. However, since the brightness of the light A236'(P)(Ch) for each wavelength is the same as that of the light A235'(R)(Ch), the color and the theoretical value of brightness of the light A236'(P)(Ch) are the same as those of the light A235'(R)(Ch), and are significantly different from those of the light A236(P)(Ch) in FIG. 5. The color of the light A236'(P)(Ch) is different from that of the light A226' (P) (Ch) .

The incident light A241(Y) is transmitted through the layer 102(N), exits downward as light A242(Y) that is linearly polarized light, and reaches the upper surface 101(R)U of the light reflective layer 101(R). A clockwise circularly polarized light component of the light A242(Y) is reflected to become reflected light A243(R). The theoretical value of brightness of the light is a half of that of the incident light. On the other hand, a counterclockwise circularly polarized light component of the light A242(Y) is transmitted through the light reflective layer 101(R) to become transmitted light A249(L) .

The light A243(R) is transmitted again through the layer 102(N) and exits the display surface of the optical display medium 100 as light A244(R). The theoretical value of brightness of the light A244(R) is the same as that of the light A243(R).

As a result of the foregoing, in polarized light-unpolarized light observation of the optical display medium 100 on which linearly polarized light having a vibration direction in the X-axis direction is incident as shown in FIG. 5, the region R1 is observed as an achromatic region of relatively dark and approximately black without reflected light, and the region R4 is observed as a relatively bright achromatic region having reflected light with brightness equivalent to a half of that of the incident light. The regions R2 and R3 are observed as chromatic regions that have approximately the same brightness as the region R4 and are different in color from each other, and their appearances are different from each other.

On the other hand, in polarized light-unpolarized light observation of the optical display medium 100 on which linearly polarized light having a vibration direction in the Y-axis direction is incident as shown in FIG. 6, the region R1 is observed as a relatively bright achromatic region having reflected light with brightness equivalent to that of the incident light. On the other hand, the region R4 is observed as an achromatic region having reflected light with brightness equivalent to a half of brightness of the incident light. Although the brightness of the region R4 is not changed from the case shown in FIG. 5, the region R4 in this example is observed as a region that is relatively darker than the region R1. The regions R2 and R3 are observed as chromatic regions that have approximately the same brightness as the region R4, and have colors that are different from each other and also different from those observed in the example of FIG. 5. The appearances thereof are different from each other and are also different from the appearance observed in the example of FIG. 5.

Therefore, by changing the relative angle relationship between the optical display medium and the vibration direction of the linearly polarized light from the relationship in the example of FIG. 5 to the relationship in the example of FIG. 6, the relative brightness between the plurality of regions is changed. More specifically, when the direction of the vibration direction of the linearly polarized light is changed by rotation around an axis parallel to the Z-axis direction from the state in the X-axis direction in FIG. 5, the relative brightness of the region R1 is increased with an increase in the angle of rotation. When the direction of the vibration direction of the linearly polarized light reaches the state in the Y-axis direction in FIG. 6, the relative brightness becomes the highest. Furthermore, the colors observed in the regions R2 and R3 are changed.

Results in usual observation of the optical display medium 100 on which unpolarized light is incident are the same as those described with reference to FIGs. 1, 2, and 4, that is, the regions R1 to R4 are all observed as achromatic regions with the same brightness, and these differences between the regions are not recognized.

In this example, the optical display medium of the present invention can exhibit a special effect in which a difference between the regions is not observed in usual observation, a difference in color and relative brightness between

regions is observed only with the linearly polarized light as a light source, and the color and brightness of each region are changed by changing the angle of polarized light. Such a special effect cannot be obtained by a duplicated product that is easily obtained through a general technique such as printing. Therefore, the optical display medium of the present invention exerts a high anti-counterfeiting property and functions as an identification medium by the comparison of the observation results obtained by using the medium in such a usual observation and using the medium in a plurality of types of unpolarized light-polarized light observations. As a result of the expression of the chromatic color and the change in color and brightness, the optical display medium of the present invention can also exhibit the design effect as a decorative medium.

Polarized light-unpolarized light observation may be achieved when linearly polarized light is used as incident light for observation. Such observation can be achieved by an easy operation of visually observing the optical display medium with an electronic apparatus that emits linearly polarized light, such as a smartphone, being placed in proximity of the display medium. Accordingly, the optical display medium of the present invention can easily exert the identification function as the identification medium and the design effect as the decorative medium in such use.

The examples described above illustrate examples in which incident light is linearly polarized light (the incident lights A211(X) to A241(X) and the incident lights A211(Y) to A241(Y)), but the present invention is not limited to these examples. As incident light, polarized light other than linearly polarized light may also be used.

As an example, clockwise circularly polarized light, counterclockwise circularly polarized light, or a combination thereof may be used as incident light instead of linearly polarized light. When lights from the regions R1 to R4 are observed using clockwise circularly polarized light as incident light, the brightness values of the lights (relative theoretical values when the brightness of the incident light is regarded as 100) are 50, about 50, about 50, and 100, respectively. The region R4 is observed as a relatively bright region. The regions R1 and R4 are observed as achromatic regions, and the regions R2 and R3 are observed as chromatic regions that are different in color from each other.

When lights from the regions R1 to R4 are observed using counterclockwise circularly polarized light as incident light, the brightness values of the lights are 50, about 50, about 50, and 0, respectively. The region R4 is observed as a relatively dark region. The regions R1 and R4 are observed as achromatic regions, and the regions R2 and R3 are observed as chromatic regions that are different in color from each other. The colors thereof are different from the colors in the observation using clockwise circularly polarized light.

Therefore, by a relative change in brightness according to contrast of two or more of usual observation in which unpolarized light is incident, polarized light-unpolarized light observation in which clockwise circularly polarized light is made incident, and polarized light-unpolarized light observation in which counterclockwise circularly polarized light is made incident, the identification function and the design effect can be exhibited. Some electronic apparatuses, such as a smartphone, provided with a certain type of protection film emit circularly polarized light. When such an electronic apparatus that emits circularly polarized light is placed in proximity of the optical display medium and the optical display medium is visually observed, the observation described above can be achieved.

[Optical display medium: Second Embodiment]

FIGs. 1 to 2 and 4 to 6 illustrate the optical display medium 100 including the reflective circular polarizer as a light reflective layer and the layer in which the region I functions as a λ/4 wavelength plate as a patterned phase difference layer. However, the optical display medium of the present invention is not limited thereto, and may have other configurations. For example, the optical display medium of the present invention may include a reflective linear polarizer as a light reflective layer, and a layer in which the region I functions as a λ/2 wavelength plate as a patterned phase difference layer. Such an example will be described below with reference to FIGs. 7 to 10.

FIG. 7 is an exploded side view schematically illustrating another example of the optical display medium of the present invention and a method for using the same. In FIG. 7, an optical display medium 200 includes a light reflective layer 201(Y) and a patterned phase difference layer 210.

The patterned phase difference layer 210 is a layered body including a plurality of sub-layers 202 and 103(Xy). Only a part of the sub-layer 202 is a layer 202(Xy) that functions as a λ/2 wavelength plate. The other part of the sub-layer 202 is an isotropic layer 202(N), which is not different from the layer 102(N) in FIGs. 1 to 2 and FIGs. 4 to 6. The sub-layer 103(Xy) is also not different from the sub-layer 103(Xy) in FIGs. 1 to 2 and FIGs. 4 to 6, and the entire region thereof is a layer having a uniform phase difference. That is, the patterned phase difference layer 210 has the same configuration as the patterned phase difference layer 110 except that the patterned phase difference layer 210 includes the layer 202(Xy) that functions as a λ/2 wavelength plate instead of the layer 102(Xy) that functions as a λ/4 wavelength plate.

In this example, the entire region of the upper surface 201(Y)U of the light reflective layer 201(Y) is a display surface region, that is, a region corresponding to the display surface of the optical display medium. The sub-layer 202 is disposed to be on the light reflective layer 101(R) in such a manner that it occupies the entire region of the display surface region. The sub-layer 103(Xy) is disposed to be on the sub-layer 202 in such a manner that it occupies only a

part of the display surface region. By having such a configuration of the sub-layers 202 and 103(Xy), the patterned phase difference layer 210 has regions S1 to S4 that are four types of regions having different phase differences.

In the optical display medium 200 in the example of FIG. 7, an upper surface on the patterned phase difference layer 210 side (i.e., an upper surface 202U of the sub-layer 202 in the regions S1 and S4 and an upper surface 103(U) of the sub-layer 103(Xy) in the regions S2 and S3) functions as a display surface. That is, a part of light incident on the upper surface on the patterned phase difference layer 210 side is reflected by the optical display medium 200 and exits the upper surface, and the light is observed by an observer. Thus, the function as the optical display medium is expressed.

In the example of FIG. 7, a reflective linear polarizer having a transmission axis positioned in the Y-axis direction is adopted as the light reflective layer 201(Y). That is, the light reflective layer 201(Y) transmits a linearly polarized light component having a vibration direction in the Y-axis direction and reflects a linearly polarized light component having a vibration direction in the X-axis direction among light incident on the upper surface 201(Y)U.

In the example of FIG. 7, as the layer 202(Xy) and the sub-layer 103(Xy) have a phase difference, the region S1 is a region where the phase difference of the layer 202(Xy) is expressed, the region S3 is a region where the phase difference of the sub-layer 103(Xy) is expressed, and the region S4 is a region where the phase difference is not expressed.

In the region S2, the layer 202(Xy) overlaps with the sub-layer 103(Xy). When the patterned phase difference layer includes the plurality of sub-layers and each of the sub-layers has a phase difference in at least a portion of the region in the plane thereof, the portions having such a phase difference may be in a stacked state. As a result, both phase differences of the stacked layers having a phase difference are expressed. As a result, the degree of freedom in the expression of phase difference is enhanced, and the degree of freedom in the color imparted to the region H in the unpolarized light-polarized light observation and the polarized-unpolarized observation can be enhanced.

In the example of FIG. 7, a value of the in-plane retardation Re of each of the layer 202(Xy) and the sub-layer 103(Xy) in the patterned phase difference layer 210 may be adjusted such that any one or more of the regions S1 to S3 satisfy the requirements for the regions H described above. Among the regions S1 to S3, a region other than the region that satisfies the requirement for the region H may be the region I. The region I may be a region that functions as a λ/4 wavelength plate or a region that functions as a λ/2 wavelength plate as described above.

In the example described below, a typical example will be described in which the layer 202(Xy) functions as a λ/2 wavelength plate and has an Re(550) of 275 nm, and the sub-layer 103(Xy) functions as the region H and has an Re(550) of more than 275 nm. Therefore, in the following example, among the regions S1 to S3, the region S1 functions as a λ/2 wavelength plate, and the regions S2 and S3 function as the region H, and in particular, the region S2 becomes the region H having an in-plane retardation Re larger than the region S3. However, when Re(550) of the sub-layer 103(Xy) is close to 275 nm and the sub-layer 103 satisfies other requirements to function as the region H, the region S3 can function as both the region H and the λ/2 wavelength plate.

[Method for using optical display medium of Second Embodiment: part 1 : unpolarized light-polarized light observation]

In the example of FIG. 7, light incident on the optical display medium 200 is unpolarized light, and the light reflective layer 201(Y) included in the optical display medium 200 is a reflective linear polarizer. Observation of the reflected light in the unpolarized light-polarized light observation of such an optical display medium may be performed by selective observation of the linearly polarized light component. FIG. 7 illustrates an example in which the reflected light from the optical display medium 200 is observed through a linear polarizer for observation 191(X). In this example, the linear polarizer for observation 191(X) is the same as that shown in FIGs. 1 to 2, and is a polarizer positioned at an angle relative to the optical display medium 200 so as to have a transmission axis in the X-axis direction. Therefore, in this example, the slow axes of the layer 202(Xy) and the sub-layer 103(Xy) are inclined 45° counterclockwise with respect to the transmission axis of the linear polarizer for observation 191(X). The transmission axis of the light reflective layer 201(Y) is orthogonal to the transmission axis of the linear polarizer for observation 191(X).

In the example of using the optical display medium 200 shown in FIG. 7, incident lights A311(N), A321(N), A331(N), and A341(N), which are unpolarized light, are incident on the regions S1 to S4 of the patterned phase difference layer 202, respectively. The incident lights A311(N) to A341(N) are unpolarized light that is visually recognizable as light of an achromatic color with uniform distribution of wavelength.

The incident light A311(N) is transmitted through the layer 202(Xy), exits downward as light A312(N) that is unpolarized light, and reaches the upper surface 201(Y)U of the light reflective layer 201(Y). Since the light reflective layer 201(Y) is a reflective linear polarizer having a transmission axis positioned in the Y-axis direction, the linearly polarized light component, having a vibration direction in the X-axis direction, of the light A312(N) is reflected to become reflected light A313(X). The theoretical value of brightness of the light A313(X) is a half of that of the incident light. On the other hand, a linearly polarized light component, having a vibration direction in the Y-axis direction, of the light A312(N) is transmitted through the light reflective layer 201(Y) to become transmitted light A319(Y).

The light A313(X) is transmitted again through the layer 202(Xy) and exits the display surface of the optical display medium 200 as light A314(Y). Since the light A313(X) is linearly polarized light having a vibration direction in the

X-axis direction and the layer 202(Xy) is a λ/2 wavelength plate having a slow axis in the Xy direction, the light A314(Y) becomes linearly polarized light having a polarization direction in the Y-axis direction, and the theoretical value of brightness thereof is the same as that of the light A313(X).

In usual observation of the region S1, the light A314(Y) is observed without intervention of the linear polarizer for observation 191(X). In unpolarized light-polarized light observation of the region S1, the state wherein the light A314(Y) having been incident on the linear polarizer for observation 191(X) becomes outgoing light A315(n) is observed. When the light A314(Y) that exits the region S1 of the patterned phase difference layer 210 is incident on the linear polarizer for observation 191(X), since the vibration direction of polarized light of the light A314(Y) and the transmission axis of the linear polarizer for observation 191(X) are orthogonal to each other, the light A314(Y) is totally blocked, and the theoretical value of brightness of the outgoing light A315(n) from the linear polarizer for observation 191(X) becomes zero.

When the layer 202(Xy) is an ideal λ/2 wavelength plate having a value of Re(λ)/λ being constant in the entire wavelength range of visible light, the light A314(Y) becomes linearly polarized light having a polarization direction in the Y-axis direction in the entire wavelength range of visible light, and the brightness of the outgoing light A315(n) in the entire wavelength range of visible light can be zero. On the other hand, when the layer 202(Xy) is a non-ideal λ/2 wavelength plate having a value of Re(λ)/λ being not constant in the entire wavelength range of visible light, the in-plane retardation Re of the light A314(Y) is a value with an error apart from λ/2 in a wavelength range of visible light. Thus, the outgoing light can be elliptically polarized light, and the brightness of the outgoing light A315(n) is not zero in the wavelength range. Therefore, in unpolarized light-polarized light observation of the region S1, a chromatic color can be observed. In this case, in addition to the regions S2 and S3, the region S1 may also function as the region H.

The incident light A321(N) is transmitted through the sub-layer 103(Xy), exits downward as light A322(N) that is unpolarized light, is further transmitted through the layer 202(Xy), exits downward as light A323(N) that is unpolarized light, and reaches the upper surface 201(Y)U of the light reflective layer 201(Y). Since the light reflective layer 201(Y) is a reflective linear polarizer having a transmission axis positioned in the Y-axis direction, the linearly polarized light component, having a vibration direction in the X-axis direction, of the light A323(N) is reflected by the surface or the inside of the light reflective layer 201(Y) to become reflected light A324(X). The theoretical value of brightness of the light A324(X) is a half of that of the incident light. On the other hand, a linearly polarized light component, having a vibration direction in the Y-axis direction, of the light A323(N) is transmitted through the light reflective layer 201(Y) to become transmitted light A329(Y).

The light A324(X) is transmitted through the layer 202(Xy) and exits upward as light A325(Y). Since the light A324(X) is linearly polarized light having a vibration direction in the X-axis direction and the layer 202(Xy) is a λ/2 wavelength plate having a slow axis in the Xy direction, the light A325(Y) becomes linearly polarized light having a polarization direction in the Y-axis direction, and the theoretical value of brightness thereof is the same as that of the light A324(X).

The light A325(Y) is transmitted through the sub-layer 103(Xy) and exits the display surface of the optical display medium 200 as light A326(P). Since the sub-layer 103(Xy) is a layer that functions as the region H and has an Re(550) of more than 275 nm, the light A326(P) that has been transmitted through the sub-layer 103(Xy) has a variety in polarization state for wavelengths. However, the brightness values of the light do not have a variety for wavelengths. Therefore, in usual observation of the region S2, the light A326(P) is not observed as light having a particular chromatic color. The theoretical value of brightness of the light A326(P) is the same as that of the light A325(Y).

In unpolarized light-polarized light observation of the region S2, the state wherein the light A326(P) having been incident on the linear polarizer for observation 191(X) becomes outgoing light A327(X) (Ch) is observed. When the light A326(P) is incident on the linear polarizer for observation 191(X), only a linearly polarized light component, having a vibration direction in the X-axis direction, of the light A326(P) exits the linear polarizer for observation 191(X) as the outgoing light A327(X) (Ch). Since the light A326(P) has a variety in polarization state for wavelengths, among lights having various wavelengths contained in the light A326(P), light, having a wavelength at which a large amount of the linearly polarized light component having a vibration direction in the X-axis direction is contained, exits the linear polarizer for observation 191(X) in a relatively larger amount. As a result, in unpolarized light-polarized light observation of the region S2, the light A327(X) (Ch) is observed as light with a certain chromatic color. Although the theoretical value of brightness of the light A327(X) (Ch) varies depending on the polarization state of the light A326(P), the theoretical value is a value smaller than that of the light A326(P), and is about a half of that of the light A326(P) .

The incident light A331(N) is transmitted through the sub-layer 103(Xy), exits downward as light A332(N) that is unpolarized light, is further transmitted through the layer 202(N), exits downward as light A333(N) that is unpolarized light, and reaches the upper surface 201(Y)U of the light reflective layer 201(Y). Since the light reflective layer 201(Y) is a reflective linear polarizer having a transmission axis positioned in the Y-axis direction, the linearly polarized light component, having a vibration direction in the X-axis direction, of the light A333(N) is reflected by the surface or the inside of the light reflective layer 201(Y) to become reflected light A334(X). The theoretical value of brightness of the light A334(X) is a half of that of the incident light. On the other hand, a linearly polarized light component, having a

vibration direction in the Y-axis direction, of the light A333(N) is transmitted through the light reflective layer 201(Y) to become transmitted light A339(Y).

The light A334(X) is transmitted through the layer 202(N) and exits upward as light A335(X). The light A335(X) is transmitted through the sub-layer 103(Xy) and exits the display surface of the optical display medium 200 as light A336(P). Since the sub-layer 103(Xy) is a layer that functions as the region H and has an Re(550) of more than 275 nm, the light A336(P) that has been transmitted through the sub-layer 103(Xy) has a variety in polarization state for wavelengths. Since the light A326(P) is light that has first become circularly polarized light and then transmitted also through the layer 202(Xy) that is another layer having a phase difference whereas the light A336(P) is light that has been transmitted not through the layer 202(Xy) but through the isotropic layer 202(N), the polarization state of the light A336(P) is different from that of the light A326(P) that exits the region S2. However, the brightness values of the light A336(P) do not have a variety for wavelengths, in the same manner as the light A326(P). Therefore, in usual observation of the region S3, the light A336(P) is not observed as light having a particular chromatic color. The theoretical value of brightness of the light A336(P) is the same as that of the light A335(X).

On the other hand, in unpolarized light-polarized light observation of the region S3, the state wherein the light A336(P) having been incident on the linear polarizer for observation 191(X) becomes outgoing light A337(X)(Ch) is observed. When the light A336(P) is incident on the linear polarizer for observation 191(X), only a linearly polarized light component, having a vibration direction in the X-axis direction, of the light A336(P) exits the linear polarizer for observation 191(X) as the outgoing light A337(X)(Ch). Since the light A336(P) has a variety in polarization state for wavelengths, among lights having various wavelengths contained in the light A336(P), light, having a wavelength at which a large amount of the linearly polarized light component having a vibration direction in the X-axis direction is contained, exits the linear polarizer for observation 191(X) in a relatively larger amount. As a result, in unpolarized light-polarized light observation of the region S3, the light A337(X)(Ch) is observed as light with a certain chromatic color. However, since the polarization state of the light A336(P) is different from that of the light A326(P), the color of the light A337(X)(Ch) is different from that of the light A327(X)(Ch). Although the theoretical value of brightness of the light A337(X)(Ch) varies depending on the polarization state of the light A336(P), the theoretical value is a value smaller than that of the light A336(P), and is about a half of that of the light A336(P).

The incident light A341(N) is transmitted through the layer 202(N), exits downward as light A342(N) that is unpolarized light, and reaches the upper surface 201(Y)U of the light reflective layer 201(Y). A linearly polarized light component, having a vibration direction in the X-axis direction, of the light A342(N) is reflected to become reflected light A343(X). The theoretical value of brightness of the light A343(X) is a half of that of the incident light. On the other hand, a linearly polarized light component, having a vibration direction in the Y-axis direction, of the light A342(N) is transmitted through the light reflective layer 201(Y) to become transmitted light A349(Y).

The light A343(X) is transmitted again through the layer 202(N) and exits the display surface of the optical display medium 200 as light A344(X). The theoretical value of brightness of the light A344(X) is the same as that of the light A343(X).

In usual observation of the region S4, the light A344(X) is observed without intervention of the linear polarizer for observation 191(X). On the other hand, in unpolarized light-polarized light observation of the region S4, the state wherein the light A344(X) having been incident on the linear polarizer for observation 191(X) becomes outgoing light A345(X) is observed. That is, when the light A344(X) that exits the region S4 of the patterned phase difference layer 210 is incident on the linear polarizer for observation 191(X), since the vibration direction of polarized light of the light A344(X) and the transmission axis of the linear polarizer for observation 191(X) are parallel to each other, the entirety of the light A344 exits the linear polarizer for observation 191(X) as the outgoing light A345(X). The theoretical value of brightness of the outgoing light A345(X) is the same as that of the light A344(X).

FIG. 8 is an exploded side view schematically illustrating an example of the method for using the optical display medium of the present invention when a relative angle relationship between the optical display medium and the linear polarizer for observation is changed from that in the example of FIG. 7. FIG. 8 illustrates the optical display medium 200 whose angle relative to the axes of coordinates being fixed, with the linear polarizer for observation whose angle relative to the X-axis and the Y-axis being changed. In actual use, however, the relative angle relationship may be changed by any of movement of the optical display medium, movement of the linear polarizer for observation, exchange of the linear polarizer for observation, and a combination of two or more thereof.

As a result of change of the angle relationship, the example of FIG. 8 is presented as a modified example in which a linear polarizer for observation 191(Y) is used as the linear polarizer for observation. The linear polarizer for observation 191(Y) is a polarizer positioned at an angle relative to the optical display medium 200 so as to have a transmission axis in the Y-axis direction. Therefore, in this example, the slow axis of the layer 202(Xy) is inclined at 45° clockwise with respect to the transmission axis of the linear polarizer for observation 191(Y).

In the example of using the optical display medium 200 shown in FIG. 8, the incident lights A311(N) to A341(N) that are unpolarized light are incident on the regions S1 to S4 of the patterned phase difference layer 210, respectively, and parts of the respective lights exit the display surface of the optical display medium 200 as lights A314(Y), A326(P),

A336(P), and A344(X), respectively. The paths of lights up to this stage are the same as those in the example of FIG. 7.

When the outgoing light A314(Y) is incident on the linear polarizer for observation 191(Y), since the vibration direction of polarized light of the light A314(Y) and the transmission axis of the linear polarizer for observation 191(Y) are parallel to each other, the light A314(Y) is totally transmitted and exits the linear polarizer for observation 191(Y) as outgoing light A315(Y). The theoretical value of the brightness of the outgoing light A315(Y) is the same value as that of the light A314(Y).

When the outgoing light A326(P) is incident on the linear polarizer for observation 191(Y), only a linearly polarized light component, having a vibrating direction in the Y-axis direction, of the light A326(P) exits the linear polarizer for observation 191(Y) as outgoing light A327(Y)(Ch). Since the light A326(P) has a variety in polarization state for wavelengths, among lights having various wavelengths contained in the light A326(P), light, having a wavelength at which a large amount of the linearly polarized light component having a vibration direction in the Y-axis direction is contained, exits the linear polarizer for observation 191(Y) in a relatively larger amount. As a result, in unpolarized light-polarized light observation of the region S2, the light A327(Y)(Ch) is observed as light with a certain chromatic color. At that time, among the polarized light components contained in the light A326(P), a component that has been able to exit the linear polarizer for observation 191(X) (FIG. 7) is blocked by the linear polarizer for observation 191(Y). Conversely, a component that has not been able to exit the linear polarizer for observation 191(X) among the polarized light components contained in the light A326(P) exits the linear polarizer for observation 191(Y). Therefore, the color of the observed outgoing light A327(Y)(Ch) can be largely different from that of A327(X)(Ch) (FIG. 7). Although the theoretical value of brightness of the light A327(Y)(Ch) varies depending on the polarization state of the light A326(P), the theoretical value is a value smaller than that of the light A326(P), and is about a half of that of the light A326(P).

When the outgoing light A336(P) is incident on the linear polarizer for observation 191(Y), only a linearly polarized light component, having a vibrating direction in the Y-axis direction, of the light A336(P) exits the linear polarizer for observation 191(Y) as outgoing light A337(Y)(Ch). Since the light A336(P) has a variety in polarization state for wavelengths, among lights having various wavelengths contained in the light A336(P), light, having a wavelength at which a large amount of the linearly polarized light components having a vibration direction in the Y-axis direction is contained, exits the linear polarizer for observation 191(Y) in a relatively larger amount. As a result, in unpolarized light-polarized light observation of the region S3, the light A337(Y)(Ch) is observed as light with a certain chromatic color. At that time, the color of the observed outgoing light A337(Y)(Ch) can be largely different from that of the light A337(X)(Ch) for the same reason as that described above for the light A327(Y)(Ch). In addition, since the polarization state of the light A336(P) is different from that of the light A326(P), the color of the light A337(Y)(Ch) is different from that of the light A327(Y)(Ch). Although the theoretical value of the brightness of the light A337(Y)(Ch) varies depending on the polarization state of the light A336(P), the theoretical value is a value smaller than that of the light A336(P), and is about a half of that of the light A336(P).

When the outgoing light A344(X) is incident on the linear polarizer for observation 191(Y), since the vibration direction of polarized light of the light A344(X) and the transmission axis of the linear polarizer for observation 191(Y) are orthogonal to each other, the light A344(Y) is totally blocked, and the theoretical value of brightness of outgoing light A345(n) from the linear polarizer for observation 191(Y) becomes zero.

As a result of the foregoing, in usual observation of the optical display medium 200 on which unpolarized light is incident, an observer observes the outgoing lights A314(Y), A326(P), A336(P), and A344(X). These outgoing lights have the same brightness, although their polarization states are different. Since human vision cannot recognize this difference in polarization state, the observer cannot recognize these differences. Even when a relative angle relationship between the optical display medium 200 and the observer changes, the observer cannot recognize the change based on the change in the polarization state. Therefore, the regions R1 to R4 are all observed as an achromatic region having the same brightness, and a difference between the regions is not recognized.

On the other hand, when the relative angle relationship between the optical display medium and the linear polarizer for observation is configured to be the relationship in the example of FIG. 7 and unpolarized light-polarized light observation is performed, the region S1 is observed as an achromatic region of relatively dark and approximately black without reflected light, and the region S4 is observed as a relatively bright achromatic region having reflected light with brightness equivalent to a half of that of the incident light. The regions S2 and S3 are observed as chromatic regions that have approximately the same brightness as that of the region S4 and are different in color from each other. The appearances thereof are different from each other.

When the relative angle relationship between the optical display medium and the linear polarizer for observation is configured to be the relationship in the example of FIG. 8, in unpolarized light-polarized light observation, the region S1 is observed as a relatively bright achromatic region having reflected light with brightness equivalent to a half of that of the incident light. On the other hand, the region S4 is observed as a relatively dark, approximately black, achromatic region without reflected light. The regions S2 and S3 are observed as chromatic regions that are somehow darker than the region S1, and have colors that are different from each other and also different from those observed in the example of FIG. 7. These appearances thereof are different from each other and also from the appearance observed in the

example of FIG. 7.

Therefore, by changing the relative angle relationship between the optical display medium and the linear polarizer for observation from the relationship in the example of FIG. 7 to the relationship in the example of FIG. 8, relative brightness between the plurality of regions is changed. More specifically, when the direction of the linear polarizer for observation is changed by rotation around an axis parallel to the Z-axis direction from the state of the linear polarizer for observation 191(X) in FIG. 7, the relative brightness of the region S1 is increased with an increase in the angle of rotation. When the direction of the linear polarizer for observation reaches the state of the linear polarizer for observation 191(Y) in FIG. 8, the relative brightness becomes the highest. The relative brightness of the region S4 becomes darker with an increase in the angle of rotation, and when the direction of the linear polarizer for observation reaches the state of the linear polarizer for observation 191(Y) in FIG. 8, the relative brightness becomes the lowest. Furthermore, such a rotation changes the color observed in the regions S2 and R3.

In this example, the optical display medium of the present invention can exhibit a special effect in which a difference between regions is not observed in usual observation, a difference in color and relative brightness between regions is observed only through the linear polarizer for observation, and the color and brightness of each region are changed by changing the angle of the linear polarizer for observation. Such a special effect cannot be obtained by a duplicated product that is easily obtained through a general technique such as printing. Therefore, the optical display medium of the present invention exerts a high anti-counterfeiting property and functions as an identification medium by the comparison of the observation results obtained by using the medium in such a usual observation and using the medium in a plurality of types of unpolarized light-polarized light observations. As a result of the expression of the chromatic color and the change in color and brightness, the optical display medium of the present invention can also exhibit the design effect as a decorative medium.

[Method for using optical display medium of second embodiment: part 2: polarized light-unpolarized light observation]

Hereinafter, an example of using method by polarized light-unpolarized light observation will be described. That is, observation using, unlike the examples described above, polarized light as light to be incident on the optical display medium 200 will be described.

When light to be incident is polarized light, the reflected light may be visually observed in reflected light observation as it is without intervention of the linear polarizer for observation. The mode of supplying polarized light, such as linearly polarized light, may be the same as that in the first embodiment described with reference to FIGS. 5 and 6.

FIGs. 9 and 10 are an exploded side view schematically illustrating yet another example of the method of using the optical display medium 200 illustrated in FIGs. 7 and 8.

In the example of using the optical displaying medium 200 shown in FIG. 9, incident lights A411(X), A421(X), A431(X), and A441(X) are incident on the regions S1 to S4 of the patterned phase difference layer 210, respectively. In this example, the incident lights A411(X) to A441(X) are linearly polarized light having a vibration direction in the X-axis direction.

The incident light A411(X) is transmitted through the layer 202(Xy), exits downward as light A412(Y) that is linearly polarized light having a vibration direction in the Y-axis direction, and reaches the upper surface 201(Y)U of the light reflective layer 201(Y). Since the light reflective layer 201(Y) is a reflective linear polarizer having a transmission axis positioned in the Y-axis direction, the entirety of the light A412(Y) is transmitted through the light reflective layer 201(Y) to become transmitted light A419(Y). Therefore, the theoretical value of brightness of reflected light A413(n) on the light reflective layer 201(Y) becomes zero, and the theoretical value of brightness of light A414(n) that is transmitted again through the layer 202(Xy) and exits the display surface of the optical display medium 200 also becomes zero.

The incident light A421(X) is transmitted through the sub-layer 103(Xy) and exits downward as light A422(P). Since the sub-layer 103(Xy) is a layer that functions as the region H and has an Re(550) of more than 275 nm, the light A422(P) that has been transmitted through the sub-layer 103(Xy) has a variety in polarization state for wavelengths. However, as the brightness values of light do not have a variety for wavelengths, the light A422(P) is not observed as light having a particular chromatic color. The theoretical value of brightness of the light A422(P) is the same as that of the light A421(X).

The light A422(P) is further transmitted through the layer 202(Xy) and exits downward as light A423(P) in which a polarization state is further changed. The theoretical value of brightness of the light A423(P) is the same as that of the light A422(P).

The light A423(P) that has exited downward reaches the upper surface 201(Y)U of the light reflective layer 201(Y). Since the light reflective layer 201(Y) is a reflective linear polarizer having a transmission axis positioned in the Y-axis direction, a linearly polarized light component, having a vibration direction in the X-axis direction, of the light A423(P) is reflected by the surface or the inside of the light reflective layer 201(Y) to become reflected light A424(X)(Ch). Since the light A423(P) has a variety in polarization state for wavelengths, among lights having various wavelengths contained in the light A423(P), light, having a wavelength at which a large amount of the linearly polarized light component

having a vibration direction in the X-axis direction is contained, is reflected by the light reflective layer 201(Y) in a relatively larger amount. As a result, the light A424(X)(Ch) is observed as light with a certain chromatic color. Although the theoretical value of brightness of the light A424(X) varies depending on the polarization state of the light A423(P), the theoretical value is a value smaller than that of the light A423(P), and is about a half of that of the light A423(P). On the other hand, a linearly polarized light component, having a vibration direction in the Y-axis direction, of the light A423(P) is transmitted through the light reflective layer 201(Y) to become transmitted light A429(Y)(Ch).

The light A424(X)(Ch) is transmitted through the layer 202(Xy) and exits upward as light A425(Y)(Ch). Since the light A424(X) is linearly polarized light having a vibration direction in the X-axis direction and the layer 202(Xy) is a $\lambda/2$ wavelength plate having a slow axis in the Xy direction, the light A425(Y)(Ch) becomes linearly polarized light having a polarization direction in the Y-axis direction, and the color and the theoretical value of brightness of the light A425(Y)(Ch) are the same as those of the light A424(X).

The light A425(Y)(Ch) is transmitted through the sub-layer 103(Xy) and exits the display surface of the optical display medium 200 as light A426(P)(Ch). Since the sub-layer 103(Xy) is a layer that functions as the region H and has an Re(550) of more than 275 nm, the light A426(P)(Ch) that has been transmitted through the sub-layer 103(Xy) has a variety in polarization state for wavelengths. However, since the brightness of the light A426(P)(Ch) for each wavelength is the same as that of the light A425(Y)(Ch), the color and the theoretical value of brightness of the light A426(P)(Ch) are the same as those of the light A425(Y)(Ch).

The incident light A431(X) is transmitted through the sub-layer 103(Xy) and exits downward as light A432(P). Since the sub-layer 103(Xy) is a layer that functions as the region H and has an Re(550) of more than 275 nm, the light A432(P) that has been transmitted through the sub-layer 103(Xy) has a variety in polarization state for wavelengths. However, as the brightness values of light do not have a variety for wavelengths, the light A432(P) is not observed as light having a particular chromatic color. The theoretical value of brightness of the light A432(P) is the same as that of the light A431(X).

The light A432(P) is further transmitted through the layer 202(N) and exits downward as light A433(P). While the light A422(P) in the region S2 is transmitted through the layer 202(Xy) to become the light A423(P) having further changed polarization state, since the light A433(P) is light that has been transmitted not through the layer 202(Xy) but through the isotropic layer 202(N), the polarization state of the light A433(P) is different from that of the light A423(P). However, as the brightness values of light do not have a variety for wavelengths, the light A433(P) is not observed as light having a particular chromatic color. The theoretical value of brightness of the light A433(P) is the same as that of the light A432(P).

The light A433(P) that has exited downward reaches the upper surface 201(Y)U of the light reflective layer 201(Y). Since the light reflective layer 201(Y) is a reflective linear polarizer having a transmission axis positioned in the Y-axis direction, a linearly polarized light component, having a vibration direction in the X-axis direction, of the light A433(P) is reflected by the surface or the inside of the light reflective layer 201(Y) to become reflected light A434(X)(Ch). Since the light A433(P) has a variety in polarization state for wavelengths, among lights having various wavelengths contained in the light A433(P), light, having a wavelength at which a large amount of the linearly polarized light component having a vibration direction in the X-axis direction is contained, is reflected by the light reflective layer 201(Y) in a relatively larger amount. As a result, the light A434(X)(Ch) is observed as light with a certain chromatic color. Since the polarization state of the light A433(P) is different from that of the light A423(P), the color of the light A434(X)(Ch) is different from that of the light A424(X)(Ch). Although the theoretical value of brightness of the light A434(X) varies depending on the polarization state of the light A433(P), the theoretical value is a value smaller than that of the light A433(P), and is about a half of that of the light A433(P). On the other hand, a linearly polarized light component, having a vibration direction in the Y-axis direction, of the light A433(P) is transmitted through the light reflective layers 201(Y) to become transmitted light A439(Y) (Ch).

The light A434(X)(Ch) is transmitted through the layer 202(N) and exits upward as light A435(X)(Ch). Since the light A434(X) is linearly polarized light having a vibration direction in the X-axis direction and the layer 202(N) is an isotropic layer, the color and the theoretical value of brightness of the light A435(X) (Ch) are the same as those of the light A434(X).

The light A435(R)(Ch) is transmitted through the sub-layer 103(Xy) and exits the display surface of the optical display medium 200 as light A436(P)(Ch). Since the sub-layer 103(Xy) is a layer that functions as the region H and has an Re(550) of more than 275 nm, the light A436(P) (Ch) that has been transmitted through the sub-layer 103(Xy) has a variety in polarization state for wavelengths. However, since the brightness of the light A436(P)(Ch) for each wavelength is the same as that of the light A435(R)(Ch), the color and the theoretical value of brightness of the light A436(P)(Ch) are the same as those of the light A435(R)(Ch). The color of the light A436(P)(Ch) is different from that of the light A426(P)(Ch).

The incident light A441(X) is transmitted through the layer 202(N), exits downward as light A442(X) that is linearly polarized light, and reaches the upper surface 201(Y)U of the light reflective layer 201(Y). Since the light reflective layer 201(Y) is a reflective linear polarizer having a transmission axis positioned in the Y-axis direction, the entirety of

the light A442(X) is reflected by the light reflective layer 201(Y) to become reflected light A443(X). The theoretical value of brightness of the light A443(X) is the same as that of the light A442(X). On the other hand, the theoretical value of brightness of transmitted light A449(n) that is transmitted through the light reflective layers 201(Y) becomes zero.

The light A443(X) is transmitted again through the layer 202(N), and exits the display surface of the optical display medium 200 as light A444(X). The theoretical value of brightness of the light A444(X) is the same as that of the light A443(X).

FIG. 10 is an exploded side view schematically illustrating an example of the method for using the optical display medium of the present invention when a relative angle relationship between the optical display medium and the vibration direction of the incident linearly polarized light is changed from that in the example of FIG. 9. FIG. 10 illustrates the optical display medium 200 whose angle relative to the axes of coordinates being fixed, with the linearly polarized light whose angle of the vibration direction relative to the X-axis and the Y-axis being changed. In actual use, however, the relative angle relationships may be changed by any of movement of the optical display medium, movement of the light source, exchange of the light source, and a combination of two or more thereof.

As a result of the change in the angle relationship, the example of FIG. 6 is presented as a modified example in which the light incident on the optical display medium 200 is linearly polarized light having a vibration direction in the Y-axis direction. That is, the incident lights A411(Y), A421(Y), A431(Y), and A441(Y) are incident on the regions S1 to S4 of the patterned phase difference layer 110, respectively. In this example, the incident lights A411(Y) to A441(Y) are linearly polarized light having a vibration direction in the Y-axis direction.

The incident light A411(Y) is transmitted through the layer 202(Xy), exits downward as light A412(X) that is linearly polarized light having a vibration direction in the X-axis direction, and reaches the upper surface 201(Y)U of the light reflective layer 201(Y). Since the light reflective layer 201(Y) is a reflective linear polarizer having a transmission axis positioned in the Y-axis direction, the entirety of the light A412(X) is reflected by the light reflective layer 201(Y) to become reflected light A413(X). The theoretical value of brightness of the light A413(X) is the same as that of the light A412(X). On the other hand, the theoretical value of brightness of transmitted light A419(n) that is transmitted through the light reflective layer 201(Y) becomes zero.

The light A413(X) is transmitted again through the layer 202(Xy), and exits the display surface of the optical display medium 200 as light A414(Y). The theoretical value of brightness of the light A414(Y) is the same as that of the light A413(X).

The incident light A421(Y) is transmitted through the sub-layer 103(Xy) and exits downward as light A422'(P). Since the sub-layer 103(Xy) is a layer that functions as the region H and has an Re(550) of more than 275 nm, the light A422'(P) that has been transmitted through the sub-layer 103(Xy) has a variety in polarization state for wavelengths. Furthermore, since the polarization state of the incident light A421(Y) is significantly different from that of the light A421(X) in FIG. 9, the polarization state of the light A422'(P) is significantly different from that of the light A422(P) in FIG. 9. However, as the brightness values of light do not have a variety for wavelengths, the light A422'(P) is not observed as light having a particular chromatic color. The theoretical value of brightness of the light A422'(P) is the same as that of the light A421(Y).

The light A422'(P) is further transmitted through the layer 202(Xy) and exits downward as light A423'(P) whose polarization state is further changed. Since the polarization state of the incident light A422'(P) is significantly different from that of the A422(P) in FIG. 9, the polarization state of the light A423'(P) is significantly different from that of the light A423(P) in FIG. 9. The theoretical value of brightness of the light A423'(P) is the same as that of the light A422'(P).

The light A423'(P) that has exited downward reaches the upper surface 201(Y)U of the light reflective layer 201(Y). Since the light reflective layer 201(Y) is a reflective linear polarizer having a transmission axis positioned in the Y-axis direction, a linearly polarized light component, having a vibration direction in the X-axis direction, of the light A423'(P) is reflected by the surface or the inside of the light reflective layer 201(Y) to become reflected light A424'(X)(Ch). Since the light A423'(P) has a variety in polarization state for wavelengths, among lights having various wavelengths contained in the light A423'(P), light, having a wavelength at which a large amount of the linearly polarized light component having a vibration direction in the X-axis direction is contained, is reflected by the light reflective layer 201(Y) in a relatively larger amount. As a result, the light A424'(X)(Ch) is observed as light with a certain chromatic color. Since the polarization state of the incident light A423'(P) is significantly different from that of the light A423(P) in FIG. 9, the color of the light A424'(X)(Ch) is significantly different from that of the light A424(X)(Ch) in FIG. 9. Although the theoretical value of brightness of the light A424'(X)(Ch) varies depending on the polarization state of the light A423'(P), the theoretical value is a value smaller than that of the light A423'(P), and is about a half of that of the light A423'(P). On the other hand, the linearly polarized light component, having a vibration direction in the Y-axis direction, of the light A423'(P) is transmitted through the light reflective layer 201(Y) to become transmitted light A429' (Y) (Ch) .

The light A424'(X)(Ch) is transmitted through the layer 202(Xy) and exits upward as light A425'(Y)(Ch). Since the light A424'(X)(Ch) is linearly polarized light having a vibration direction in the X-axis direction and the layer 202(Xy) is a $\lambda/2$ wavelength plate having a slow axis in the Xy direction, the light A425'(Y)(Ch) becomes linearly polarized light having a polarization direction in the Y-axis direction. The color and the theoretical value of brightness of the light

A425'(Y)(Ch) are the same as those of the light A424'(X)(Ch), and are significantly different from those of the light A425(Y)(Ch) in FIG. 9.

The light A425'(Y)(Ch) is transmitted through the sub-layer 103(Xy) and exits the display surface of the optical display medium 200 as light A426'(P)(Ch). Since the sub-layer 103(Xy) is a layer that functions as the region H and has an Re(550) of more than 275 nm, the light A426'(P)(Ch) that has been transmitted through the sub-layer 103(Xy) has a variety in polarization state for wavelengths. However, since the brightness of the light A426'(P)(Ch) for each wavelength is the same as that of the light A425'(Y)(Ch), the color and the theoretical value of brightness of the light A426'(P)(Ch) are the same as those of the light A425'(Y)(Ch). Therefore, they are significantly different from those of the light A426(P)(Ch) in FIG. 9.

The incident light A431(Y) is transmitted through the sub-layer 103(Xy) and exits downward as light A432'(P). Since the sub-layer 103(Xy) is a layer that functions as the region H and has an Re(550) of more than 275 nm, the light A432'(P) that has been transmitted through the sub-layer 103(Xy) has a variety in polarization state for wavelengths. Furthermore, since the polarization state of the incident light A431(Y) is significantly different from that of the light A431(X) in FIG. 9, the polarization state of the light A432'(P) is significantly different from that of the light A432(P) in FIG. 9. However, as the brightness values of light do not have a variety for wavelengths, the light A432'(P) is not observed as light having a particular chromatic color. The theoretical value of brightness of the light A432'(P) is the same as that of the light A431(Y).

The light A432'(P) is further transmitted through the layer 202(N) and exits downward as light A433'(P). While the light A422'(P) in the region S2 is transmitted through the layer 202(Xy) to become the light A423'(P) having a further changed polarization state, since the light A433'(P) is light that has been transmitted not through the layer 202(Xy) but through the isotropic layer 202(N), the polarization state of the light A433'(P) is different from that of the light A423'(P). Furthermore, since the polarization state of the incident light A432'(P) is significantly different from the light A432(P) in FIG. 9, the polarization state of the light A433'(P) is significantly different from that of the light A433(P) in FIG. 9. However, as the brightness values of light do not have a variety for wavelengths, the light A433'(P) is not observed as light having a particular chromatic color. The theoretical value of brightness of the light A233'(P) is the same as that of the light A432'(P).

The light A433'(P) that has exited downward reaches the upper surface 201(Y)U of the light reflective layer 201(Y). Since the light reflective layer 201(Y) is a reflective linear polarizer having a transmission axis positioned in the Y-axis direction, a linearly polarized light component, having a vibration direction in the X-axis direction, of the light A433'(P) is reflected by the surface or the inside of the light reflective layer 201(Y) to become reflected light A434'(X)(Ch). Since the light A433'(P) has a variety in polarization state for wavelengths, among lights having various wavelengths contained in the light A433'(P), light, having a wavelength at which a large amount of the linearly polarized light component having a vibration direction in the X-axis direction is contained, is reflected by the light reflective layer 201(Y) in a relatively larger amount. As a result, the light A434'(X)(Ch) is observed as light with a certain chromatic color. Since the polarization state of the incident light A433'(P) is significantly different from that of the light A433(P) in FIG. 9, the color of the light A434'(X)(Ch) is significantly different from that of the light A434(X)(Ch) in FIG. 5. Furthermore, since the polarization state of the light A433'(P) is different from that of the light A423'(P), the color of the light A434'(X)(Ch) is different from that of the light A424'(X)(Ch). Although the theoretical value of brightness of the light A434'(X) varies depending on the polarization state of the light A433'(P), the theoretical value is a value smaller than that of the light A433'(P), and is about a half of that of the light A433'(P). On the other hand, a linearly polarized light component, having a vibration direction in the Y-axis direction, of the light A433'(P) is transmitted through the light reflective layer 201(Y) to become transmitted light A439'(Y)(Ch).

The light A434'(X)(Ch) is transmitted through the layer 202(N) and exits upward as light A435'(X)(Ch). Since the light A434'(X) is linearly polarized light having a vibration direction in the X-axis direction and the layer 202(N) is an isotropic layer, the color and the theoretical value of brightness of the light A435'(X)(Ch) are the same as those of the light A434'(X).

The light A435'(X)(Ch) is transmitted through the sub-layer 103(Xy) and exits the display surface of the optical display medium 200 as light A436'(P)(Ch). Since the sub-layer 103(Xy) is a layer that functions as the region H and has an Re(550) of more than 275 nm, the light A436'(P)(Ch) that has been transmitted through the sub-layer 103(Xy) has a variety in polarization state for wavelengths. However, since the brightness of the light A436'(P)(Ch) for each wavelength is the same as that of the light A435'(X)(Ch), the color and the theoretical value of brightness of the light A436'(P)(Ch) are the same as those of the light A435'(X)(Ch), and are significantly different from those of the light A436(P)(Ch) in FIG. 9. The color of the light A436'(P)(Ch) is different from that of the light A426' (P) (Ch) .

The incident light A441(Y) is transmitted through the layer 202(N), exits downward as light A442(Y) that is linearly polarized light, and reaches the upper surface 201(Y)U of the light reflective layer 201(Y). Since the light reflective layer 201(Y) is a reflective linear polarizer having a transmission axis positioned in the Y-axis direction, the entirety of the light A442(Y) is transmitted through the light reflective layer 201(Y) to become transmitted light A449(Y). Therefore, the theoretical value of brightness of the reflected light A443(n) on the light reflective layer 201(Y) becomes zero, and the theoretical value of brightness of light A444(n) that is transmitted again through the layer 202(Xy) and exits the

display surface of the optical display medium 200 also becomes zero.

As a result of the foregoing, in polarized light-unpolarized light observation of the optical display medium 200 on which the linearly polarized light having a vibration direction in the X-axis direction is incident as shown in FIG. 9, the region S1 is observed as an achromatic region of relatively dark and approximately black without reflected light, and the region S4 is observed as a relatively bright achromatic region having reflected light with brightness equivalent to that of the incident light. The regions S2 and S3 are observed as chromatic regions that are somehow darker than the region S4 and are different in color from each other, and their appearances are different from each other.

On the other hand, in polarized light-unpolarized light observation of the optical display medium 200 on which linearly polarized light having a vibration direction in the Y-axis direction is incident as shown in FIG. 10, the region S1 is observed as a relatively bright achromatic region having reflected light with brightness equivalent to that of the incident light. On the other hand, the region S4 is observed as a relatively dark, approximately black, achromatic region without reflected light. The regions S2 and S3 are observed as chromatic regions that are somehow darker than the region S1, and have colors that are different from each other and also different from those observed in the example of FIG. 9. The appearances thereof are different from each other and are also different from the appearance observed in the example of FIG. 9.

Therefore, by changing the relative angle relationship between the optical display medium and the vibration direction of the linearly polarized light from the relationship in the example of FIG. 9 to the relationship in the example of FIG. 10, the relative brightness between the plurality of regions is changed. More specifically, when the direction of the vibration direction of the linearly polarized light is changed by rotation around an axis parallel to the Z-axis direction from the state in the X-axis direction in FIG. 9, the relative brightness of the region S1 is increased with an increase in the angle of rotation. When the direction of the linear polarizer for observation reaches the state of the linear polarizer for observation 191(Y) in FIG. 10, the relative brightness becomes the highest. The relative brightness of the region S4 becomes darker with an increase in the angle of rotation, and becomes the lowest when the direction of the linear polarizer for observation reaches the state of the linear polarizer for observation 191(Y) in FIG. 10. Furthermore, such a rotation changes the colors observed in the regions S2 and R3.

In addition, results in usual observation of the optical display medium 200 on which unpolarized light is incident are the same as those described with reference to FIGs. 7 and 8, that is, the regions S1 to S4 are all observed as achromatic regions with the same brightness, and these differences are not recognized.

In this example, the optical display medium of the present invention can exhibit a special effect in which a difference between regions is not observed in usual observation, a difference in color and relative brightness between regions is observed only with the linearly polarized light as a light source, and the color and brightness of each region are changed by changing the angle of polarized light. Such a special effect cannot be obtained by a duplicated product that is easily obtained through a general technique such as printing. Therefore, the optical display medium of the present invention exerts a high anti-counterfeiting property and functions as an identification medium by the comparison of the observation results obtained by using the medium in such a usual observation and using the medium in a plurality of types of unpolarized light-polarized light observations. As a result of the expression of the chromatic color and the change in color and brightness, the optical display medium of the present invention can also exhibit the design effect as a decorative medium.

[Specific example of light reflective layer]

The light reflective layer is a layer that reflects incident light as circularly polarized light or linearly polarized light. Examples of the light reflective layer may include a reflective circular polarizer exemplified by the light reflective layer 101(R) described above, and a reflective linear polarizer exemplified by the light reflective layer 201(Y) described above. The light reflective layer may be a layer that exhibits such a function by only one layer. Alternatively, the light reflective layer may be a layer that exhibits such a function by a combination of a plurality of layers.

Examples of the reflective circular polarizer may include a layer made of a material having cholesteric regularity. The cholesteric regularity is a structure in which the angles of molecular axes in stacking planes are shifted (twisted) as the planes are observed sequentially passing through the stacked planes, such that molecular axes in a certain plane in the material are oriented in a constant direction, molecular axes in a subsequent plain stacking thereon are oriented in a direction shifted by a small angle with respect to that of the certain plane, and molecular axes in still another plane are oriented in a direction of a further shifted angle. That is, in a case where molecules inside a layer of a certain material have the cholesteric regularity, the molecules in a certain first plane inside the layer are arrayed such that the molecular axes are oriented in a constant direction. In the subsequent second plane stacking on the first plane inside the layer, the direction of the molecular axes shifts at a slight angle with respect to the direction of the molecular axes in the first plane. In the subsequent third plane further stacking on the second plane, the direction of the molecular axes further shifts at an angle from the direction of the molecular axes in the second plane. In this manner, the angle of the molecular axes in the planes successively shifts (twists) in the planes arranged in a stacked manner. Such a structure in which

the direction of the molecular axes twists is usually a helical structure, which is an optically chiral structure.

More specific examples of the material having cholesteric regularity may include a cholesteric resin layer. The cholesteric resin layer is a layer obtained by curing a curable liquid crystalline compound exhibiting a cholesteric liquid crystal phase. The cholesteric resin layer may be obtained, for example, by polymerizing a polymerizable liquid crystal compound in a state in which a cholesteric liquid crystal phase is exhibited. More specifically, a liquid crystal composition containing a polymerizable liquid crystal compound is applied onto an appropriate substrate or the like to form a layer, and is oriented to form a cholesteric liquid crystal phase and is then cured, whereby a cholesteric resin layer can be obtained.

The polymerizable liquid crystal compound is preferably a photopolymerizable liquid crystal compound. As the photopolymerizable liquid crystal compound, a photopolymerizable liquid crystal compound which can be polymerized by irradiation with an active energy ray may be used. As the active energy ray, an energy ray capable of causing a polymerization reaction of the photopolymerizable liquid crystal compound to proceed may be adopted from a wide range of energy rays such as visible light, ultraviolet rays, and infrared rays, and ionizing radiation such as ultraviolet rays is particularly preferable. Among these, as the photopolymerizable liquid crystal compound suitably used in the cholesteric liquid crystal composition, a rod-shaped liquid crystal compound having two or more reactive groups within one molecule is preferable, and a compound represented by the formula (1) is particularly preferable.

$$R^3\text{-}C^3\text{-}D^3\text{-}C^5\text{-}M\text{-}C^6\text{-}D^4\text{-}C^4\text{-}R^4 \qquad \text{Formula (1)}$$

In the formula (1), $R^3$ and $R^4$ are reactive groups and each independently represent a group selected from the group consisting of a (meth)acrylic group, a (thio)epoxy group, an oxethane group, a thiethanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carbonyl group, and an alkoxysilyl group. By having these reactive groups, a cured layer of a liquid crystal composition having high mechanical strength can be obtained when the liquid crystal composition is cured.

In the formula (1), $D^3$ and $D^4$ each independently represent a group selected from the group consisting of a single bond, a linear or branched alkyl group of 1 to 20 carbon atoms, and a linear or branched alkylene oxide group of 1 to 20 carbon atoms.

In the formula (1), $C^3$ to $C^6$ each independently represent a group selected from the group consisting of a single bond, -O-, -S-, -S-S-, -CO-, -CS-, -OCO-, $-CH_2-$, - $OCH_2-$, -CH=N-N=CH-, -NHCO-, -O-(C=O)-O-, $-CH_2-(C=O)-O-$, and $-CH_2O-(C=O)-$.

In the formula (1), M represents a mesogen group. Specifically, M represents a group obtained by bonding same or different two to four skeletons selected from the group consisting of azomethines, azoxies, phenyls, biphenyls, terphenyls, naphthalenes, anthracenes, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolanes, and alkenylcyclohexylbenzonitriles, which may or may not be substituted, by a bonding group such as -O-, -S-, -S-S-, -CO-, -CS-, -OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Examples of the substituents which the mesogen group M may have may include a halogen atom, an alkyl group of 1 to 10 carbon atoms optionally having a substituent, a cyano group, a nitro group, $-O-R^5$, $-O-C(=O)-R^5$, $-C(=O)-O-R^5$, $-O-C(=O)-O-R^5$, $-NR^5-C(=O)-R^5$, $-C(=O)-NR^5R^7$, and $-O-C(=O)-NR^5R^7$. Herein, $R^5$ and $R^7$ represent a hydrogen atom or an alkyl group of 1 to 10 carbon atoms. When $R^5$ and $R^7$ are an alkyl group, the alkyl group may have an intervening -O-, - S-, -O-C(=O)-, -C(=O)-O-, -O-C(=O)-O-, $-NR^6-C(=O)-$, $-C(=O)-NR^6-$, $-NR^6-$, or -C(=O)- (except a case where two or more contiguous -O- or -S- moieties are interrupted). Herein, $R^6$ represents a hydrogen atom or an alkyl group of 1 to 6 carbon atoms.

Examples of the substituent in the above-mentioned "alkyl group of 1 to 10 carbon atoms optionally having a substituent" may include a halogen atom, a hydroxyl group, a carboxyl group, a cyano group, an amino group, an alkoxy group of 1 to 6 carbon atoms, an alkoxyalkoxy group of 2 to 8 carbon atoms, an alkoxyalkoxyalkoxy group of 3 to 15 carbon atoms, an alkoxycarbonyl group of 2 to 7 carbon atoms, an alkylcarbonyloxy group of 2 to 7 carbon atoms, and an alkoxycarbonyloxy group of 2 to 7 carbon atoms.

The above-mentioned rod-shaped liquid crystal compound preferably has an asymmetric structure. Herein, the asymmetric structure refers to a structure in which, when $R^3\text{-}C^3\text{-}D^3\text{-}C^5\text{-}M\text{-}$ and $\text{-}M\text{-}C^6\text{-}D^4\text{-}C^4\text{-}R^4$ are compared, they are different from each other with respect to the mesogen group M as a center in the formula (1). By using a the rod-shaped liquid crystal compound having an asymmetric structure as the rod-shaped liquid crystal compound, the orientation uniformity can be further enhanced.

Preferable specific examples of the rod-shaped liquid crystal compound may include the following compounds (B1) to (B10). However, the rod-shaped liquid crystal compound is not limited to the following compounds.

[Chemical formula 1]

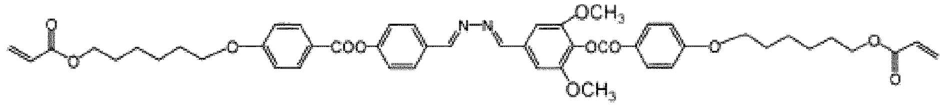 (B1)

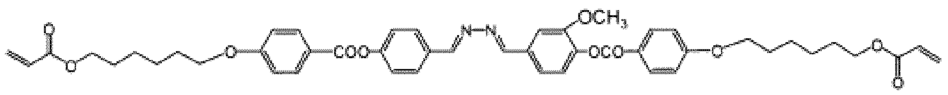 (B2)

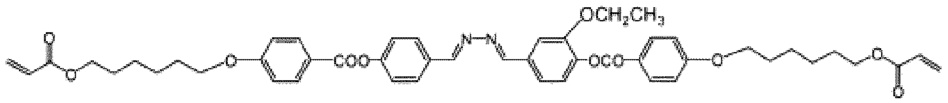 (B3)

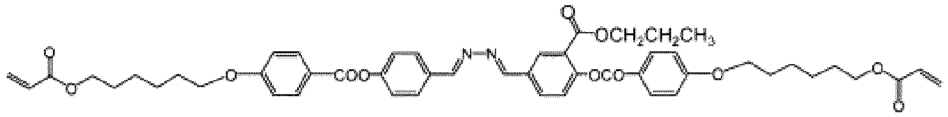 (B4)

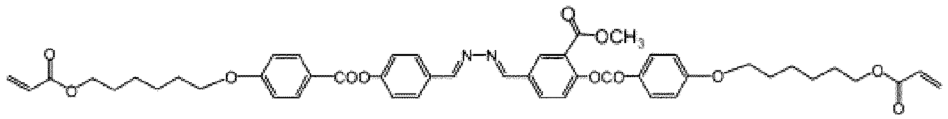 (B5)

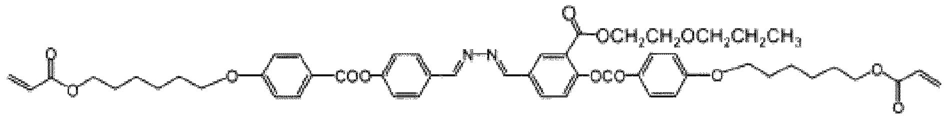 (B6)

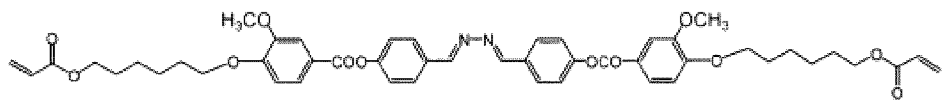 (B7)

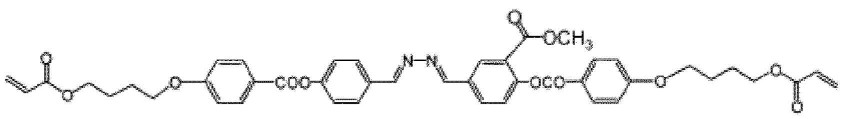 (B8)

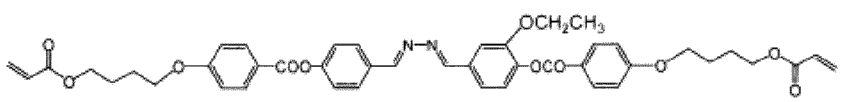 (B9)

[Chemical formula 2]

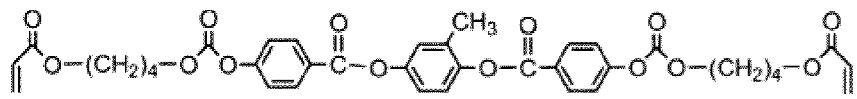 (B10)

When the liquid crystal composition includes the above-described rod-shaped liquid crystal compound, the liquid crystal composition preferably includes a compound represented by the formula (2) as an orientation aid in combination with the rod-shaped liquid crystal compound.

$$R^1\text{-}A^1\text{-}B\text{-}A^2\text{-}R^2 \qquad (2)$$

In the formula (2), $R^1$ and $R^2$ each independently represent a group selected from the group consisting of a linear or branched alkyl group of 1 to 20 carbon atoms, a linear or branched alkylene oxide group of 1 to 20 carbon

atoms, a hydrogen atom, a halogen atom, a hydroxyl group, a carboxyl group, a (meth)acrylic group which may include an optional bonding group as an intervening group, an epoxy group, a mercapto group, an isocyanate group, an amino group, and a cyano group.

The alkyl group and the alkylene oxide group may be unsubstituted or substituted with one or more halogen atoms. In addition, the above-mentioned halogen atom, hydroxyl group, carboxyl group, (meth)acrylic group, epoxy group, mercapto group, isocyanate group, amino group, and cyano group may be bonded to a C1 to C2 alkyl group and alkylene oxide group.

Preferable examples of $R^1$ and $R^2$ may include a halogen atom, a hydroxyl group, a carboxyl group, a (meth)acrylic group, an epoxy group, a mercapto group, an isocyanate group, an amino group, and a cyano group.

At least one of $R^1$ and $R^2$ is preferably a reactive group. By having a reactive group as at least one of $R^1$ and $R^2$, the compound represented by the above-mentioned formula (2) is fixed in the cured layer of the liquid crystal composition during curing, and thereby a stronger layer can be formed. Examples of the reactive group may include a carboxyl group, a (meth)acrylic group, an epoxy group, a mercapto group, an isocyanate group, and an amino group.

In the formula (2), $A^1$ and $A^2$ each independently represent a group selected from the group consisting of a 1,4-phenylene group, a 1,4-cyclohexylene group, a cyclohexene-1,4-ylene group, a 4,4'-biphenylene group, a 4,4'-bicyclohexylene group, and a 2,6-naphthylene group. The above-mentioned 1,4-phenylene group, 1,4-cyclohexylene group, cyclohexene-1,4-ylene group, 4,4'-biphenylene group, 4,4'-bicyclohexylene group, and 2,6-naphthylene group are not substituted or may be substituted with one or more substituents such as a halogen atom, a hydroxyl group, a carboxyl group, a cyano group, an amino group, and a C1 to C10 alkyl group and halogenated alkyl group. When two or more substituents are present in each of $A^1$ and $A^2$, they may be the same as, or different from, each other.

Particularly preferable examples as $A^1$ and $A^2$ may include a group selected from the group consisting of a 1,4-phenylene group, a 4,4'-biphenylene group, and a 2,6-naphthylene group. These aromatic ring skeletons are relatively rigid compared to alicyclic skeletons, have high affinity to mesogen of the rod-like liquid crystal compound, and have higher orientation uniformity.

In the formula (2), B is selected from the group consisting of a single bond, -O-, -S-, -S-S-, -CO-, -CS-, - OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Particularly preferable examples of B may include a single bond, -O-(C=O)-, and -CH=N-N=CH-.

Particularly preferable specific examples of the compound represented by the formula (2) may include the following compounds (A1) to (A10). As these compounds, one type thereof may be used solely, and two or more types thereof may also be used in a combination at any ratio.

[Chemical formula 3]

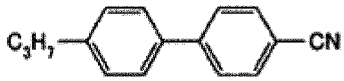 (A1)

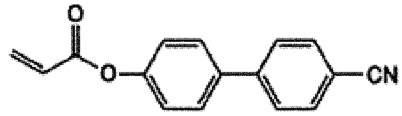 (A2)

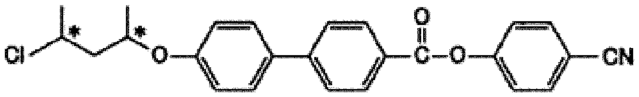 (A3)

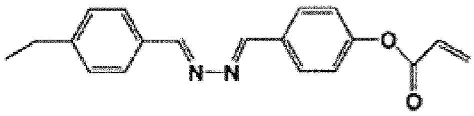 (A4)

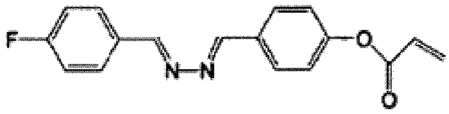 (A5)

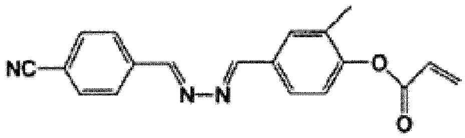 (A6)

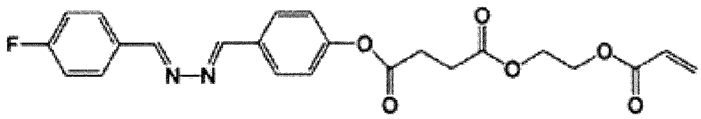 (A7)

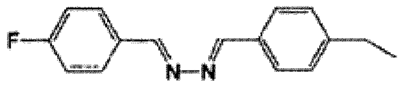 (A8)

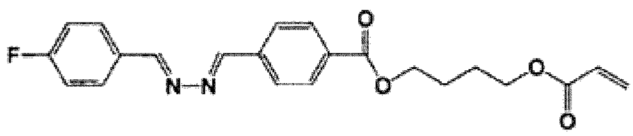 (A9)

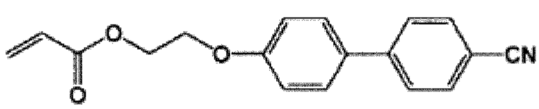 (A10)

In the above-mentioned compound (A3), "*" represents a chiral center.

The weight ratio represented by (total weight of the compound represented by the formula (2)) / (total weight of the rod-shaped liquid crystal compound)) is preferably 0.001 or more, more preferably 0.01 or more, and still more preferably 0.05 or more, and is preferably 1 or less, and more preferably 0.65 or less. By setting the above-mentioned weight ratio to the above-mentioned lower limit value or more, orientation uniformity can be enhanced in the layer of the liquid crystal composition. By setting the above-mentioned weight ratio to the upper limit value or less, orientation uniformity can be increased. In addition, the stability of the liquid crystal phase of the liquid crystal composition can be increased. Furthermore, the refractive index anisotropy $\Delta n$ of the liquid crystal composition can be increased. Consequently, a cured layer of the liquid crystal composition having desired optical properties such as the selective reflection property of circularly polarized light can be stably obtained. Herein, the total weight of the compound represented by the

formula (2) represents, when only one compound represented by the formula (2) is used, the weight of the one compound, and represents, when two or more compounds are used, the total weight of them. Similarly, the total weight of the rod-shaped liquid crystal compound represents, when only one type of the rod-shaped liquid crystal compound is used, the weight of the compound, and represents, when two or more types thereof are used, the total weight of them.

When the compound represented by the formula (2) and the rod-shaped liquid crystal compound are used in combination, the molecular weight of the compound represented by the formula (2) is preferably less than 600, and the molecular weight of the rod-shaped liquid crystal compound is preferably 600 or more. By having such molecular weights, the compound represented by the formula (2) can enter gaps of the rod-shaped liquid crystal compound having a molecular weight larger than the compound represented by the formula (2), and thus the orientation uniformity can be improved.

The liquid crystal composition for forming the cholesteric resin layer may further contain an optional component constituting the cholesteric resin layer and a solvent for facilitating handling of the liquid crystal composition. Examples of the optional component may include a chiral agent, a polymerization initiator, and a surfactant. Specific examples of the optional component and the solvent may include those described in Japanese Patent Application Laid-Open No. 2019-188740 A.

Examples of the reflective linear polarizer may include a film obtained by laminating multiple thin films (e.g., under the tradename "DBEF", manufactured by 3M Japan Ltd.), and a wire grid polarizer.

In both cases where the light reflective layer is either a reflective circular polarizer or a reflective linear polarizer, the reflectance of the light reflective layer when unpolarized light is incident on the light reflective layer is at most 50%. Depending on the reflection band and the reflectance of the light reflective layer, the light reflective layer visually exhibits a variety of colors. When the reflectance by the light reflective layer of unpolarized light incident on the light reflective layer is 35 to 50% at all wavelengths in the wavelength region of 420 nm to 650 nm, the light reflective layer is observed as a silver-colored layer. If the band of 35 to 50% reflection is narrower than this range, the light reflective layer may exhibit a variety of colors depending on the band. For example, when the reflection band is near 450 nm, near 550 nm, and near 650 nm, blue, green, and red colors may be exhibited, respectively.

The optical display medium of the present invention may have only one layer as the light reflective layer, or may have a plurality of layers. The optical display medium may also have only one type of layer as the light reflective layer, or may have a plurality of types of layers having different polarization states of the reflected light. For example, the optical display medium may have, as the light reflective layer, a large number of cut pieces of a plurality of types of reflective polarizers having a plurality of colors such as red, green, blue, and silver, laid out in a horizontal direction. In the case where a large number of cut pieces are provided as the light reflective layer, the light reflective layer is preferably a reflective circular polarizer. When a reflective circular polarizer is used in accordance with the principle shown in FIGS. 1 to 6, the direction of the reflective circular polarizer does not need to be aligned in one direction, and only the slow axis of the phase difference layer defines the direction in which brighter mode is achieved. Therefore, even when the reflective circular polarizer is used as fine cut pieces and disposed without aligning the directions in a certain direction in the optical display medium, it is possible to constitute an optical display medium which easily exhibit the advantageous effects of the present invention.

From the viewpoint of clarifying the visibility of a latent image, it is preferable that the light reflective layer is silver or a combination of silver and other colors.

[Specific example of patterned phase difference layer]

The patterned phase difference layer is a layer containing a region having a phase difference. The region having a phase difference occupies a part of the region on the display surface of the optical display medium.

Examples of the phase difference layer (of the patterned phase difference layer, a portion that covers the region having a phase difference) may include the region that functions as a $\lambda/4$ wavelength plate that is exemplified by the layer 102(Xy), and the region that functions as a $\lambda/2$ wavelength plate that is exemplified by the layer 202(Xy).

Examples of a material constituting the phase difference layer may include solid materials having various optical anisotropies. An example thereof is a stretched film obtained by stretching a transparent material. Specific examples thereof may include a film that is obtained by stretching an optically isotropic film to impart thereto an in-plane retardation Re so that the film can function as a $\lambda/4$ wavelength plate or a $\lambda/2$ wavelength plate. The stretched film is preferred from the viewpoint of relatively inexpensive availability, easy impartation of desired value Re, and easy molding into any desired shape.

Another example of the material constituting the phase difference layer is a cured product of a liquid crystal compound. Specifically, the material is a layer obtained by giving orientation to a curable liquid crystal compound in a liquid crystal state that exhibits a phase difference that can function as a $\lambda/4$ wavelength plate or a $\lambda/2$ wavelength plate, followed by curing. Examples of such a layer and a method for producing the same may include those described in International Publication No. 2019/116995. From the cured product of the liquid crystal compound, a single film having

a phase difference in which a phase of a portion is different from a phase of another portion can be easily formed. Therefore, when formation of a single film as the patterned phase difference layer is required, the cured product of the liquid crystal compound is particularly preferable.

In one preferable example, the optical display medium may include one or more single patterned phase difference layers as the patterned phase difference layer. Herein, the single patterned phase difference layer is a member that has a smaller size than the display surface of the optical display medium and consists of a region having a certain phase difference. When the single patterned phase difference layer is disposed in the display surface of the optical display medium, a region including the layer can function as a region having a phase difference, and another region can function as an isotropic region.

The display surface of one optical display medium may include one region alone or a plurality of regions having a phase difference of the patterned phase difference layer. When the display surface includes a plurality of the regions, the slow axis directions thereof may be the same as or different from one another.

When the optical display medium includes a plurality of regions having different slow axis directions as the region having a phase difference, a design effect thereby is obtained. Specifically, when a relative angle relationship between the optical display medium and the linear polarizer for observation or a relative angle relationship between the optical display medium and the vibration direction of incident linearly polarized light is changed, a design effect in which the regions are sequentially brightened one by one is obtained. Further the optical display medium can be configured such that any of the regions are the brightest in many directions. Accordingly, it is possible to configure an optical display medium whose latent image is observed at any angle regardless the direction of the optical display medium and the direction of the linear polarizer for observation are not restricted. The

. Such an effect is not obtained by a duplicated product that is easily obtained through a general technique such as printing, and can be characteristically visually recognized as the property of an authentic optical display medium. Therefore in this case, the anti-counterfeit property and the identification function of the optical display medium can be particularly enhanced. The directions of slow axes of the regions may be regularly different or irregularly different.

Examples of a method for forming the plurality of regions having different slow axis directions as the region having a phase difference may include a method in which a plurality of single patterned phase difference layers are prepared and disposed in the display surface of one optical display medium such that the slow axis directions are different from one another. By such a method, the regions having different slow axis directions can be easily formed. In addition, by such a method, the directions of slow axes of the regions can be easily made irregularly different. More specifically, when many single patterned phase difference layers are prepared and randomly mounted or scattered on the light reflective layer, the slow axes can be irregularly disposed in different directions. When the slow axes are irregularly disposed in different directions in this manner, it is possible to obtain a design effect in which the regions are brightened in random order one by one as the relative angle relationship between the optical display medium and the linear polarizer for observation or a relative angle relationship between the optical display medium and the vibration direction of incident linearly polarized light is changed. Thus, the anti-counterfeit property and the identification function of the optical display medium and a design value can be further enhanced.

When the regions having different slow axis directions as the region having a phase difference are formed, a combination of the light reflective layer and the patterned phase difference layer is preferably a combination of a reflective circular polarizer and a phase difference layer containing a region that functions as a λ/4 wavelength plate. In this case, a direction of the slow axis direction of the patterned phase difference layer relative to the light reflective layer does not have to be adjusted, and thus the direction of slow axes of the regions can be easily set to freely desired directions.

[Optional constituent element]

The optical display medium of the present invention may include an optional constituent element in addition to the light reflective layer and the patterned phase difference layer. Examples of the optional constituent element may include a light absorption layer, a diffusion layer, a high phase difference layer, a transparent resin for embedding, a decoration member, and an attachment member.

The light absorption layer is a layer that absorbs incident light. The light absorption layer may be a black layer. The material for the light absorption layer may be any material. For example, the material may be a film colored in black. The light absorption layer may be disposed on a back side of the light reflective layer, that is, on a side of the light reflective layer that is the opposite of the visual recognition side. When the light reflective layer is a reflective circular polarizer or a reflective linear polarizer, most of light that is not reflected of the incident light is transmitted. When the light absorption layer is disposed on the back side of the light reflective layer, transmitted light is absorbed, and as a result, the effect caused by reflected light can be more distinctly visually recognized. On the other hand, when the light absorption layer is not disposed on the back side of the light reflective layer, the back side of the light reflective layer is visually recognized, and the effect caused by reflected light becomes vague. However, a design effect in which the optical display medium can be a see-through substance is obtained.

The diffusion layer is a layer through which incident light is transmitted in a diffusion state. The diffusion layer may be disposed closer to the visual recognition side than the patterned phase difference layer. When the diffusion layer is disposed, a viewing angle in which a latent image is visually recognized can be increased. As the diffusion layer, various types of layered structures known in the art that can function as a diffusion layer may be used. Specifically, a layer of a cured product of a resin containing light diffusing fine particles may be used. Such a layer may be formed on a surface of a transparent film to be a composite film, which then may be disposed in the optical display medium of the present invention.

The high phase difference layer is a region having a higher phase difference than a region having a phase difference of the patterned phase difference layer. Such a high phase difference layer usually has a phase difference that largely varies depending on the wavelength of the incident light. Therefore, in usual observation, the high phase difference layer is visually recognizable as a transparent layer, and in observation of latent image, the high phase difference layer is visually recognizable as a layer in which an interference color is generated to exhibit a chromatic color. Accordingly, when the high phase difference layer is disposed in the display surface of the optical display medium, a design effect in which color is expressed only in observation of latent image can be obtained. Examples of a material constituting the high phase difference layer may include a general transparent stretched film. For example, a cellophane tape for adhesion, a stretched cellophane tape, or the like may be used. The position in the optical display medium where the high phase difference layer is disposed is not particularly limited and may be any position where the color described above is expressed.

The decoration member is a member that does not contribute to development of function of the optical display medium, but can contribute to the design effect of the optical display medium. An example of the decoration member is so-called lamé that is a cut piece having a metal luster. For example, such a cut piece may be disposed with a cut piece of the light reflective layer or may be disposed in a stacked manner on the upper surface of the light reflective layer. Other examples of the decoration member may include members such as a transparent member that covers the display surface of the optical display medium, such as a cover glass, and a housing that decorates or protects the outside of the optical display medium, such as a tray.

Various members constituting the optical display medium, such as the aforementioned members, may partially or entirely be embedded in a transparent resin for embedding to form an integrated member. Such embedding can, e.g., reduce the visibility of an edge of the phase difference layer by observation with the naked eye. Thus, the effect of the optical display medium in which a latent image is observed only in special observation can be further enhanced.

Examples of the transparent resin for embedding may include acrylic, epoxy-based, polyester-based, and silicone-based resins. As the resin for embedding, various resins that are commercially available as a curable resin liquid may be used. Specifically, a resin liquid that can be transformed into a solid transparent resin by irradiation with energy rays, such as ultraviolet rays, may be used. Among the resins, for example, when an acrylic transparent resin is used, the optical display medium that is hard and does not have flexibility is obtained. When a silicone-based transparent resin is used, the obtained optical display medium is soft and has flexibility. Such an optical display medium may be used as a flexible badge called a so-called silicone badge.

Other examples of the resin for embedding may include a film-shaped resin material. Specifically, the light reflective layer, the patterned phase difference layer, and if needed, an optional constituent element are disposed between a pair of film-shaped resin material leaves or a combination of the film-shaped resin material and another sheet-shaped material and bonded to each other, so that the internal constituent elements are sealed. Thus, the optical display medium may be formed. More specifically, the constituent elements such as the light reflective layer and the patterned phase difference layer are disposed between a base sheet constituted of paper, a resin material, or a combination thereof, and a resin film having a low phase difference, such as an acrylic film, and then sealed. Thus, the optical display medium that has a film shape may be formed. When, as the base sheet, a base sheet having an adhesive layer on a back surface is used, the optical display medium that can be used as a sticker may be easily formed.

When the optical display medium is embedded in the transparent resin, a plate-shaped product may be formed. The plate-shaped product may further be subjected to processing such as drilling and beveling, to obtain a product having any shape other than a plate.

The attachment member is a member that functions upon attaching the optical display medium to an article. A part or the entirety of the attachment member may also function as the decoration member. Examples of the attachment member may include a member extending from the outside of the optical display medium, such as a ring, a clasp, a hook, a wire, a chain, and a string, and a housing that also functions as the decoration member, such as a tray. The attachment member may be attached directly to the light reflective layer and/or the patterned phase difference layer that are essential constituent elements of the optical display medium. Alternatively, the attachment member may be bonded through an optional member other than the constituent elements. Bonding to the attachment member may be adhesion by an adhesive, adhesion through welder processing, or mechanical bonding such as screwing or ligation.

[Specific examples of optical display medium]

A more specific example of the optical display medium of the present invention will be described with reference to FIGs. 11 and 12.

FIG. 11 is a top view schematically illustrating a specific example of the optical display medium of the present invention. FIG. 12 is a vertical cross-sectional view of the optical display medium shown in FIG. 11.

In FIGs. 11 and 12, an optical display medium 50 includes an attachment member 590 and various constituent elements for developing the function of the decorative medium or the identification medium, the constituent elements disposed inside the attachment member 590. FIGs. 11 and 12 illustrate the optical display medium 50 in a state in which the display surface thereof is disposed upward and horizontally. The attachment member 590 includes a tray 591 and a ring 592 disposed on an edge of the tray 591. The ring 592 functions as a member for connecting the optical display medium to an article or a string member that links the optical display medium with the article upon attaching the optical display medium to the article.

In the tray 591, a substrate 511 and a light absorption layer 521 are layered in this order from the bottom thereof. In this example, a silver light reflective layer 501(S) and light reflective layers 501(P) that are cut piece are disposed as the light reflective layers above the light absorption layer 521 in a manner of partially overlapping with each other. In this example, they are all a reflective circular polarizer. The light reflective layer 501(P) may be a silver layer, or a layer that expresses a color such as red, green, or blue.

Four phase difference layers 502 are disposed above the light reflective layers 501(S) and 502(P). In this example, the phase difference layers 502 are phase difference layers each occupying a part of a region on a display surface of the optical display medium 50, having a star shape, and being able to function as the region H.
The phase difference layers 502 are disposed as a member that is positioned on and bonded to a transparent substrate 512. Slow axes of the four phase difference layers 502 are positioned such that the directions of the slow axes are different from one another. The four phase difference layers 502 are formed such that values of ReH(500) thereof are different from one another.

A diffusion film 531 including a diffusion layer is disposed above the phase difference layers 502. In this example, the diffusion film 531 is disposed so as to cover the entire region of the display surface of the optical display medium 50.

In this example, the light reflective layer 501(S), the light reflective layer 501(P), the transparent substrate 512, the phase difference layers 502, and the diffusion film 531 are embedded in a transparent resin. Thus, transparent resin portions 541, 542, and 543 are formed.

The optical display medium 50 functions by the same principle as the optical display medium 100 shown in FIGs. 1 to 6. Specifically, in addition to observation of the display surface with the naked eye in an environment where usual unpolarized light is incident, observation of the display surface through a linear polarizer for observation under incidence of unpolarized light, observation of the display surface under incidence of linearly polarized light, or both the observations may be performed. In the observation through a linear polarizer for observation under incidence of unpolarized light and the observation under incidence of linearly polarized light, the azimuth angle of the optical display medium may be rotated by 360° around the vertical direction as an axis, and observation in the vertical direction may be performed.

In observation with the naked eye, colors caused by reflection by the light reflective layers 501(S) and 501(P) are visually recognized in the display surface. The phase difference layers 502 are visually recognized as a transparent member. Since the phase difference layers 502 are embedded in the transparent resin, the outlines of the phase difference layers 502 are hardly visually recognized. A difference in brightness between regions occupied by the phase difference layers 502 and other regions is not visually recognized. The difference does not vary depending on the rotation.

On the other hand, in the observation through a linear polarizer for observation under incidence of unpolarized light and the observation under incidence of linearly polarized light, for example, a star shape of each of the phase difference layers 502 is visually recognized. Colors of the phase difference layers 502 are all observed as a chromatic color and vary depending on the rotation. Changes in color of the phase difference layers 502 are irregularly different from one another. Therefore, a design effect in which the colors of the stars changes by the rotation in various manner is obtained, and such a design effect can also achieve the function of the identification medium.

[Specific examples of optical display medium: Modification Example]

As a schematic example of the optical display medium shown in FIGs. 1 to 2 and 3 to 10, an optical display medium having a rectangular region as each of a region corresponding to the region H and another region is exemplified. As the optical display medium 50 shown in FIGs. 11 and 12, an optical display medium having a star-shaped phase difference layer is exemplified. The shape of the phase difference layer constituting the region H or the other region and the number of the region H in one optical display medium are not limited to these examples. The optical display medium may have any numbers of regions having any shape such as various figures and language characters.

In the optical display medium 50 shown in FIGs. 11 and 12, a non-light-transmissive member such as a bottom of the tray 591 and the light absorption layer 521 is disposed on the back side of the light reflective layer. However, a see-through optical display medium through which the back side of the light reflective layer is visually recognized may be formed by not disposing the non-light-transmissive member. In this case, another patterned phase difference layer may be disposed on the back side of the light reflective layer. In this case, an optical display medium in which a latent image observed by observation from a front side is different from a latent image observed by observation from the back side may be formed.

[Article]

The article of the present invention includes the optical display medium of the present invention.
Examples of the article may include various articles, such as clothes, shoes, caps and hats, accessories, jewels, and commodities. Since the article of the present invention includes the optical display medium, the article may have an identification function. Since the article has such an identification function, whether the optical display medium and the article are authentic objects, i.e., non-falsified objects, can be identified. In addition, the optical display medium can impart a design effect to the article. The optical display medium may be disposed on the article as a decorative article, a part, or an accessory of the article, such as a tag, a charm, a badge, or a sticker.
The article of the present invention may further include a polarizer viewer in addition to the optical display medium of the present invention. Examples of the polarizer viewer may include a polarizer viewer that includes a polarizer for observation, such as the linear polarizer for observation or the circular polarizer for observation as described above and is disposed in the article so as to observe the optical display medium through the polarizer for observation. For example, the polarizer viewer has a tag shape and may be in a form of being attached to the article itself through a string or the like. When the article further includes the polarizer viewer in addition to the optical display medium, a general article user can readily identify the optical display medium.

Examples

Hereinafter, the present invention will be specifically described by illustrating Examples. However, the present invention is not limited to the Examples described below. The present invention may be optionally modified for implementation without departing from the scope of claims of the present invention and its equivalents.
In the following description, "%" and "part" representing quantity are on the basis of weight, unless otherwise specified. The operations described below were performed under the conditions of normal temperature and normal pressure in the atmospheric air unless otherwise specified.
In Example 2 and subsequent examples, actual measurement of an in-plane retardation Re was performed using a phase difference meter ("AxoScan" manufactured by Axometrics, Inc.).

(Example 1: Simulation of development of chromatic color)

An optical display medium having a layer configuration of (phase difference layer) / (light reflective layer) was irradiated with natural light and observed through a linear polarizer for observation. A color observed at that time was examined by simulation.
Conditions for the simulation are as follows.

· Light in a normal direction from a D65 light source is made incident on a surface of the optical display medium on a side of the phase difference layer.
· The light reflective layer is a reflective circular polarizer that totally transmits counterclockwise circularly polarized light and totally reflects clockwise circularly polarized light. Transmitted light is not returned to the side of the phase difference layer.
· Light that exits the optical display medium is observed through a linear polarizer that totally transmits one linearly polarized light component and totally absorbs the other linearly polarized light component.
· An angle between the slow axis of the phase difference layer and the absorption axis of the linear polarizer is 45°, and a direction of the angle is counterclockwise (that is, when the linear polarizer for observation and the optical display medium are observed from a visual recognition side, the slow axis of the phase difference layer is inclined at 45° counterclockwise with respect to a direction of the transmission axis of the linear polarizer for observation as a baseline).
· A color is observed in a direction at an angle of 2° with respect to the normal direction, and the color is determined by obtaining CIE1931 XYZ tristimulus values and then calculating an a*b* chromaticity.
· As the phase difference layer, those that are formed from materials (0) to (4) having a value of Re(400)/Re(550)

and a value of Re(550)/Re(700) shown in Table 1 below and have Re(550) shown in Tables 2 and 3 are assumed.

The material (0) is a material with Re(400)/Re(550) = 0.73 and Re(550)/Re(700) = 0.79, that is, values of Re(λ)/λ thereof at 400 nm, 550 nm, and 700 nm are constant. The material (0) is a virtual material that has an ideal property from the viewpoint of suppressing coloration. On the other hand, the materials (1) to (4) are materials assumed as materials having the same value of Re(400)/Re(550) and the same value of Re(550)/Re(700) as those of real materials. In Tables 2 and 3, the phase difference layers formed from the materials (1) to (4) are examples of a phase difference layer that can actually be produced by appropriately adjusting the thickness, the stretching ratio, and the like of each of the real materials.

The results of the simulation are shown in Tables 2 and 3.

[Table 1]

Table 1

| | Materia l (0) | Materia l (1) | Materia l (2) | Materia l (3) | Materia l (4) |
|---|---|---|---|---|---|
| Re400/Re55 0 | 0.73 | 0.80 | 1.03 | 1.18 | 1.44 |
| Re550/Re70 0 | 0.79 | 0.90 | 1.00 | 1.07 | 1.21 |

[Table 2]

Table 2

| Re(550 ) (nm) | Material (0) | Material (1) | Material (2) | Material (3) | Material (4) |
|---|---|---|---|---|---|
| 140 | Bright white*1 | Bright white*1 | Bright white*1 | Bright white*1 | Bright white*1 |
| 200 | Bright white*1 | Bright white*1 | Bright white*1 | Bright white*1 | Grev |
| 270 | Bright white*1 | Bright white*1 | Bright white*1 | Bright white*1 | Bright white*1 |
| 300 | Bright white*1 | Bright pale yellow*2 | Bright pale orange*2 | Bright deep orange*2 | Bright deep orange*3 |
| 350 | Bright white*1 | Dark pale yellow*2 | Bright deep orange*2 | Bright deep red* 3 | Bright deep magenta*3 |
| 400 | Bright white*1 | Dark pale red*2 | Bright deep magenta*3 | Dark deep purple*3 | Bright deep purple*3 |
| 450 | Bright white*1 | Dark pale blue*2 | Bright deep blue*3 | Bright deep blue*3 | Bright deep blue*3 |
| 500 | Bright white*1 | Dark pale blue*2 | Bright deep blue*3 | Bright deep blue*3 | Bright deep blue*3 |
| 550 | Bright white*1 | Bright pale blue*2 | Bright deep blue*3 | Bright deep skyblue*3 | Bright deep skyblue*3 |
| 600 | Bright white*1 | Bright pale blue*2 | Bright pale skvblue*3 | Bright deep green*3 | Bright deep green*3 |
| 650 | Bright white*1 | Bright pale green*2 | Bright pale green*3 | Bright deep yellow green*3 | Bright deep green*3 |

(continued)

| Re(550 ) (nm) | Material (0) | Material (1) | Material (2) | Material (3) | Material (4) |
|---|---|---|---|---|---|
| 700 | Bright white*1 | Bright pale green*2 | Bright deep vellow*3 | Bright deep vellow*3 | Bright pale vellow*3 |
| 750 | Bright white*1 | Bright pale yellow*2 | Bright deep vellow*3 | Bright deep orange*3 | Bright pale vellow*3 |
| 800 | Bright white*1 | Bright deep vellow*3 | Bright deep vellow*3 | Bright pale red* 3 | Bright pale vellow*3 |
| 850 | Bright white*1 | Bright deep red*3 | Bright deep orange*3 | Bright pale magenta*3 | Bright pale red* 3 |
| 900 | Bright white*1 | Bright deep red*3 | Bright deep red* 3 | Bright pale magenta*3 | Bright pale red*3 |
| 950 | Bright white*1 | Dark deep red*2 | Bright deep magenta*3 | Bright pale magenta*3 | Bright pale magenta*3 |
| 1000 | Bright white*1 | Dark deep blue*2 | Bright deep blue*3 | Bright pale blue*3 | Bright white*1 |
| 1050 | Bright white*1 | Bright deep skvblue*3 | Bright deep blue*3 | Bright deep skyblue*3 | Bright white*1 |

[Table 3]

Table 3

| Re(550 ) (nm) | Material (0) | Material (1) | Material (2) | Material (3) | Material (4) |
|---|---|---|---|---|---|
| 1100 | Bright white*1 | Bright deep skvblue*3 | Bright deep skvblue*3 | Bright deep green*3 | Bright white*1 |
| 1150 | Bright white*1 | Bright pale skvblue*3 | Bright deep green*3 | Bright deep green*3 | Bright white*1 |
| 1200 | Bright white*1 | Bright pale skvblue*3 | Bright deep green*3 | Bright deep yellow green*3 | Bright white*1 |
| 1250 | Bright white*1 | Bright pale green*2 | Bright deep yellow*3 | Bright pale yellow*3 | Bright white*1 |
| 1300 | Bright white*1 | Bright pale yellow*2 | Bright deep yellow*3 | Bright pale orange*3 | Bright white*1 |
| 1350 | Bright white*1 | Bright deep orange*3 | Bright pale oranae*3 | Bright white*1 | Bright white*1 |
| 1400 | Bright white*1 | Bright deep orange*3 | Bright pale magenta*3 | Bright white*1 | Bright white*1 |
| 1450 | Bright white*1 | Bright deep red*3 | Bright pale magenta*3 | Bright white*1 | Bright white*1 |
| 1500 | Bright white*1 | Dark deep red*3 | Bright pale magenta*3 | Bright white*1 | Bright white*1 |
| 1550 | Bright white*1 | Dark deep blue*2 | Bright pale purple*3 | Bright white*1 | Bright white*1 |

(continued)

| Re(550 ) (nm) | Material (0) | Material (1) | Material (2) | Material (3) | Material (4) |
|---|---|---|---|---|---|
| 1600 | Bright white*1 | Bright deep skvblue*3 | Bright deep skvblue*3 | Bright white*1 | Bright white*1 |
| 1650 | Bright white*1 | Bright deep skvblue*3 | Bright deep green*3 | Bright white*1 | Bright white*1 |
| 1700 | Bright white*1 | Bright pale skvblue*3 | Bright deep green*3 | Bright white*1 | Bright white*1 |
| 1750 | Bright white*1 | Bright pale skvblue*3 | Bright pale green*3 | Bright white*1 | Bright white*1 |
| 1800 | Bright white*1 | Bright pale green*2 | Bright white*1 | Bright white*1 | Bright white*1 |
| 1850 | Bright white*1 | Bright pale vellow*3 | Bright white*1 | Bright white*1 | Bright white*1 |
| 1900 | Bright white*1 | Bright pale orange*3 | Bright white*1 | Bright white*1 | Bright white*1 |
| 1950 | Bright white*1 | Bright deep orange*3 | Bright white*1 | Bright white*1 | Bright white*1 |
| 2500 | Bright white*1 | Bright deep orange*3 | Bright white*1 | Bright white*1 | Bright white*1 |
| 4500 | Bright white*1 | Bright deep blue*3 | Bright white*1 | Bright white*1 | Bright white*1 |
| *1: No coloration occurred.<br>*2: Coloration occurred although the color is not vivid.<br>*3: Vivid coloration occurred. | | | | | |

Occurrence of the coloration was determined based on the a*b* chromaticity. Cases with $\sqrt{(a^{*2}+b^{*2})} \leq 2$ were evaluated as "No coloration occurred". Cases with $2 < \sqrt{(a^{*2}+b^{*2})} \leq 7$ were evaluated as "Coloration occurred although the color is not vivid". Cases with $7 \leq \sqrt{(a^{*2}+b^{*2})}$ were evaluated as "Vivid coloration occurred".

As seen from the aforementioned results, the material (0) cannot form the phase difference layer that alone constitutes the region H, and the materials (1) to (4) can each form the phase difference layer that alone constituting the region H. In addition, the range where a vivid color is expressed is a range where a relationship between the separation of Re(400)/Re(550) and Re(550)/Re(700) from those of the material (0) and a phase difference of the phase difference layer falls within a certain range.

ΔC is defined by Expression (7) (ΔC=(|(ReH(400)/ReH(550)) - 0.73| + |(ReH(550)/ReH(700)) - 0.791)/2). The range of the relationship between ΔC and ReH(550) wherein a vivid color is expressed was determined.

In the results of the materials (1) to (4), relationships between the maximum and the minimum of Re(550) of the phase difference layer in a group where the color is vividly expressed, and 1/ΔC are as shown in Table 4 below.

[Table 4]

Table 4

| | 1/ΔC | Minimun Re(550) (nm) | Maximum Re (550) (nm) |
|---|---|---|---|
| Material (1) | 11.11111 | 800 | 4500 |
| Material (2) | 3.921569 | 400 | 1750 |
| Material (3) | 2.739726 | 350 | 1300 |

(continued)

| | $1/\Delta C$ | Minimun Re(550) (nm) | Maximum Re (550) (nm) |
|---|---|---|---|
| Material (4) | 1.769912 | 300 | 950 |

For each of the relationship between $1/\Delta C$ and the minimum Re(550), and the relationship between $1/\Delta C$ and the maximum Re(550), a primary regression line was determined by a least-squares method. The relationships are as follows.

$$Re(550) = 382.81/\Delta C + 250$$

$$Re(550) = 53.873/\Delta C + 199.3$$

This shows that when the following formulas (5) and (6) are satisfied, a vivid color can particularly be expressed.

$$ReH(550) \leq 382.81/\Delta C + 250 \quad \ldots \quad \text{Formula (5)}$$

$$ReH(550) \geq 53.873/\Delta C + 199.3 \quad \ldots \quad \text{Formula (6)}$$

[Example 2: Example using material (2)]

(2-1: Light reflective layer)

14.63 parts by weight of a liquid crystal compound (the compound represented by the formula (B3) described above), 3.66 parts by weight of an orientation aid (the compound represented by the formula (A2) described above), 1.09 parts by weight of a chiral agent (trade name "Paliocolor LC756" available from BASF), 0.02 part by weight of a leveling agent (trade name "Surflon S420" available from AGC Seimi Chemical Co., Ltd.), 0.60 part by weight of photopolymerization initiator (trade name "Irgacure OXE02" available from BASF SE), and 80.00 parts by weight of a solvent (methyl ethyl ketone) were mixed to obtain a liquid crystal composition (S).

A surface of a primary substrate (PET film, trade name "A4100" available from Toyobo Co., Ltd.) was subjected to a rubbing treatment. Onto the surface, the liquid crystal composition (S) was applied with a bar coater, to form a layer of the liquid crystal composition. The thickness of the layer of the liquid crystal composition was adjusted such that the thickness of a cholesteric material layer to be finally obtained was about 5 μm. This layer of the liquid crystal composition was heated at 140°C for 2 minutes in an oven, so as to be dried and oriented.

Subsequently, a band broadening treatment was performed. In the band broadening treatment, the dried layer of the liquid crystal composition was irradiated with weak ultraviolet rays in an atmospheric air and then heated. The irradiation with ultraviolet rays was performed using a high-pressure mercury lamp at an illuminance at 365 nm (i ray) of 25 $mW/cm^2$ for 0.3 seconds. The subsequent heating was performed at 90°C for 1 minute.

Susequently, the dried layer of the liquid crystal composition was irradiated with ultraviolet rays for curing in a nitrogen gas atmosphere (oxygen concentration: 400 ppm or less). In the irradiation, a high-pressure mercury lamp was used, and an irradiation condition was adjusted such that the illuminance at 365 nm (i ray) was 280 $mW/cm^2$ and the exposure dose was 2,000 $mJ/cm^2$. As a result, the layer of the liquid crystal composition was cured to form a cholesteric material layer (S). Thus, a primary sheet including the primary substrate and the cholesteric material layer (S) was obtained.

The primary sheet was folded and blown with air, to peel the cholesteric material layer. Thus, peeled pieces were obtained. The peeled pieces were pulverized with a cutter mill and then passed through a sieve having an opening of 51 μm. The particles passed through the sieve were collected to obtain a pigment (S) of the cholesteric material. The particle size distribution of the pigment was measured with a particle size distribution measuring device (trade name "LA-960" manufactured by Horiba, Ltd.) by a leaser diffraction and scattering method. A D50 average particle diameter in the volume distribution of particles of the pigment was determined to be 30 μm.

A coating material was prepared from the pigment (S). Onto an upper surface of a light absorption layer (black PET film) horizontally placed, the coating material was applied and then dried, to form a light reflective layer that was a layer of the pigment (S). Thus, a multiple-layered material (2-1) having a layer configuration of (light reflective layer) /

(light absorption layer) was obtained.

(2-2: Phase difference layer formed from material (2))

Pellets of a cycloolefin resin ("ZEONOR 1215" manufactured by ZEON CORPORATION) were prepared. The pellets were supplied to a uniaxial extruder (manufactured by OCS), extrusion-molded, and cut, to obtain an extruded film having a length of 150 mm, a width of 50 mm, and a thickness of 200 μm. The extruded film was gripped at a position of 50 mm apart from both ends in the lengthwise direction thereof with chucks for stretching of a tensile tester with a constant temperature bath (manufactured by Instron Corporation). A region of the extruded film where the distance between the chucks was 50 mm was stretched in the lengthwise direction. During the stretching, the stretching temperature was 125°C, the stretching speed was 100 mm/min, and the stretching ratio and the chuck distance after the stretching were various values shown in Table 5. By the stretching, various types of phase difference layers shown in Table 5 were obtained. Two of the phase difference layers further obtained were layered in combination shown in Table 6 such that the slow axes were in the same direction, to obtain a phase difference layer having a larger Re(550). All of these phase difference layers had a value of Re(400)/Re(500) of 1.03, and a value of Re(550)/Re(700) of 1.00.

(2-3: Optical display medium)

The multiple-layered material (2-1) obtained in (2-1) was placed horizontally with the surface on the light reflective layer side facing upward, and each of the phase difference layers obtained in (2-2) was placed thereon. As a result, an optical display medium having a layer configuration of (phase difference layer) / (light reflective layer) / (light absorption layer) in order from the top surface was obtained.

The optical display medium was observed under sunlight irradiation via a linear polarizer for observation. The observation direction was a normal direction of the display surface of the optical display medium. The angle formed by the slow axis of the phase difference layer and the absorption axis of the linear polarizer was 45°, and the direction formed by the angle was counterclockwise. The color visually observed was recorded. The results are shown in Tables 5 and 6.

[Table 5]

Table 5

| Re(550) (nm) | Stretching ratio (times) | Distance between chucks after stretching (mm) | Measured value of film thickness (μm) | Color |
|---|---|---|---|---|
| 140 | 1.26 | 63 | 155 | Bright white |
| 270 | 1.4 | 70 | 142 | Bright white |
| 306 | 1.45 | 72.5 | 136 | Bright pale orange |
| 350 | 1.5 | 75 | 132 | Bright pale orange |
| 400 | 1.6 | 80 | 126 | Bright deep magenta |
| 450 | 1.7 | 85 | 116 | Bright deep blue |
| 481 | 1.8 | 90 | 110 | Bright deep blue |
| 525 | 1.9 | 95 | 104 | Bright deep blue |
| 612 | 2 | 100 | 98 | Bright pale skyblue |
| 700 | 2.1 | 105 | 94 | Bright deep yellow |
| 787 | 2.2 | 110 | 89 | Bright deep yellow |

(continued)

| Re(550) (nm) | Stretching ratio (times) | Distance between chucks after stretching (mm) | Measured value of film thickness (μm) | Color |
|---|---|---|---|---|
| 875 | 2.3 | 115 | 87 | Bright deep red |
| 962 | 2.4 | 120 | 83 | Bright deep magenta |
| 1050 | 2.5 | 125 | 78 | Bright deep blue |
| 1225 | 2.6 | 130 | 75 | Bright deep green |
| 1401 | 2.8 | 140 | 70 | Bright pale magenta |
| 1575 | 3 | 150 | 65 | Bright deep skyblue |

[Table 6]

Table 6

| Combination | Re(550) (nm) | Color |
|---|---|---|
| 1575+140 | 1715 | Bright deep green |
| 1400+350 | 1750 | Bright pale green |
| 1575+270 | 1845 | Bright white |
| 1575+350 | 1925 | Bright white |
| 1575+525 | 2100 | Bright white |

(Example 3 : Example using material (3))

(3-1: Phase difference layer formed from material (3)) Various commercially available polyethylene terephthalate films available from various manufacturers with part numbers shown in Table 7 were prepared. In addition, two of these were layered in the combination shown in Table 8 such that the slow axes of these were in the same direction, to obtain a phase difference layer having a larger Re(550). All of these phase difference layers had a value of Re(400)/Re(500) of 1.18 and a value of Re(550)/Re(700) of 1.07.

(3-2: Optical display medium)

Optical display mediums were obtained and evaluated by the same manner as those in (2-3) of Example 2 except that each of the phase difference layers obtained in (3-1) was used instead of the phase difference layer obtained in (2-2). The results are shown in Tables 7 and 8.

[Table 7]

Table 7

| Manufacturer | Product ID | Film thickness (μm) | Re(550) (nm) | Color |
|---|---|---|---|---|
| Oji Tac | LPETC16 | 16 | 270 | Bright white |
| Oji Tac | PETC25 | 25 | 300 | Bright white |
| Nakamoto Packs | TA040 | 25 | 1000 | Bright pale blue |

(continued)

| Manufacturer | Product ID | Film thickness (μm) | Re(550) (nm) | Color |
|---|---|---|---|---|
| Nakamoto Packs | K1657 | 25 | 1100 | Bright pale green |
| Teijin | HPE | 50 | 1350 | Bright white |
| Teijin | G2P2 | 50 | 1950 | Bright white |
| Toray | 50-QTD8 | 50 | 2050 | Bright white |
| Toray | 50-UD83 | 50 | 2300 | Bright white |
| Teijin | KEL86W | 50 | 3000 | Bright white |
| Toray | 50-QZ25 | 50 | 3100 | Bright white |
| Toyobo | A4100 | 100 | 4060 | Bright white |
| Nakamoto Packs | TA017 | 100 | 4900 | Bright white |

[Table 8]

Table 8

| Combination | Re(550) (nm) | Color |
|---|---|---|
| 270+270 | 540 | Bright deep blue |
| 300+300 | 600 | Bright deep green |
| 300×3 layers | 900 | Bright pale magenta |

(Example 4 : Example using material (4))

(4-1: Phase difference layer formed from material (4))

15.7 parts by weight of a liquid crystalline compound (compound represented by the formula (B3) described above), 3.7 parts by weight of an orientation aid (compound represented by the formula (A2)), 0.02 part by weight of a leveling agent (trade name "Surflon S420" available from AGC Seimi Chemical Co., Ltd), 0.60 part by weight of a photopolymerization initiator (trade name "Irgacure OXE02", manufactured by BASF SE), and a solvent (methyl ethyl ketone) were mixed to obtain a liquid crystal composition (N). The proportion of the solvent was appropriately adjusted at around 80.00 parts by weight so as to have a concentration suitable for adjusting the dry film thickness to the film thickness shown in Table 9.

A surface of a primary substrate (PET film, trade name "A4100" available from Toyobo Co., Ltd.) was subjected to a rubbing treatment. The liquid crystal composition (N) was applied onto the surface with a bar coater at various thicknesses to form a layer of the liquid crystal composition. This layer of the liquid crystal composition was heated at 140°C for 2 minutes in an oven, so as to be dried and oriented.

Subsequently, the dried layer of the liquid crystal composition was irradiated with ultraviolet rays for curing in a nitrogen gas atmosphere (oxygen concentration: 400 ppm or lower). The irradiation was performed by adjusting irradiation conditions while using a 365nm (i-line) high-pressure mercury lamp to obtain an exposure dose of 2,000 $mJ/cm^2$. As a result, the layer of the liquid crystal composition was cured to form a nematic material layer (N). Thus, a primary sheet including the primary substrate and the cholesteric material layer (N) was obtained.

The cholesteric material layer (N) of the primary sheet was transferred to glass (thickness: 1 mm, phase difference: 1 nm or less) to obtain a phase difference layer including glass and the cholesteric material layer (N). The film thickness of the cholesteric material layer (N) and Re(550) of the phase difference layer in the phase difference layer were as shown in Table 9. All of these phase difference layers had a value of Re(400)/Re(500) of 1.44 and a value of Re(550)/Re(700) of 1.21.

(4-2: Optical display medium)

Optical display mediums were obtained and evaluated by the same manner as that in (2-3) of Example 2 except that each of the phase difference layers obtained in (4-1) was used instead of the phase difference layer obtained in (2-2). The results are shown in Table 9.

[Table 9]

Table 9

| Film thickness (μm) | Re(550) (nm) | Color |
|---|---|---|
| 0.6 | 140 | Bright white |
| 1.17 | 270 | Bright white |
| 1.3 | 300 | Bright deep orange |
| 1.73 | 400 | Bright deep purple |
| 1.95 | 450 | Bright deep blue |
| 2.17 | 500 | Bright deep blue |
| 2.6 | 600 | Bright deep green |
| 3 | 700 | Bright pale yellow |
| 3.5 | 800 | Bright pale yellow |
| 3.9 | 900 | Bright pale red |
| 4.3 | 1000 | Bright white |
| 5 | 1200 | Bright white |
| 5.5 | 1350 | Bright white |
| 6 | 1500 | Bright white |

From the results of Examples 2 to 4, it is apparent that a chromatic color equivalent to the simulation result in Example 1 can be displayed on an actual optical display medium.

(Reference Example: Identification medium)

A commercially available thermoplastic resin layer (Kurabo Industries Ltd., trade name: Kuran Seal GL) and a glass plate (soda glass with a thickness of 2 mm) were prepared. The multiple-layered material (2-1) obtained in (2-1) was placed horizontally with the surface on the light reflective layer side facing upward, and each of the thermoplastic resin layer, the glass plate, and the phase difference layer obtained in (2-2) was placed thereon, to form a stack of (glass plate) / (thermoplastic resin layer) / (phase difference layer) / (thermoplastic resin layer) / (multiple-layered material (2-1)) from the visible side. After the stack was vacuum-packaged, an autoclave treatment was performed at a pressure of 0.8 MPa a temperature of 100°C. As a result, an identification medium having a layer configuration of (outermost glass layer) / (phase difference layer) / (light reflective layer) / (light absorption layer) in order from the upper surface was obtained.

(Reference Sign List)

50: optical display medium
100: optical display medium
101(R): light reflective layer
101(R)U: upper surface of light reflective layer 101(R)
102: sub-layer

102(N): isotropic layer
102(Xy): layer that functions as a □/4 wavelength plate
102U: upper surface of sub-layer 102
103(Xy): sub-layer
103U: upper surface of sub-layer 103(Xy)
110: patterned phase difference layer
191(X): linear polarizer for observation
191(Y): linear polarizer for observation
200: optical display medium
201(Y): light reflective layer
201(Y)U: upper surface of light reflective layer 201(Y)
202: sub-layer
202(N): isotropic layer
202(Xy): layer that functions as a □/2 wavelength plate
202U: upper surface of sub-layer 202
210: patterned phase difference layer
501(P): cut piece light reflective layer
501(S): silver light reflective layer
502: phase difference layer
511: substrate
512: transparent substrate
521: light absorption layer
531: diffusion film
541: transparent resin portions
542: transparent resin portions
543: transparent resin portions
590: attachment member
591: tray
592: ring
A102(Xy): arrow showing slow axis
A103(Xy): arrow showing slow axis
A111(N): light
A112(N): light
A113(R): light
A114(Y): light
A115(n): light
A115(Y): light
A119(L): light
A121(N): light
A122(N): light
A123(N): light
A124(R): light
A125(Y): light
A126(P): light
A127(X) (Ch): light
A127(Y) (Ch): light
A129(L) : light
A131(N): light
A132(N) : light
A133(N): light
A134(R) : light
A135(R): light
A136(P): light
A137(X) (Ch): light
A137(Y) (Ch): light
A139(L): light
A141(N): light
A142(N) : light

A143(R): light
A144(R) : light
A145(X) : light
A145(Y): light
A149(L): light
A191(X): arrow showing transmission axis
A211(X) : light
A211(Y): light
A212(L) : light
A212(R): light
A213(n): light
A213(R): light
A214(n) : light
A214(Y): light
A219(L): light
A219(n): light
A221(X): light
A221(Y): light
A222(P): light
A222'(P): light
A223(P): light
A223' (P): light
A224(R) (Ch): light
A224' (R) (Ch): light
A225(Y) (Ch): light
A225'(Y)(Ch): light
A226(P)(Ch): light
A226'(P)(Ch): light
A229(L)(Ch): light
A229'(L)(Ch): light
A231(X): light
A231(Y): light
A232(P): light
A232'(P): light
A233(P): light
A233'(P): light
A234(R)(Ch): light
A234'(R)(Ch): light
A235(R)(Ch): light
A235'(R)(Ch): light
A236(P)(Ch): light
A236'(P)(Ch): light
A239(L)(Ch): light
A239'(L)(Ch): light
A241(X): light
A241(Y): light
A242(X): light
A242(Y): light
A243(R): light
A244(R): light
A249(L): light
A311(N): light
A312(N): light
A313(X): light
A314(Y): light
A315(n): light
A315(Y): light
A319(Y): light

A321(N): light
A322(N): light
A323(N): light
A324(X): light
A325(Y): light
A326(P): light
A327(X)(Ch): light
A327(Y)(Ch): light
A329(Y): light
A331(N): light
A332(N): light
A333(N): light
A334(X): light
A335(X): light
A336(P): light
A337(X)(Ch): light
A337(Y)(Ch): light
A339(Y): light
A341(N): light
A342(N): light
A343(X): light
A344(X): light
A345(n): light
A345(X): light
A349(Y): light
A411(X): light
A411(Y): light
A412(X): light
A412(Y): light
A413(n): light
A413(X): light
A414(n): light
A414(Y): light
A419(n): light
A419(Y): light
A421(X): light
A421(Y): light
A422(P): light
A422'(P): light
A423(P): light
A423'(P): light
A424(X)(Ch): light
A424'(X)(Ch): light
A425(Y)(Ch): light
A425'(Y)(Ch): light
A426(P)(Ch): light
A426'(P)(Ch): light
A429(Y)(Ch): light
A429'(Y)(Ch): light
A431(X): light
A431(Y): light
A432(P): light
A432'(P): light
A433(P): light
A433'(P): light
A434(X)(Ch): light
A434'(X)(Ch): light
A435(X)(Ch): light

A435'(X)(Ch): light
A436(P)(Ch): light
A436'(P)(Ch): light
A439(Y)(Ch): light
A439'(Y)(Ch): light
A441(X): light
A441(Y): light
A442(X) : light
A442(Y): light
A443(n): light
A443(X): light
A444(n): light
A444(X): light
A449(n): light
A449(Y): light
R1: region
R2: region
R3: region
R4: region
S1: region
S2: region
S3: region
S4: region

## Claims

1. An optical display medium comprising a light reflective layer and a patterned phase difference layer, wherein:

   the light reflective layer is a layer that reflects incident light as circularly polarized light or linearly polarized light;
   the patterned phase difference layer is a layer containing a region having a phase difference;
   in one or more regions H among the regions having a phase difference, an in-plane retardation ReH(400) at a wavelength of 400 nm, an in-plane retardation ReH(550) at a wavelength of 550 nm, and an in-plane retardation ReH(700) at a wavelength of 700 nm (unit: nm) satisfy the following formula (1), and satisfy either one of the following formulas (2) and (3)

   $$ReH(550) > 275 \quad \text{Formula (1)}$$

   $$ReH(400)/400 > ReH(550)/550 > ReH(700)/700 \quad \text{Formula (2)}$$

   $$ReH(400)/400 < ReH(550)/550 < ReH(700)/700 \quad \text{Formula (3);}$$

   and
   the region H has a property of converting light passing through the region H into light having a variety in polarization state for wavelengths.

2. The optical display medium according to claim 1, wherein the patterned phase difference layer is positioned closer to a visual recognition side than the light reflective layer.

3. The optical display medium according to claim 1 or 2, wherein the light reflective layer is a reflective circular polarizer or a reflective linear polarizer.

4. The optical display medium according to claim 3,

wherein the light reflective layer is the reflective circular polarizer.

5. The optical display medium according to any one of claims 1 to 4, wherein the ReH(400), the ReH(550), and the ReH(700) satisfy the following formulas (4) to (6):

$$ReH(550) \geq 300 \quad \text{Formula (4)}$$

$$ReH(550) \leq 382.81/\Delta C + 250 \quad \text{Formula (5)}$$

$$ReH(550) \geq 53.873/\Delta C + 199.3 \quad \text{Formula (6)}$$

in the formulas, ΔC is a value represented by the following formula (7):

$$\Delta C = (|(ReH(400)/ReH(550)) - 0.73| + |(ReH(550)/ReH(700)) - 0.79|)/2 \quad \text{Formula (7).}$$

6. The optical display medium according to any one of claims 1 to 5, wherein the patterned phase difference layer is a layered body including a plurality of sub-layers, each of the sub-layers having a phase difference in at least a portion of the region in a plane.

7. The optical display medium according to claim 6, wherein one or more of the plurality of sub-layers are a stretched film and another sub-layer or more are a film having a patterned layer of a liquid crystal material.

8. The optical display medium according to claim 6 or 7, wherein slow axes of the plurality of sub-layers are parallel to one another.

9. The optical display medium according to any one of claims 1 to 8, wherein the light reflective layer includes a sheet formed from a material having cholesteric regularity.

10. The optical display medium according to any one of claims 1 to 9, wherein the light reflective layer includes a cut piece of a material having cholesteric regularity.

11. The optical display medium according to any one of claims 1 to 10, wherein, in one or more regions of the light reflective layer, a reflectance by the light reflective layer of unpolarized light incident on the region is 35 to 50% at all wavelengths in a wavelength region of 420 nm to 650 nm.

12. The optical display medium according to any one of claims 1 to 11, further comprising a light absorption layer on a side of the light reflective layer opposite to a visual recognition side.

13. The optical display medium according to any one of claims 1 to 12, further comprising a transparent resin portion in which all or part of members other than the transparent resin portion is embedded.

14. The optical display medium according to any one of claims 1 to 13, further comprising an attachment member for attaching the optical display medium to an article.

15. An article comprising the optical display medium according to any one of claims 1 to 14.

16. The article according to claim 15, further comprising a polarizer viewer.

17. A method for using the optical display medium according to any one of claims 1 to 14, comprising making incident light be incident on a display surface of the optical display medium and be reflected by the light reflective layer to be reflected light; and observing the reflected light, wherein
when unpolarized light is made incident as the incident light and the reflected light is observed, a linearly polarized

light component or a circularly polarized light component of the reflected light is selectively observed.

**18.** The method according to claim 17, wherein the selective observation is performed by visually observing the reflected light through a linear polarizer bein apart from the optical display medium.

**19.** The method according to claim 18, wherein the linear polarizer is polarized sunglasses.

**20.** A method for using the optical display medium according to any one of claims 1 to 14, comprising making incident light be incident on a display surface of the optical display medium and be reflected by the light reflective layer to be reflected light; and observing the reflected light, wherein
linearly polarized light, circularly polarized light or elliptically polarized light is made incident as the incident light.

# FIG.1

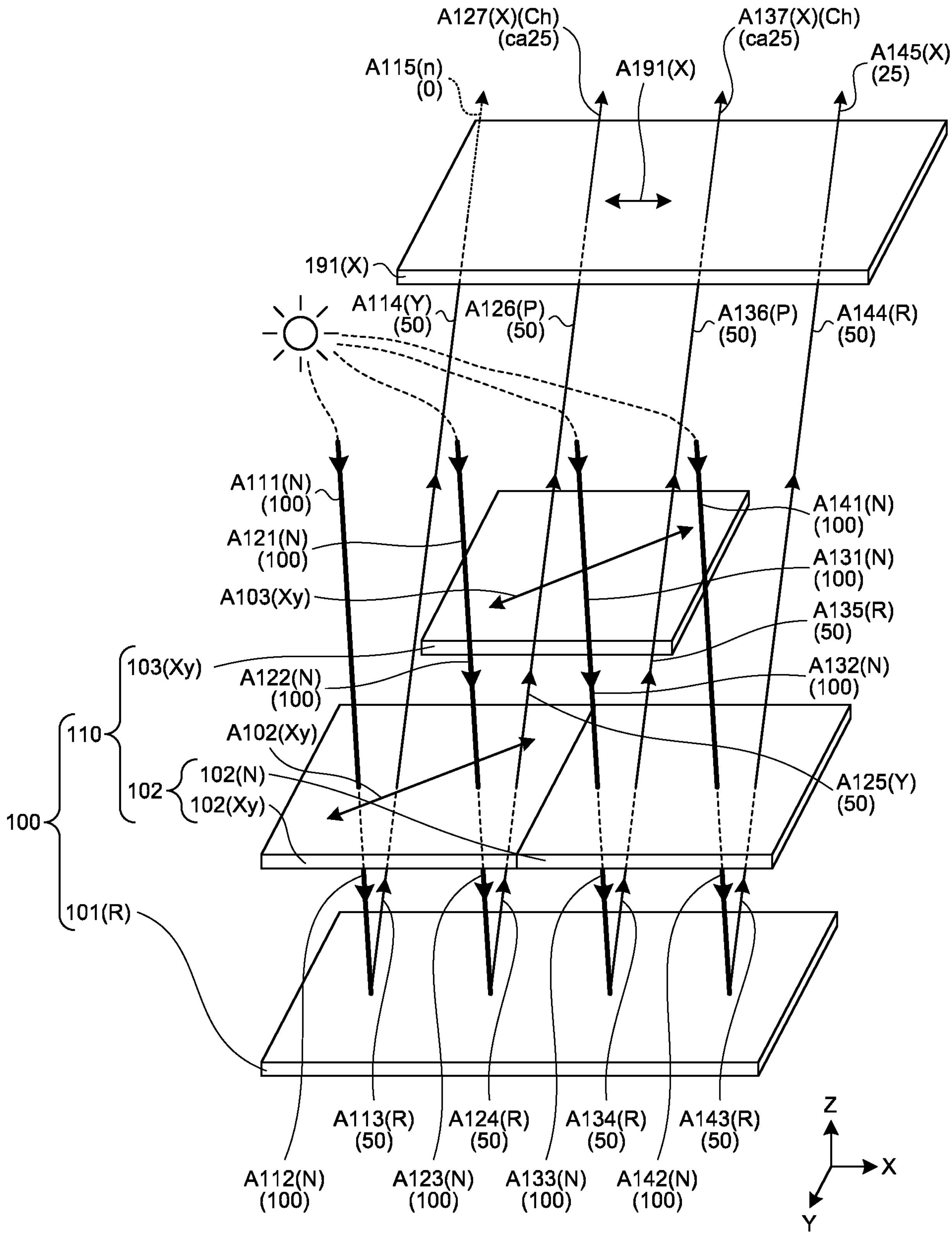
A127(X)(Ch)
(ca25)
A137(X)(Ch)
(ca25)
A145(X)
(25)
A115(n)
(0)
A191(X)
191(X)
A114(Y)
(50)
A126(P)
(50)
A136(P)
(50)
A144(R)
(50)
A111(N)
(100)
A141(N)
(100)
A121(N)
(100)
A131(N)
(100)
A103(Xy)
A135(R)
(50)
103(Xy)
A122(N)
(100)
A132(N)
(100)
110
A102(Xy)
102
102(N)
102(Xy)
A125(Y)
(50)
100
101(R)
A113(R)
(50)
A124(R)
(50)
A134(R)
(50)
A143(R)
(50)
A112(N)
(100)
A123(N)
(100)
A133(N)
(100)
A142(N)
(100)
Z
X
Y

# FIG.2

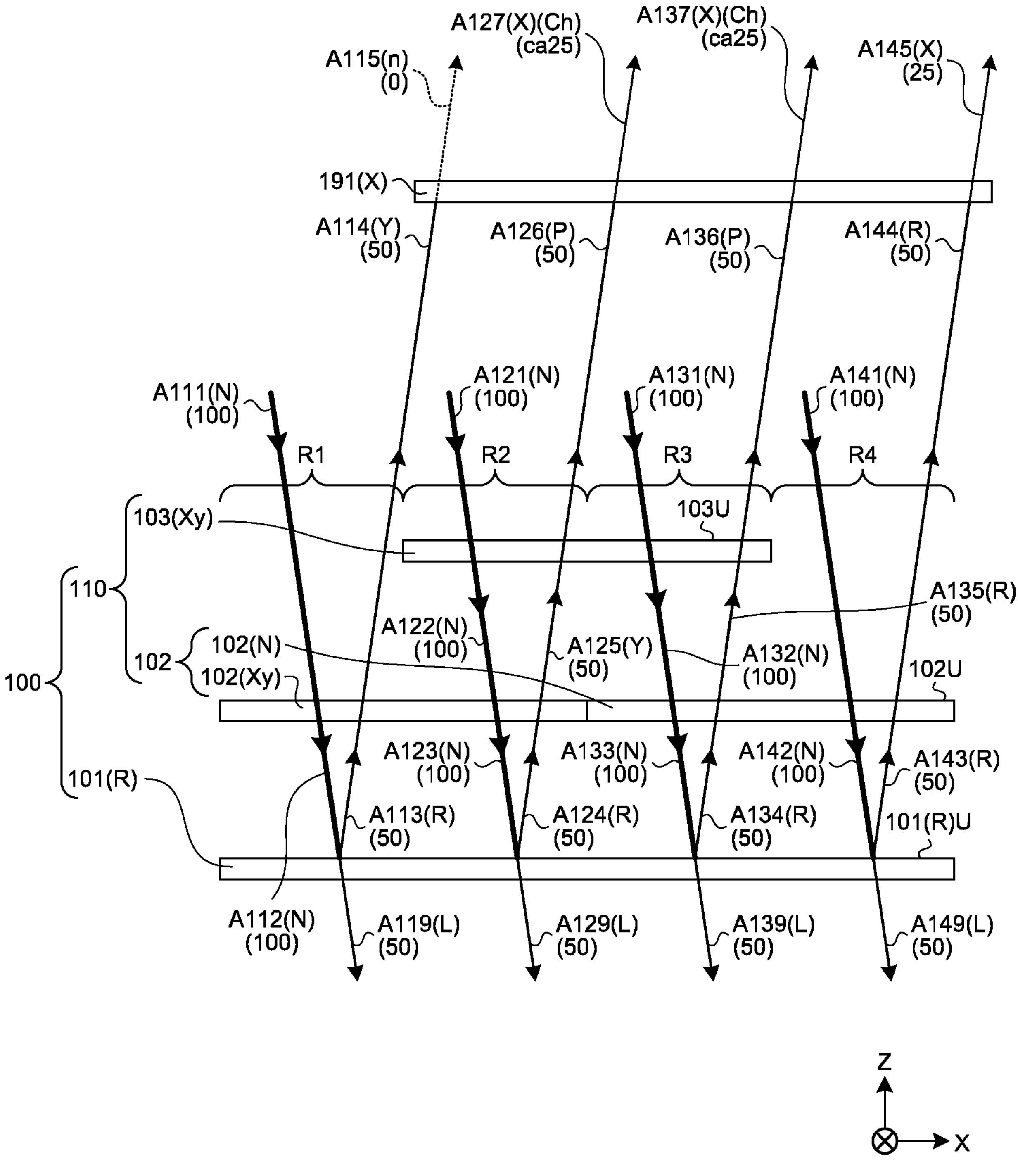

A115(n) (0)
A127(X)(Ch) (ca25)
A137(X)(Ch) (ca25)
A145(X) (25)
191(X)
A114(Y) (50)
A126(P) (50)
A136(P) (50)
A144(R) (50)
A111(N) (100)
A121(N) (100)
A131(N) (100)
A141(N) (100)
R1
R2
R3
R4
103(Xy)
103U
110
A135(R) (50)
A122(N) (100)
A125(Y) (50)
A132(N) (100)
100
102
102(N)
102(Xy)
102U
A123(N) (100)
A133(N) (100)
A142(N) (100)
A143(R) (50)
101(R)
A113(R) (50)
A124(R) (50)
A134(R) (50)
101(R)U
A112(N) (100)
A119(L) (50)
A129(L) (50)
A139(L) (50)
A149(L) (50)
Z
X

FIG.3

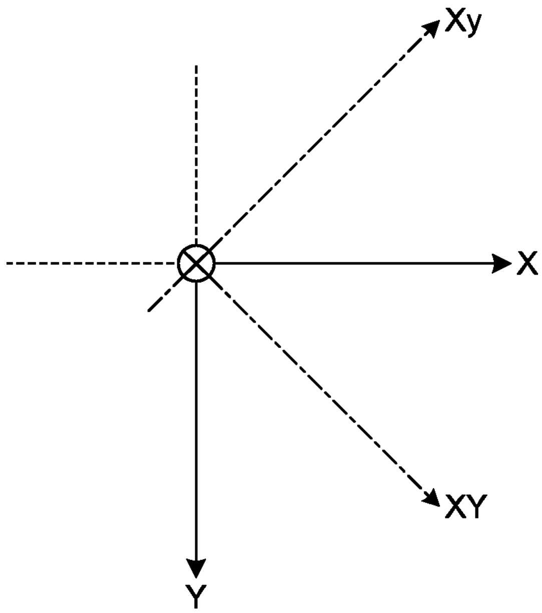

FIG.4

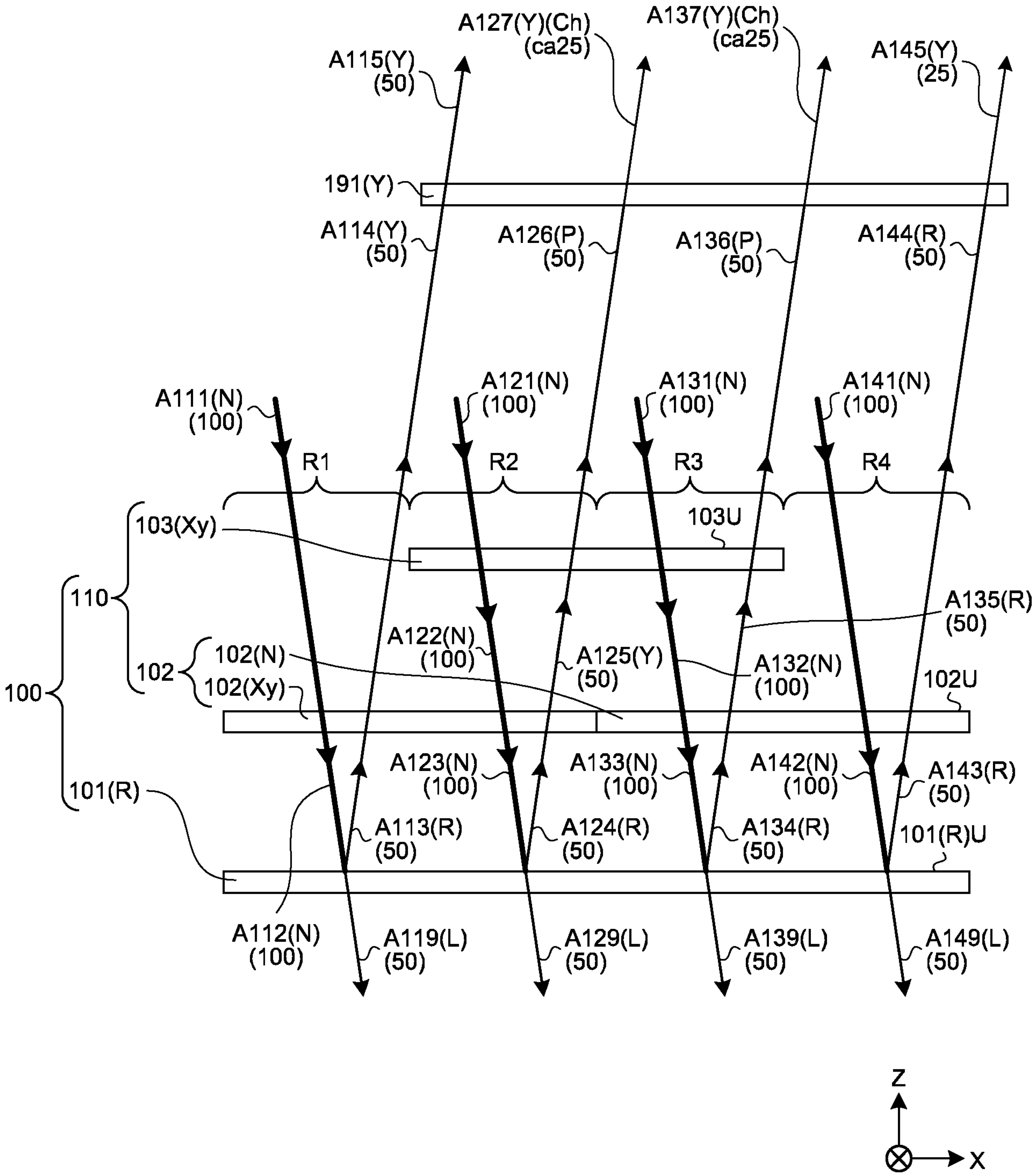
A115(Y)
(50)
A127(Y)(Ch)
(ca25)
A137(Y)(Ch)
(ca25)
A145(Y)
(25)
191(Y)
A114(Y)
(50)
A126(P)
(50)
A136(P)
(50)
A144(R)
(50)
A111(N)
(100)
A121(N)
(100)
A131(N)
(100)
A141(N)
(100)
R1
R2
R3
R4
103(Xy)
103U
110
A135(R)
(50)
A122(N)
(100)
A125(Y)
(50)
A132(N)
(100)
102
102(N)
102(Xy)
102U
100
A123(N)
(100)
A133(N)
(100)
A142(N)
(100)
A143(R)
(50)
101(R)
A113(R)
(50)
A124(R)
(50)
A134(R)
(50)
101(R)U
A112(N)
(100)
A119(L)
(50)
A129(L)
(50)
A139(L)
(50)
A149(L)
(50)
Z
X

FIG.5

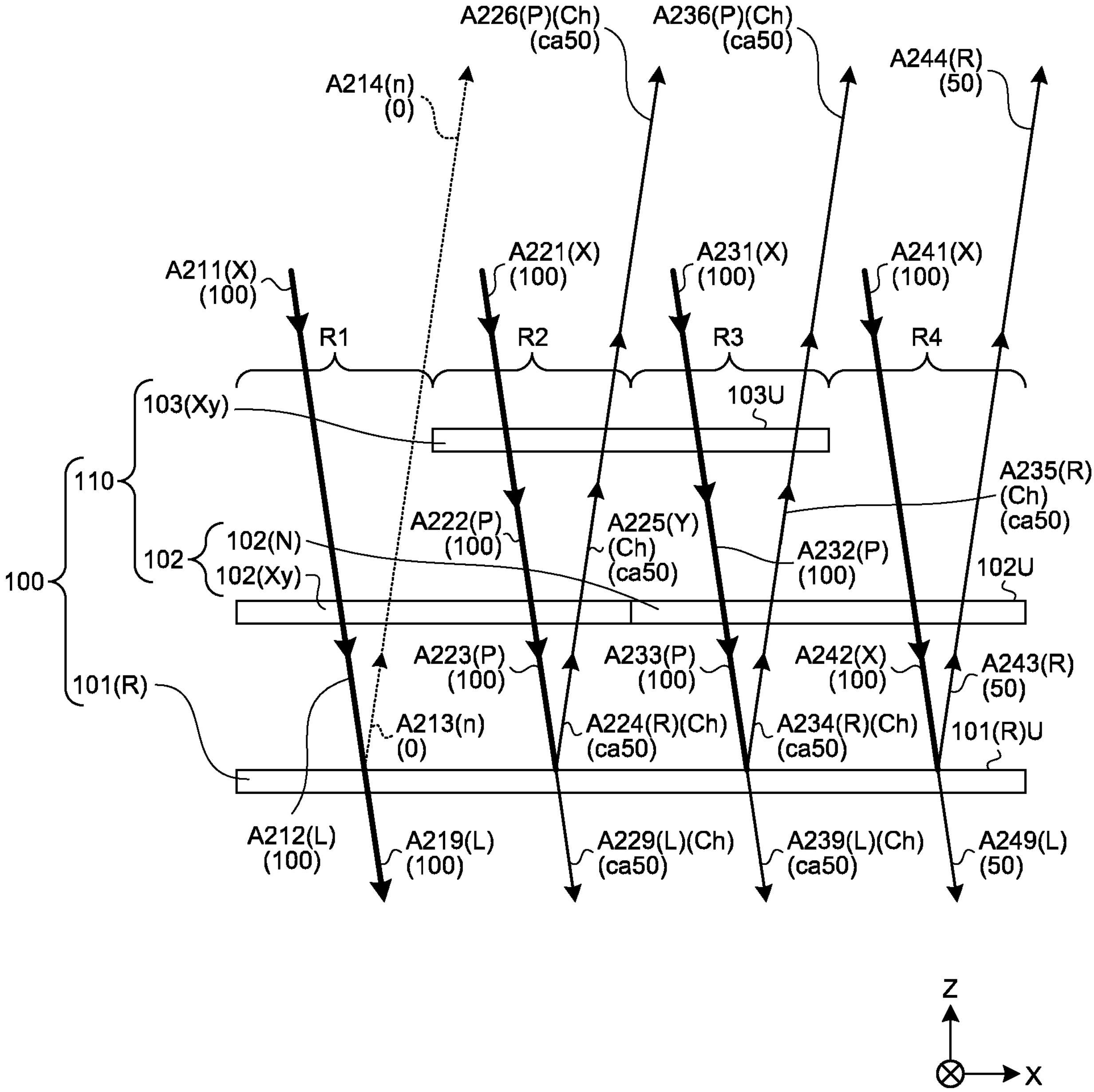
A226(P)(Ch)
(ca50)
A236(P)(Ch)
(ca50)
A214(n)
(0)
A244(R)
(50)
A211(X)
(100)
A221(X)
(100)
A231(X)
(100)
A241(X)
(100)
R1
R2
R3
R4
103(Xy)
103U
110
A235(R)
(Ch)
(ca50)
A222(P)
(100)
A225(Y)
(Ch)
(ca50)
102(N)
A232(P)
(100)
102
102(Xy)
102U
100
A223(P)
(100)
A233(P)
(100)
A242(X)
(100)
A243(R)
(50)
101(R)
A213(n)
(0)
A224(R)(Ch)
(ca50)
A234(R)(Ch)
(ca50)
101(R)U
A212(L)
(100)
A219(L)
(100)
A229(L)(Ch)
(ca50)
A239(L)(Ch)
(ca50)
A249(L)
(50)
Z
X

FIG.6

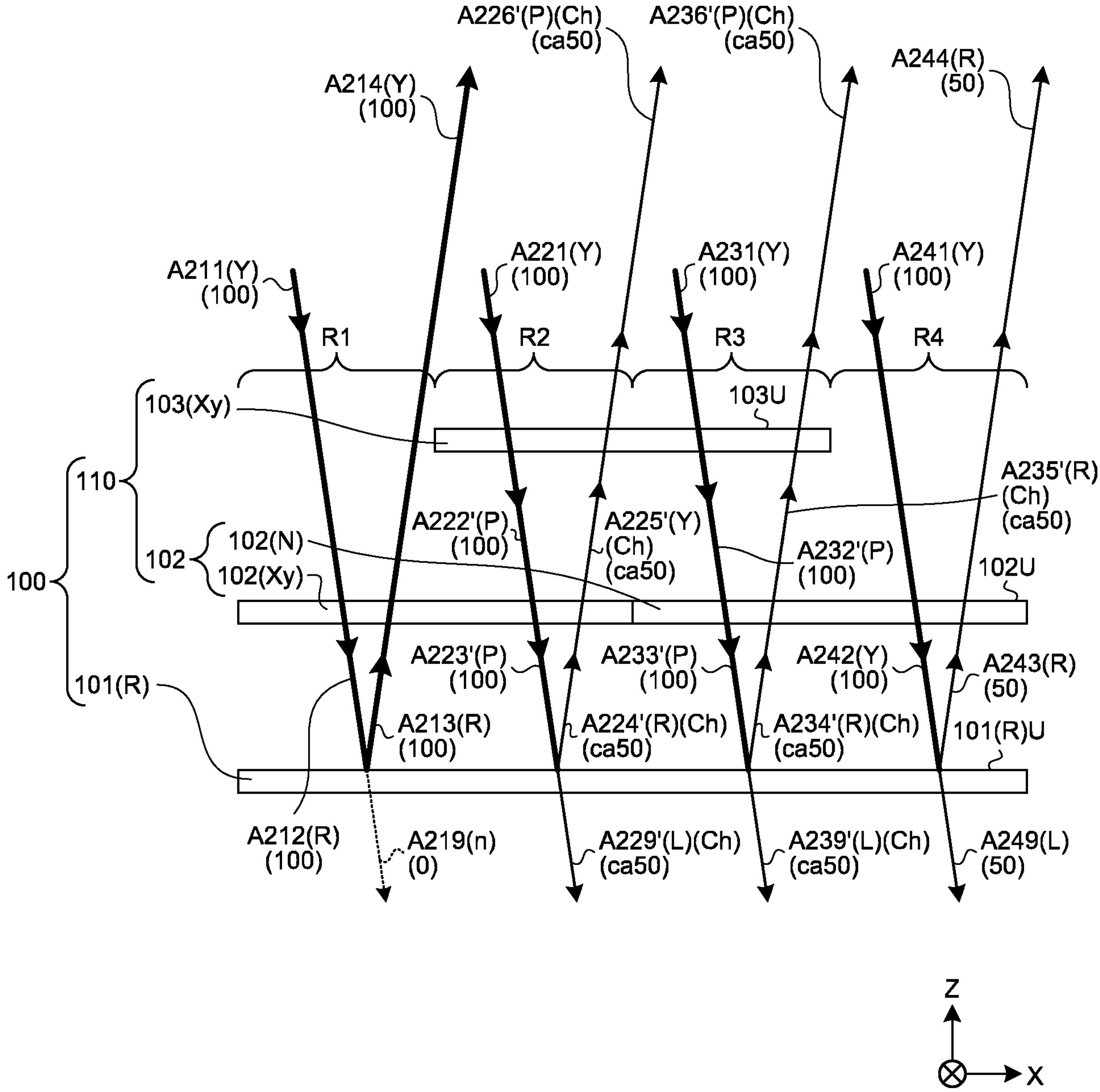

A226'(P)(Ch)
(ca50)
A236'(P)(Ch)
(ca50)
A244(R)
(50)
A214(Y)
(100)
A211(Y)
(100)
A221(Y)
(100)
A231(Y)
(100)
A241(Y)
(100)
R1
R2
R3
R4
103(Xy)
103U
110
A235'(R)
(Ch)
(ca50)
A222'(P)
(100)
A225'(Y)
(Ch)
(ca50)
A232'(P)
(100)
102
102(N)
102(Xy)
100
102U
A223'(P)
(100)
A233'(P)
(100)
A242(Y)
(100)
A243(R)
(50)
101(R)
A213(R)
(100)
A224'(R)(Ch)
(ca50)
A234'(R)(Ch)
(ca50)
101(R)U
A212(R)
(100)
A219(n)
(0)
A229'(L)(Ch)
(ca50)
A239'(L)(Ch)
(ca50)
A249(L)
(50)
Z
X

FIG.7

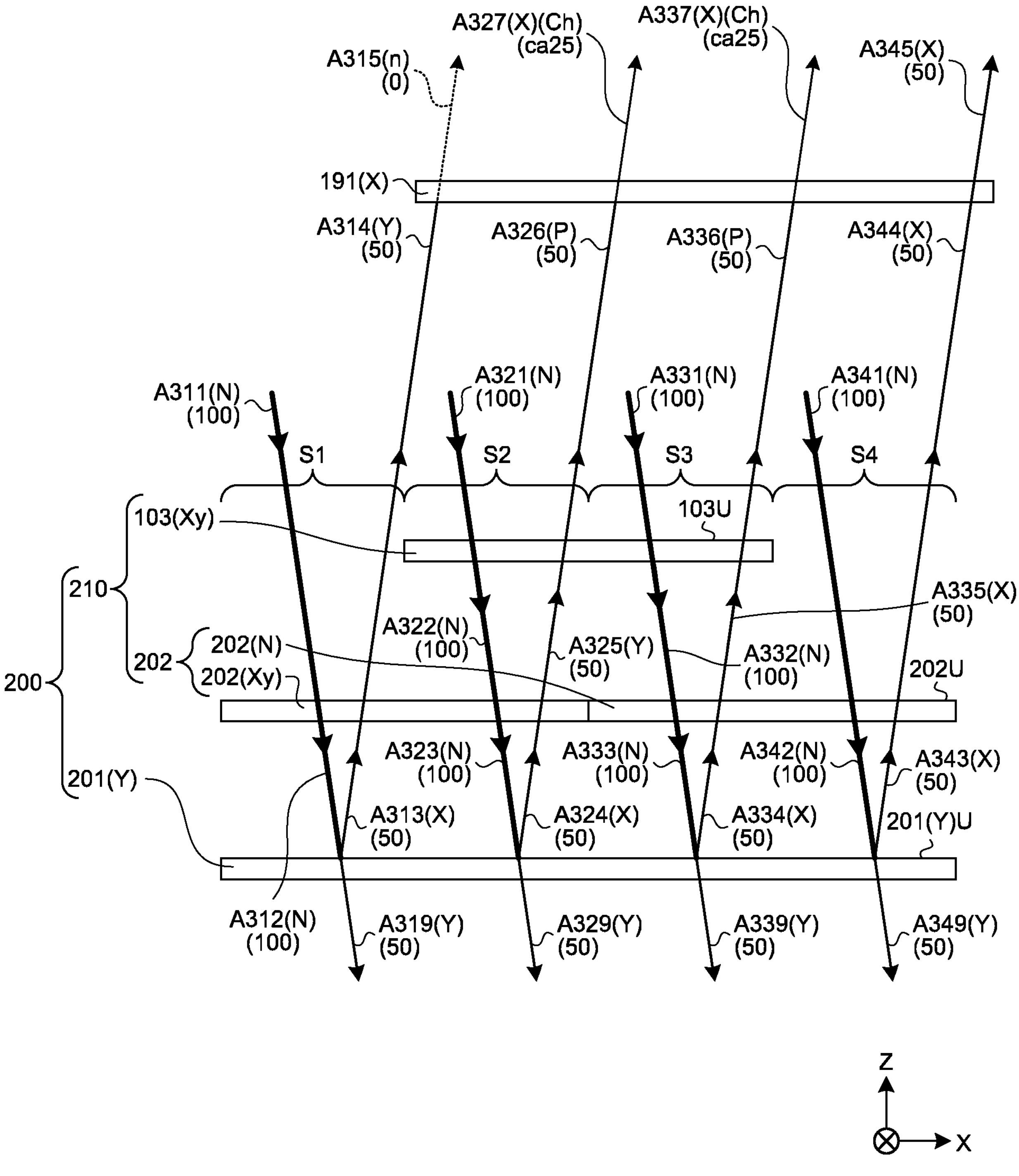
A327(X)(Ch)
(ca25)
A337(X)(Ch)
(ca25)
A315(n)
(0)
A345(X)
(50)
191(X)
A314(Y)
(50)
A326(P)
(50)
A336(P)
(50)
A344(X)
(50)
A311(N)
(100)
A321(N)
(100)
A331(N)
(100)
A341(N)
(100)
S1
S2
S3
S4
103(Xy)
103U
210
A335(X)
(50)
A322(N)
(100)
A325(Y)
(50)
A332(N)
(100)
202(N)
202
202(Xy)
202U
200
A323(N)
(100)
A333(N)
(100)
A342(N)
(100)
A343(X)
(50)
201(Y)
A313(X)
(50)
A324(X)
(50)
A334(X)
(50)
201(Y)U
A312(N)
(100)
A319(Y)
(50)
A329(Y)
(50)
A339(Y)
(50)
A349(Y)
(50)
Z
X

FIG.8

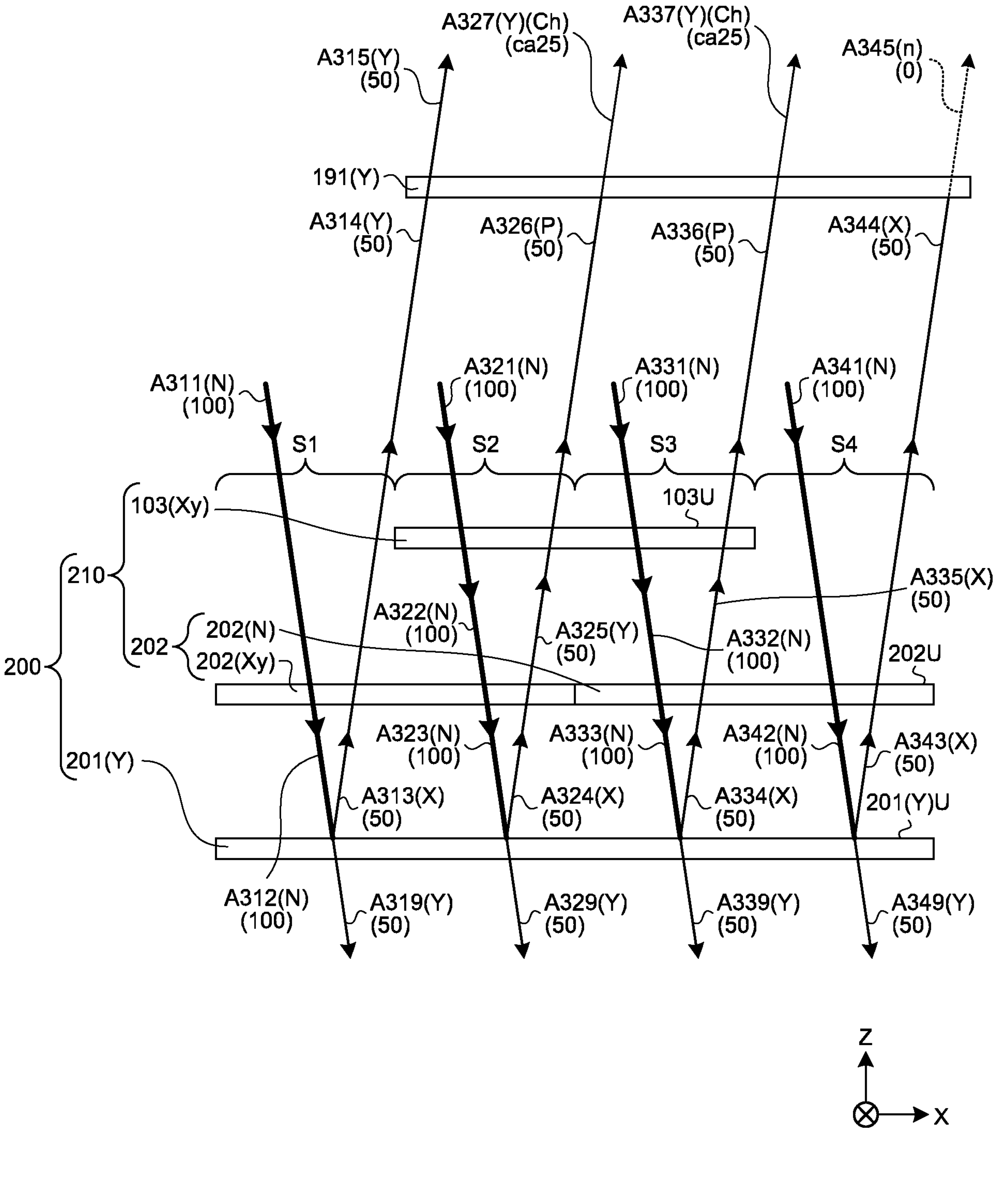
A327(Y)(Ch)
(ca25)
A337(Y)(Ch)
(ca25)
A315(Y)
(50)
A345(n)
(0)
191(Y)
A314(Y)
(50)
A326(P)
(50)
A336(P)
(50)
A344(X)
(50)
A311(N)
(100)
A321(N)
(100)
A331(N)
(100)
A341(N)
(100)
S1
S2
S3
S4
103(Xy)
103U
210
A335(X)
(50)
A322(N)
(100)
A325(Y)
(50)
A332(N)
(100)
202
202(N)
202(Xy)
202U
200
A323(N)
(100)
A333(N)
(100)
A342(N)
(100)
A343(X)
(50)
201(Y)
A313(X)
(50)
A324(X)
(50)
A334(X)
(50)
201(Y)U
A312(N)
(100)
A319(Y)
(50)
A329(Y)
(50)
A339(Y)
(50)
A349(Y)
(50)
Z
X

FIG.9

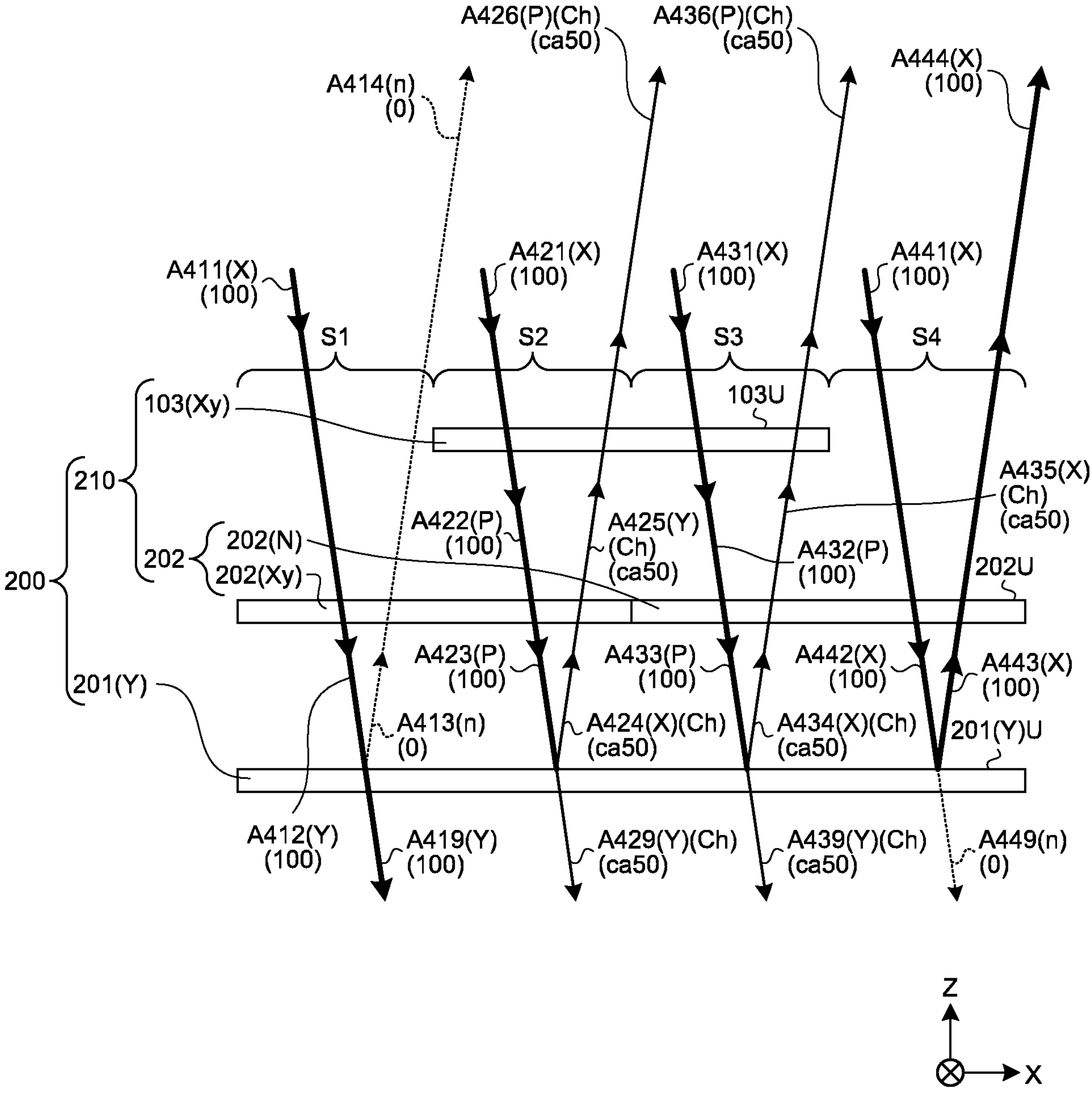
A426(P)(Ch)
(ca50)
A436(P)(Ch)
(ca50)
A414(n)
(0)
A444(X)
(100)
A411(X)
(100)
A421(X)
(100)
A431(X)
(100)
A441(X)
(100)
S1
S2
S3
S4
103(Xy)
103U
210
A435(X)
(Ch)
(ca50)
A422(P)
(100)
A425(Y)
(Ch)
(ca50)
202(N)
202
A432(P)
(100)
202U
200
202(Xy)
A423(P)
(100)
A433(P)
(100)
A442(X)
(100)
A443(X)
(100)
201(Y)
A413(n)
(0)
A424(X)(Ch)
(ca50)
A434(X)(Ch)
(ca50)
201(Y)U
A412(Y)
(100)
A419(Y)
(100)
A429(Y)(Ch)
(ca50)
A439(Y)(Ch)
(ca50)
A449(n)
(0)
Z
X

FIG.10

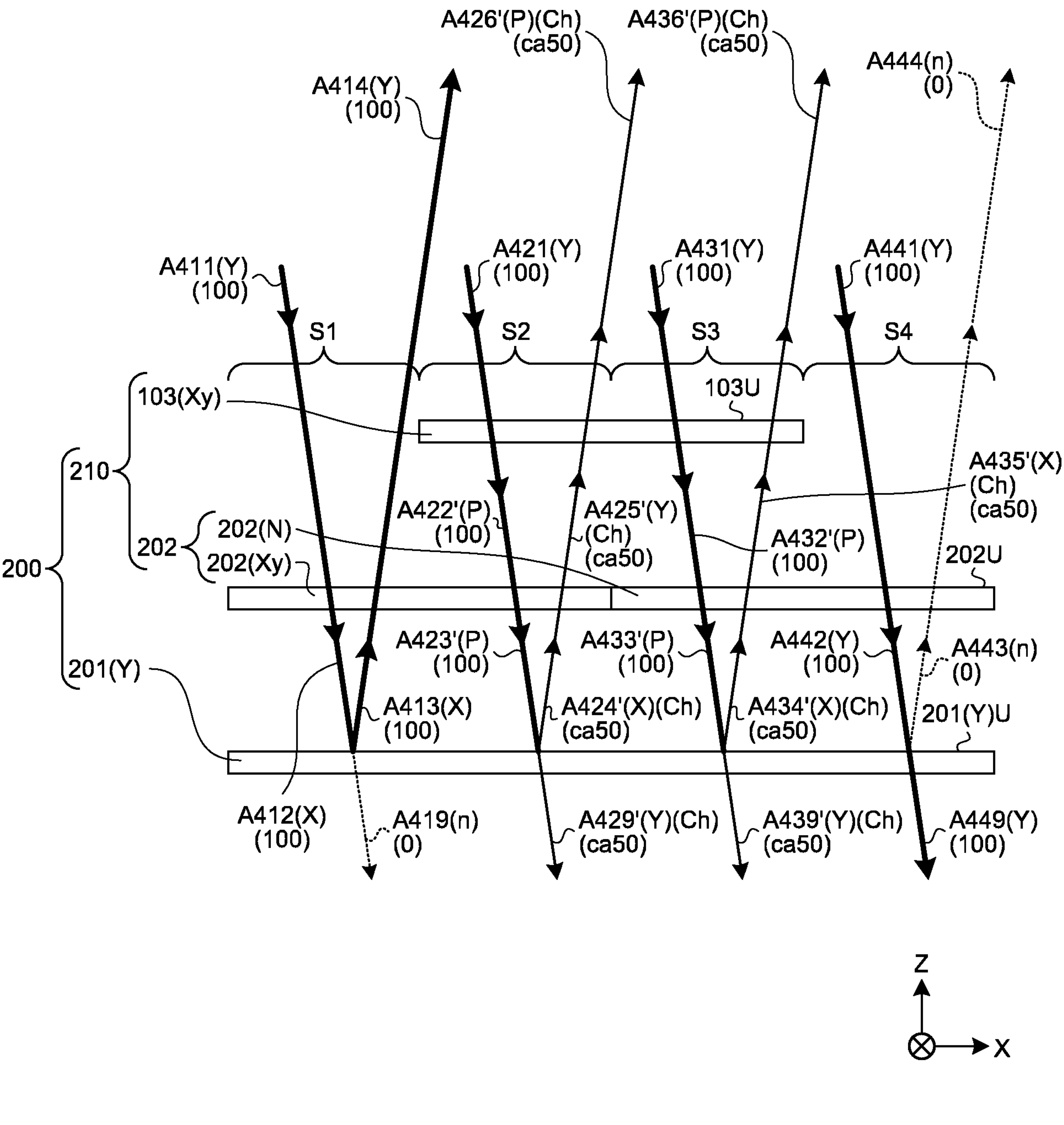
A426'(P)(Ch)
(ca50)
A436'(P)(Ch)
(ca50)
A444(n)
(0)
A414(Y)
(100)
A411(Y)
(100)
A421(Y)
(100)
A431(Y)
(100)
A441(Y)
(100)
S1
S2
S3
S4
103(Xy)
103U
210
200
202
202(N)
202(Xy)
A422'(P)
(100)
A425'(Y)
(Ch)
(ca50)
A432'(P)
(100)
A435'(X)
(Ch)
(ca50)
202U
A423'(P)
(100)
A433'(P)
(100)
A442(Y)
(100)
A443(n)
(0)
201(Y)
A413(X)
(100)
A424'(X)(Ch)
(ca50)
A434'(X)(Ch)
(ca50)
201(Y)U
A412(X)
(100)
A419(n)
(0)
A429'(Y)(Ch)
(ca50)
A439'(Y)(Ch)
(ca50)
A449(Y)
(100)
Z
X

FIG.11

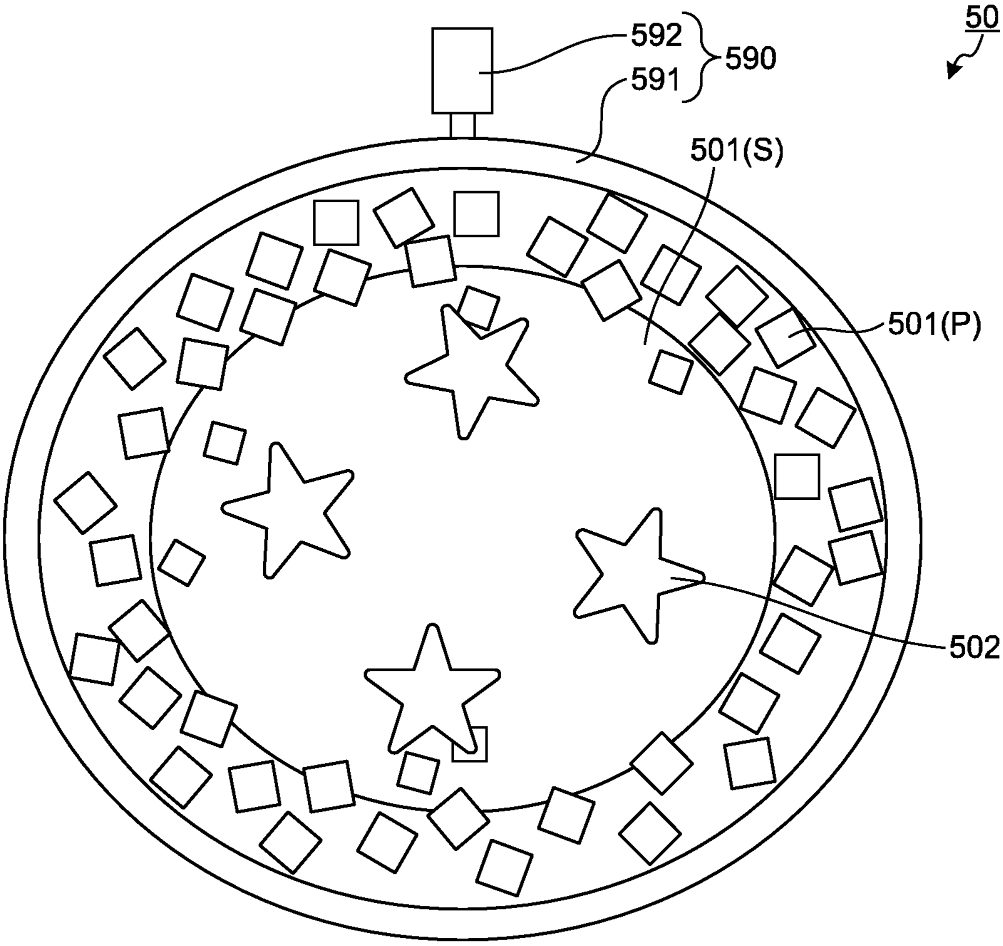
50
592
591
590
501(S)
501(P)
502

FIG.12

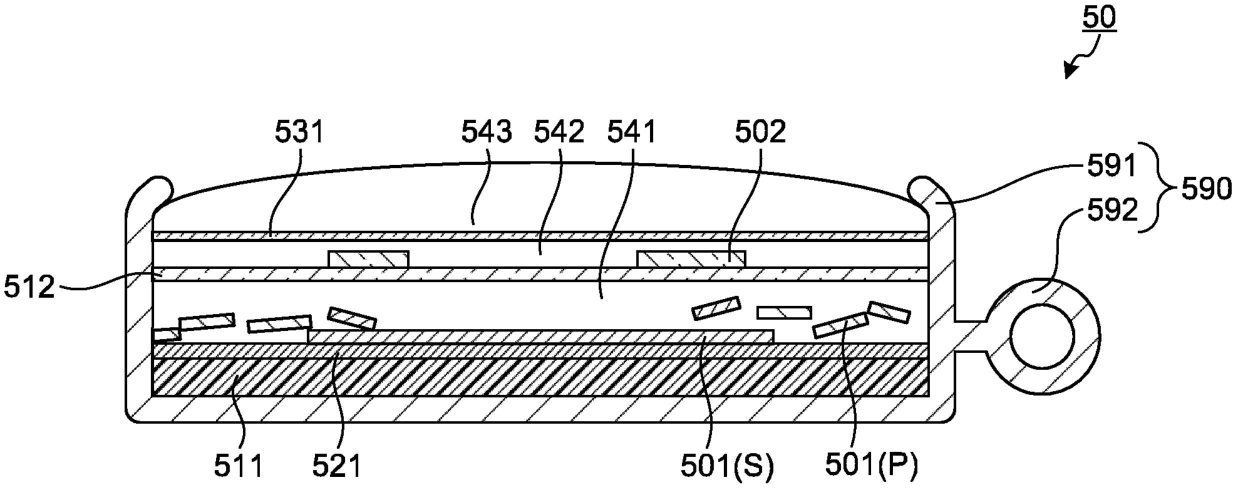
50
531
543
542
541
502
591
590
592
512
511
521
501(S)
501(P)

**INTERNATIONAL SEARCH REPORT**

International application No.
**PCT/JP2022/011606**

**A. CLASSIFICATION OF SUBJECT MATTER**

***G02B 5/30***(2006.01)i; ***B42D 25/36***(2014.01)i
FI: G02B5/30; B42D25/36

According to International Patent Classification (IPC) or to both national classification and IPC

**B. FIELDS SEARCHED**

Minimum documentation searched (classification system followed by classification symbols)

G02B5/30; B42D25/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/261923 A1 (NIPPON ZEON CO., LTD.) 30 December 2020 (2020-12-30) paragraphs [0004]-[0149] | 1-5, 9-12, 14-17, 20 |
| Y | | 1-17, 20 |
| A | | 18-19 |
| Y | JP 2007-279129 A (NHK SPRING CO., LTD.) 25 October 2007 (2007-10-25) paragraph [0012] | 1-17, 20 |
| A | | 18-19 |
| Y | JP 2013-3212 A (NIPPON ZEON CO., LTD.) 07 January 2013 (2013-01-07) paragraphs [0377]-[0383] | 6-8 |
| Y | JP 2009-175208 A (FUJIFILM CORP.) 06 August 2009 (2009-08-06) paragraphs [0021], [0085], [0112] | 6-8 |
| Y | JP 2014-52527 A (TOPPAN PRINTING CO., LTD.) 20 March 2014 (2014-03-20) paragraphs [0033], [0060]-[0068] | 13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/011606**

**C. DOCUMENTS CONSIDERED TO BE RELEVANT**

| Category* | Citation of document, with indication, where appropriate, of the relevant passages | Relevant to claim No. |
|---|---|---|
| A | WO 2011/065242 A1 (NHK SPRING CO., LTD.) 03 June 2011 (2011-06-03) entire text, all drawings | 1-20 |
| A | JP 2014-2298 A (TOPPAN PRINTING CO., LTD.) 09 January 2014 (2014-01-09) entire text, all drawings | 1-20 |
| P, A | WO 2021/153761 A1 (ZEON CORP.) 05 August 2021 (2021-08-05) entire text, all drawings | 1-20 |

Form PCT/ISA/210 (second sheet) (January 2015)

**INTERNATIONAL SEARCH REPORT**
**Information on patent family members**

International application No.
**PCT/JP2022/011606**

| Patent document cited in search report | Publication date (day/month/year) | Patent family member(s) | Publication date (day/month/year) |
|---|---|---|---|
| WO 2020/261923 A1 | 30 December 2020 | CN 114008496 A | |
| JP 2007-279129 A | 25 October 2007 | US 2009/0128772 A1<br>paragraph [0011]<br>WO 2007/116844 A1<br>EP 2006750 A2<br>KR 10-2009-0004933 A<br>CN 101416123 A<br>KR 10-1103224 B1<br>HK 1132048 A | |
| JP 2013-3212 A | 07 January 2013 | KR 10-2012-0138665 A | |
| JP 2009-175208 A | 06 August 2009 | US 2011/0043911 A1<br>paragraphs [0038], [0099], [0140]<br>WO 2009/093718 A2<br>CN 101978296 A<br>TW 200934858 A | |
| JP 2014-52527 A | 20 March 2014 | (Family: none) | |
| WO 2011/065242 A1 | 03 June 2011 | US 2012/0236292 A1<br>entire text, all drawings<br>EP 2506065 A1<br>CN 102667580 A<br>KR 10-2012-0094052 A | |
| JP 2014-2298 A | 09 January 2014 | (Family: none) | |
| WO 2021/153761 A1 | 05 August 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010221650 A
- JP 2010113249 A
- US 2010119738
- WO 2005059597 A
- JP 5915838 B
- WO 2020121791 A
- JP 2019188740 A
- WO 2019116995 A